# EUROPÄISCHE PATENTSCHRIFT

(11) **EP 3 639 631 B1**
(45) Veröffentlichungstag und Bekanntmachung des Hinweises auf die Patenterteilung: **03.07.2024**
(21) Anmeldenummer: 18745520.9
(22) Anmeldetag: 12.07.2018
(51) Int. Cl.: H05H 1/34, H05H 1/28

(54) **ELEKTRODEN FÜR GAS- UND FLÜSSIGKEITSGEKÜHLTE PLASMABRENNER, ANORDNUNGEN MIT DIESEN ELEKTRODEN UND EINEM KÜHLROHR, UND PLASMABRENNER MIT DIESEN ELEKTRODEN**
ELECTRODES FOR GAS- AND LIQUID-COOLED PLASMA TORCHES, SYSTEMS COMPRISING THESE ELECTRODES AND A COOLING TUBE, AND PLASMA TORCH WITH THESE ELECTRODES
ÉLECTRODES POUR TORCHES À PLASMA REFROIDIES PAR GAZ ET LIQUIDE, AGENCEMENTS DESDITES ÉLECTRODES ET D'UN TUBE DE REFROIDISSEMENT, ET TORCHE À PLASMA AVEC CES ÉLECTRODES

(30) Priorität: 12.06.2017 DE 102017112821
(43) Veröffentlichungstag der Anmeldung: 22.04.2020
(73) Patentinhaber: Kjellberg-Stiftung, 03238 Finsterwalde (DE)
(72) Erfinder: KRINK, Volker, 03238 Finsterwalde (DE); LAURISCH, Frank, 03238 Finsterwalde (DE); REINKE, Ralf-Peter, 03238 Finsterwalde (DE)
(74) Vertreter: Manasse, Uwe
(86) Internationale Anmeldenummer: PCT/EP2018/068942
(87) Internationale Veröffentlichungsnummer: WO 2018/229308

(56) Entgegenhaltungen:
- EP-A1- 2 375 875
- EP-A1- 2 418 921
- EP-A2- 1 202 614
- WO-A1-2008/101226
- WO-A1-2018/071010
- GB-A- 1 453 100
- US-A- 3 450 926
- US-A- 3 851 140
- US-A- 4 002 466
- US-A- 4 682 005
- US-A- 4 782 210
- US-A- 4 967 055
- US-A- 5 278 387
- US-A- 5 965 040
- US-A1- 2006 102 598
- US-A1- 2012 055 907

## Beschreibung

Die nachfolgende Erfindung betrifft eine Elektrode für einen, insbesondere gasgekühlten, Plasmabrenner, gemäß Anspruch 1, eine Anordnung für einen, insbesondere gasgekühlten, Plasmabrenner, insbesondere Plasmaschneidbrenner, gemäß Anspruch 14, eine weitere Anordnung für einen, insbesondere gasgekühlten, Plasmabrenner, insbesondere Plasmaschneidbrenner, gemäß Anspruch 15, sowie einen Plasmabrenner, insbesondere Plasmaschneidbrenner, mit dieser Elektrode, gemäß Anspruch 17 und einen Plasmabrenner, insbesondere Plasmaschneidbrenner, mit einer diesen Anordnungen, gemäß Anspruch 18.

Aus US 4 682 005 A, US 4 002 466 A, US 3 450 926 A und US 5 965 040 A sind Elektroden für einen Plasmabrenner bekannt. Ferner stellt WO 2018/071010 A1 Stand der Technik dar, der für die Frage der erfinderischen Tätigkeit der vorliegenden Erfindung nicht von Bedeutung ist.

Beim Plasmaschneiden wird zunächst ein Lichtbogen (Pilotlichtbogen) zwischen einer Kathode (Elektrode) und Anode (Düse) gezündet und danach direkt auf ein Werkstück übertragen, um damit einen Schnitt vorzunehmen.

Besagter Lichtbogen bildet ein Plasma, das ein thermisch hochaufgeheiztes, elektrisch leitfähiges Gas (Plasmagas) ist, das aus positiven und negativen Ionen, Elektronen sowie angeregten und neutralen Atomen und Molekülen besteht. Als Plasmagas werden Gase wie Argon, Wasserstoff, Stickstoff, Sauerstoff oder Luft eingesetzt. Diese Gase werden durch die Energie des Lichtbogens ionisiert und dissoziiert. Der daraus entstehende Plasmastrahl wird zum Schneiden des Werkstücks eingesetzt.

Ein gasgekühlter Plasmaschneidbrenner besteht im Wesentlichen aus den Grundelementen Plasmabrennerkörper, Elektrode (Kathode), Düse, eine oder mehrere Kappen, insbesondere eine Düsenschutzkappe, die die Düse umgibt, sowie aus Verbindungen, die zur Versorgung des Plasmaschneidbrenners mit elektrischem Strom und Gasen dienen. Die Elektrode, die Düse und Düsenschutzkappe sind die thermisch am höchsten belasteten Teile. Diese unterliegen einem starken betriebsbedingten Verschleiß und werden deshalb als Verschleißteile bezeichnet, die regelmäßig gewechselt werden.

Im Gegensatz zu flüssigkeitsgekühlten Plasmaschneidbrennern wird zum Kühlen der thermisch hoch belasteten Verschleißteile des Plasmabrenners keine Flüssigkeit sondern ein Gas, vorzugsweise Luft, verwendet. Hierzu sind jedoch große Volumenströme bzw. Masseströme von Luft nötig, um eine akzeptable Kühlwirkung zu erreichen. Während ein wassergekühlter Plasmabrenner je nach Schneidstrom zwischen 1.000 l/h und 6.000 l/h Gas benötigt, betragen die Volumenströme der gasgekühlten Plasmabrenner je nach Schneidstrom zwischen 12.000 bis 18.000 l/h. Die Lebensdauer der Verschleißteile gasgekühlter Plasmabrenner ist dennoch geringer als diejenige wassergekühlter Plasmabrenner.

Vorteile gasgekühlter Plasmabrenner sind ihr einfacher und kostengünstiger Aufbau sowie ihre einfache Handhabung. Der Wechsel der Verschleißteile ist einfach. Weiterhin kann kein flüssiges Kühlmittel zu Fehlern führen. Bei flüssigkeitsgekühlten Plasmabrennern kann Kühlmittel, das zwischen Verschleißteile, z. B. Elektrode und Düse gelangt, die während des Schneidens ein unterschiedliches Spannungspotential aufweisen, zu einem Kurzschluss und damit zur Beschädigung des Plasmabrenners führen.

Bei gasgekühlten Brennern ist es üblich, Luft als Plasmagas und Kühlgas zu nutzen. Eine Anordnung zum Plasmaschneiden mit einem gasgekühlten Plasmabrenner besteht zumindest aus einer Stromquelle zur Bereitstellung der Spannung und des Stromes für das Plasmaschneiden und einer Gasversorgung, die beispielsweise aus einem Ventil, das die Gasströmung ein- und ausschaltet oder steuert und dem Plasmabrenner. Der Plasmabrenner ist dann über Leitungen und Schläuche mit der Stromquelle und der Gasversorgung verbunden.

Stromquelle und Gasversorgung können in einem Gehäuse angeordnet sein.

Es ist üblich, die Luft über eine Gasleitung dem Plasmabrenner zuzuführen.

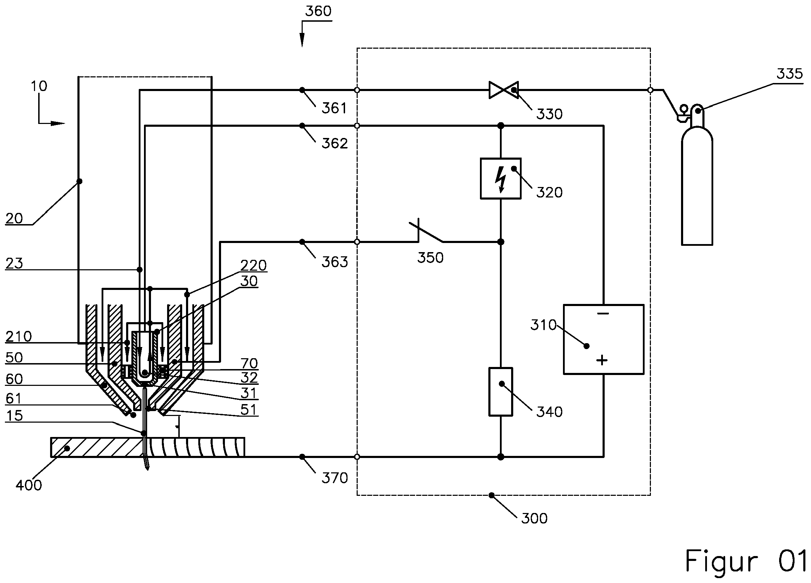

In Figur 1 ist eine Gesamtanordnung im Stand der Technik schematisch dargestellt. Diese umfasst eine Plasmaschneidanlage 300. Die Plasmaschneidanlage 300 umfasst eine Stromquelle 310, ein Hochspannungszündgerät 320, eine Steuereinheit 330 für Gas bzw. Druckluft (Druckluftflasche) (Gasversorgung 335) - hier ein Magnetventil - und einen Düsenschütz 350. An die Plasmaschneidanlage 300 ist ein Plasmabrenner 10 über Leitungen 360, die eine Stromleitung 362 zu einer Elektrode 30 und eine Stromleitung 363 zu einer Düse 50 sowie einen Gasschlauch 361 für eine Gaszuführung umfassen, angeschlossen.

Ebenso ist ein Werkstück 400 über eine Stromleitung 370 mit der Plasmaschneidanlage 300 verbunden.

In der Plasmaschneidanlage 300 befindet sich eine Steuerung (nicht gezeigt), die den Prozessablauf, insbesondere den elektrischen Strom, das Zündgerät und die Gasströmung steuert.

Bei dem in der Figur 1 schematisch gezeigten Plasmabrenner 10 handelt es sich um einen gasgekühlten Plasmabrenner nach dem Stand der Technik. Der gezeigte Plasmabrenner 10 umfasst einen Plasmabrennerkörper 20, der wiederum aus mehreren hier nicht gezeigten Bestandteilen besteht, beispielsweise Schlauchanschlüsse, Anschlüsse für elektrische Leitungen, elektrisch isolierende Teile bspw. mit Öffnungen zum Durchleiten von Gas. Weitere Bestandteile des Plasmabrenners sind die Elektrode 30, die Düse 50, eine Gasführung 70 und eine Düsenschutzkappe 60. Diese sind schematisch dargestellt.

Die Düse 50 hat einen inneren Hohlraum, in dem ein Teil der Elektrode 30 mit dem Emissionseinsatz 31 angeordnet ist, und eine Düsenbohrung 51. Die Elektrode 30 und die Düse 50 sind voneinander durch die Gasführung 70 isoliert angebracht. Die Düsenschutzkappe 60 hat einen inneren Hohlraum, der einen Teil der Düse 50 in einem Abstand umgibt und von dieser ebenfalls elektrisch isoliert ist. Die Gasführung 70 besteht aus elektrisch isolierendem Material, während die Elektrode 30, die Düse 50 und die Düsenschutzkappe 60 aus elektrisch gut leitendem Material, meist Kupfer oder eine Legierung mit Kupfer bestehen. Der Emissionseinsatz 31 in der Elektrode 30 ist aus höherschmelzendem Material als die Elektrode selbst. Meist wird hier Hafnium, Zirkonium oder Wolfram verwendet.

Zum Schneiden strömt zunächst ein Gesamtgasstrom durch eine Gaszuführung 23, dann durch einen Hohlraum 32 der Elektrode 30 und wird dann im Plasmabrennerkörper 20 in einen ersten Teilgasstrom 210 (Plasmagas), der zwischen der Elektrode 30 und der Düse 50 und dann aus der Düsenbohrung 51 strömt, und einen zweiten Teilgasstrom 220 (Kühlgas Düse-Düsenschutzkappe), der zwischen der Düse 50 und der Düsenschutzkappe 60 und dann aus einer Düsenschutzkappenöffnung 61 strömt, aufgeteilt. Danach erfolgt die Zündung eines zwischen der Elektrode 30 und der Düse 50 brennenden Pilotlichtbogens. Die Zündung erfolgt durch das Anlegen einer Hochspannung mit Hilfe des Hochspannungszündgerätes 320 zwischen der Elektrode 30 und der Düse 50. Die Hochspannung ionisiert das Plasmagas, so dass es elektrisch leitfähig und der Pilotlichtbogen ausgebildet wird. Berührt der Pilotlichtbogen das Werkstück 400, setzt der anodische Ansatzpunkt durch den durch den Pilotwiderstand 340 erzeugten Spannungsabfall zwischen Düse 50 und Werkstück 400 von der Düse 50 auf das Werkstück 400 über, der Plasmastrahl 15 brennt zwischen der Elektrode 30 und dem Werkstück 400. Es kann geschnitten werden.

Es besteht auch die Möglichkeit, den Pilotlichtbogen durch einen Kurzschluss zu zünden. Hierbei befinden sich die Elektrode 30 und die Düse 50 durch Berührung in Kontakt miteinander. Die Düse 50 und/oder die Elektrode 30 sind dazu zueinander beweglich angebracht. Nach dem Einschalten der Stromquelle fließt durch den Kurzschluss zwischen der Elektrode 30 und der Düse 50 ein Strom. Danach wird der Gesamtgasstrom eingeschaltet und die Düse und die Elektrode werden durch den im Raum entstehenden Druck durch das strömende Plasmagas voneinander getrennt und der Pilotbogen wird gezündet. Ein Hochspannungszündgerät ist dann nicht notwendig.

Mit dieser Anordnung, d. h. der Aufteilung des Gesamtgasstromes in einen ersten Teilgasstrom 210 (Plasmagas) und zweiten Teilgasstrom 220 (Kühlgas Düse-Düsenschutzkappe), wurde eine Lebensdauer von 100 Schnitten mit jeweils 20 Sekunden Schneidzeit bei 100 A erreicht. Danach mussten die Elektrode 30 und die Düse 50 gewechselt werden, da sie verschlissen waren. Außerdem war der Plasmabrennerkörper 20 sehr heiß. Dies führt besonders bei den eingesetzten Teilen aus Kunststoff zur Verkürzung der Lebensdauer des gesamten Plasmabrenners 10. Dies führt wiederum zu hohen Kosten. Außerdem muss der Arbeitsprozess für den Verschleißteilwechsel unterbrochen werden.

Der vorliegenden Erfindung liegt somit die Aufgabe zugrunde, die Lebensdauer der Verschleißteile zu erhöhen, um die Kosten des Betriebs eines Plasmabrenners, insbesondere des Plasmaschneidens, zu senken und die Produktivität zu erhöhen. Erfindungsgemäß wird diese Aufgabe gemäß einem ersten Aspekt gelöst durch eine Elektrode für einen, insbesondere gasgekühlten, Plasmabrenner, insbesondere Plasmaschneidbrenner, wobei die Elektrode aufweist:
- einen länglichen Elektrodenkörper mit einem offenen Ende und einem geschlossenen Ende, die eine Längsachse L definieren, und
- einen Emissionseinsatz im geschlossenen Ende, wobei sich vom offenen Ende des Elektrodenkörpers ein Hohlraum im Elektrodenkörper in Richtung zum geschlossenen Ende erstreckt und der Hohlraum über mindestens eine Öffnung in seiner Wand oder in dem vorderen massiven Abschnitt des geschlossenen Endes mit der bezüglich der Längsachse radialen Außenseite des Elektrodenkörpers in Fluidverbindung steht,

wobei die zur Längsachse L radiale Außenfläche des Elektrodenkörpers - ausgehend vom geschlossenen Ende - einen im Wesentlichen Zylindrischen ersten Abschnitt und einen sich daran, vorzugsweise direkt anschließenden zweiten Abschnitt aufweist, wobei der zweite Abschnitt pro Längeneinheit entlang der Längsachse L eine größere Oberfläche als der erste Abschnitt aufweist, und
der zweite Abschnitt ein Gewinde oder mindestens ein« spiralförmige Nut aufweist,
wobei die zur Längsachse L radialen Außenfläche des Elektrodenkörpers einen sich an den zweiten Abschnitt in Richtung zum offenen Ende, vorzugsweise direkt, anschließenden dritten Abschnitt mit einem größten Durchmesser aufweist, der größer als der größte Durchmesser der ersten und zweiten Abschnitte der Außenfläche des Elektrodenkörpers ist.

Ferner wird diese Aufgabe gelöst durch eine Anordnung aus einer Elektrode für einen, insbesondere gasgekühlten, Plasmabrenner, insbesondere Plasmaschneidbrenner, nach einem der Ansprüche 1 bis 13, und einem Kühlrohr, wobei das Kühlrohr einen länglichen Kühlrohrkörper mit einem in dem offenen Ende der Elektrode angeordneten vorderen Ende und einem hinteren Ende sowie mit einem sich durch selbigen erstreckenden Kühlmittelkanal aufweist, wobei das vordere Ende des Kühlrohres über die Öffnung bzw. die Öffnungen in der Wand des Hohlraumes im Elektrodenkörper hinaus in die Elektrode hineinragt.

Weiterhin wird diese Aufgabe gelöst durch eine Anordnung aus einer Elektrode für einen, insbesondere gasgekühlten, Plasmabrenner, insbesondere Plasmaschneidbrenner, nach einem der Ansprüche 6 bis 13, und einem Kühlrohr, wobei das Kühlrohr einen länglichen Kühlrohrkörper mit einem in dem offenen Ende der Elektrode angeordneten vorderen Ende und einem hinteren Ende sowie mit einem sich durch selbigen erstreckenden Kühlmittelkanal aufweist, wobei das vordere Ende des Kühlrohres bis zum Übergang zwischen dem ersten zylindrischen Abschnitt und dem zweiten zylindrischen Abschnitt des Hohlraumes in die Elektrode hineinragt.

Darüber hinaus wird diese Aufgabe gelöst durch einen Plasmabrenner, insbesondere Plasmaschneidbrenner, mit einer Elektrode nach einem der Ansprüche 1 bis 13.

Außerdem wird diese Aufgabe gelöst durch einen Plasmabrenner, insbesondere Plasmaschneidbrenner, mit einer Anordnung nach einem der Ansprüche 14 bis 16.

Bei der Elektrode gemäß dem ersten Aspekt kann vorgesehen sein, dass sich der Hohlraum vom offenen Ende über mehr als die Hälfte, bevorzugter über mehr als zwei Drittel, noch bevorzugter über mehr als fünf Sechstel, der Länge des Elektrodenkörpers zum geschlossenen Ende hin erstreckt.

Insbesondere kann vorgesehen sein, dass sich die Öffnung oder mindestens eine der Öffnungen - vom geschlossenen Ende gesehen - in einer Entfernung von maximal einer Hälfte, bevorzugter einem Drittel, noch bevorzugter einem Sechstel, der Länge des Elektrodenkörpers befindet/befinden.

Günstigerweise erstreckt sich die Öffnung oder mindestens eine der Öffnungen vollständig oder teilweise radial zur Längsachse L und/oder in einem Versatz a; b zur Radialen zur Längsachse L und/oder unter einem Winkel α in einem Bereich von 45° bis 90° zur Längsachse L in Richtung des offenen Endes und/oder unter einem Winkel β in einem Bereich von 45° bis 90° zur Längsachse L in Richtung des geschlossenen Endes und/oder unter einem Winkel ε ≠ 0 zur Radialen zur Längsachse L. Zweckmäßigerweise ist der Hohlraum zylindrisch oder weist mindestens einen zylindrischen Abschnitt auf.

Gemäß einer besonderen Ausführungsform weist der Hohlraum einen ersten zylindrischen Abschnitt mit einem ersten Durchmesser und einen zweiten zylindrischen Abschnitt mit einem zweiten Durchmesser auf, wobei der erste zylindrische Abschnitt näher zum geschlossenen Ende als der zweite zylindrische Abschnitt liegt und der erste Durchmesser kleiner als der zweite Durchmesser ist.

Vorteilhafterweise ist die Querschnittsfläche des Hohlraumes radial zur Längsachse L oder die größte Querschnittsfläche des Hohlraumes radial zur Längsachse L, bevorzugt um einen Faktor 2, noch bevorzugter um einen Faktor 4, größer als die Querschnittsfläche der Öffnung oder größer als die Summe der Querschnittsflächen der Öffnungen. Insbesondere geht es dabei um die strömungsrelevante Querschnittsfläche.

Günstigerweise ist die kleinste Querschnittsfläche des Hohlraumes radial zur Längsachse L, bevorzugt um einen Faktor 2, noch bevorzugter um einen Faktor 4, größer als die Querschnittsfläche der Öffnung oder als die Summe der Querschnittsflächen der Öffnungen.

Weiterhin kann vorgesehen sein, dass der Elektrodenkörper auf seiner Außenfläche am offenen Ende ein Außengewinde aufweist.

Insbesondere kann vorgesehen sein, dass der dritte Abschnitt Teil des offenen Endes ist.

Ferner ist denkbar, dass der dritte Abschnitt das Außengewinde aufweist.

Günstigerweise weist der Elektrodenkörper in seiner Außenfläche im Bereich des größten Durchmessers eine umlaufende Nut und einen Rundring in der Nut auf.

Vorteilhafterweise erstreckt sich auf dem Boden des Hohlraumes, vorzugsweise mittig, ein, vorzugsweise säulenartiger, Vorsprung in Richtung zum offenen Ende.

Bei der Anordnung nach Anspruch 14 oder 15 kann vorgesehen sein, dass die größte Querschnittsfläche des Kühlmittelkanals, bevorzugt um einen Faktor 2, noch bevorzugter um einen Faktor 4, größer ist als die Querschnittsfläche oder größer als die Summe der Querschnittsflächen der Öffnungen ist. Insbesondere geht es dabei um die strömungsrelevante Querschnittsfläche.

Weitere Merkmale und Vorteile der Erfindung ergeben sich aus den beigefügten Ansprüchen und aus der nachfolgenden Beschreibung, in der mehrere Ausführungsbeispiele der Erfindung unter Bezugnahme auf die schematischen Zeichnungen beschrieben werden, in denen:
- Figur 1: eine schematische Darstellung einer Plasmaschneidanlage gemäß dem Stand der Technik zeigt;
- Figur 2: ein Schnittbild eines Plasmabrenners einer besonderen Ausführungsform, die nicht unter den Wortlaut der Ansprüche fällt, wird aber als das Verständnis der Erfindung erleichternd angesehen, zeigt;
- Figur 2a: eine Elektrode des Plasmabrenners von Figur 2 zeigt;
- Figur 2b: eine hintere Gasführung eines Plasmabrenners gemäß einer der Figuren 2 bis 20 zeigt;
- Figur 2c: eine vordere Gasführung eines Plasmabrenners gemäß einer der Figuren 2 bis 3 zeigt;
- Figur 2d: eine einteilige Gasführung für den Plasmabrenner gemäß den Figuren 2 bis 3 zeigt;
- Figur 2e: eine Ausführungsform einer einteiligen Gasführung, die nicht unter den Wortlaut der Ansprüche fällt, wird aber als das Verständnis der Erfindung erleichternd angesehen, für einen Plasmabrenner;
- Figur 2f: eine weitere Ausführungsform einer einteiligen Gasführung, die nicht unter den Wortlaut der Ansprüche fällt, wird aber als das Verständnis der Erfindung erleichternd angesehen, für einen Plasmabrenner;
- Figur 3: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 3a: eine Elektrode des Plasmabrenners gemäß Figur 3 zeigt;
- Figur 4: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 4a: eine Elektrode des Plasmabrenners von Figur 4 zeigt;
- Figur 4b: eine vordere Gasführung des Plasmabrenners gemäß der Figur 4 zeigt;
- Figur 4c: eine einteilige Gasführung für den Plasmabrenner gemäß Figur 4 zeigt;
- Figur 5: ein Schnittbild eines Plasmabrenners einer besonderen Ausführungsform, die nicht unter den Wortlaut der Ansprüche fällt, wird aber als das Verständnis der Erfindung erleichternd angesehen, zeigt;
- Figur 5a: eine Elektrode des Plasmabrenners von Figur 5 zeigt;
- Figur 5b: eine vordere Gasführung des Plasmabrenners gemäß den Figuren 5 bis 7 zeigt;
- Figur 6: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 6a: eine Elektrode des Plasmabrenners von Figur 6 zeigt;
- Figur 7: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 7a: eine Elektrode des Plasmabrenners von Figur 7 zeigt;
- Figur 8: ein Schnittbild eines Plasmabrenners gemäß einer weiteren besonderen Ausführungsform der vorliegenden Erfindung zeigt;
- Figur 8a: eine Elektrode des Plasmabrenners von Figur 8 zeigt;
- Figur 8b: eine vordere Gasführung des Plasmabrenners von Figur 8 zeigt;
- Figur 8c: eine einteilige Gasführung für den Plasmabrenner von Figur 8 zeigt;
- Figur 9: einen Plasmabrenner gemäß einer weiteren besonderen Ausführungsform, die nicht unter den Wortlaut der Ansprüche fällt, wird aber als das Verständnis der Erfindung erleichternd angesehen, zeigt;
- Figur 9a: eine Elektrode des Plasmabrenners von Figur 9 zeigt;
- Figur 9b: eine vordere Gasführung des Plasmabrenners der Figuren 9 bis 11 zeigt;
- Figur 9c: eine einteilige Gasführung für den Plasmabrenner gemäß den Figuren 9 bis 11 zeigt;
- Figur 10: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 10a: eine Elektrode des Plasmabrenners von Figur 10 zeigt;
- Figur 11: ein Schnittbild eines Plasmabrenners gemäß einer weiteren besonderen Ausführungsform, die nicht zur vorliegenden Erfindung gehört, zeigt;
- Figur 11a: eine Elektrode des Plasmabrenners von Figur 11 zeigt;
- Figur 12: ein Schnittbild eines Plasmabrenners gemäß einer weiteren besonderen Ausführungsform der vorliegenden Erfindung zeigt;
- Figur 12a: eine Elektrode des Plasmabrenners von Figur 12 zeigt;
- Figur 12b: eine vordere Gasführung des Plasmabrenners von Figur 12 zeigt;
- Figur 12c: eine einteilige Gasführung für den Plasmabrenner gemäß Figur 12 zeigt;
- Figur 13: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 13a: eine Elektrode des Plasmabrenners von Figur 13 zeigt;
- Figur 13b: eine vordere Gasführung der Plasmabrenner der Figuren 13 bis 17 zeigt;
- Figur 13c: eine einteilige Gasführung für die Plasmabrenner der Figuren 13 bis 17 zeigt;
- Figur 14: ein Schnittbild eines Plasmabrenners einer besonderen Ausführungsform, die nicht unter den Wortlaut der Ansprüche fällt, wird aber als das Verständnis der Erfindung erleichternd angesehen, zeigt;
- Figur 14a: eine Elektrode des Plasmabrenners von Figur 14 zeigt;
- Figur 15: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 15a: eine Elektrode des Plasmabrenners von Figur 15 zeigt;
- Figur 16: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 16a: eine Elektrode des Plasmabrenners von Figur 16 zeigt;
- Figur 17: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 17a: eine Elektrode des Plasmabrenners von Figur 17 zeigt;
- Figur 18: ein Schnittbild eines Plasmabrenners gemäß einer weiteren besonderen Ausführungsform der vorliegenden Erfindung zeigt;
- Figur 18a: eine Elektrode des Plasmabrenners von Figur 18 zeigt;
- Figur 18b: eine vordere Gasführung des Plasmabrenners von Figur 18 zeigt;
- Figur 18c: eine einteilige Gasführung für den Plasmabrenner von Figur 18 zeigt;
- Figur 18d: eine beispielhafte Variante zur Elektrode von Figur 18a zeigt;
- Figur 19: ein Schnittbild eines Plasmabrenners gemäß einer weiteren besonderen Ausführungsform der vorliegenden Erfindung zeigt;
- Figuren 19a, 19b und 19c: weitere Beispiele für Ausführungen von Öffnungen in der zugehörigen Elektrode in perspektivischer Darstellung und in Längsschnitt sowie ggf. auch in Seitenansicht zeigen;
- Figur 20: ein Schnittbild eines Plasmabrenners gemäß einer weiteren besonderen Ausführungsform der vorliegenden Erfindung zeigt;
- Figur 21: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 21a: eine Elektrode des Plasmabrenners von Figur 21 gemäß einer besonderen Ausführungsform zeigt;
- Figur 21b: eine Elektrode des Plasmabrenners von Figur 21 gemäß einer weiteren besonderen Ausführungsform zeigt;
- Figur 21c: eine Elektrode des Plasmabrenners von Figur 21 gemäß einer weiteren besonderen Ausführungsform zeigt;
- Figur 21d: eine vordere Gasführung 70 des Plasmabrenners von Figur 21 zeigt;
- Figur 22: ein Schnittbild eines Plasmabrenners gemäß einer weiteren besonderen Ausführungsform, die nicht unter den Wortlaut der Ansprüche fällt, wird aber als das Verständnis der Erfindung erleichternd angesehen, zeigt;
- Figur 22a: eine Elektrode des Plasmabrenners von Figur 22 zeigt;
- Figur 22b: eine vordere Gasführung 70 des Plasmabrenners von Figur 22 zeigt;und
- Figur 22c: eine Gasführung 88 des Plasmabrenners von Figur 22 zeigt.

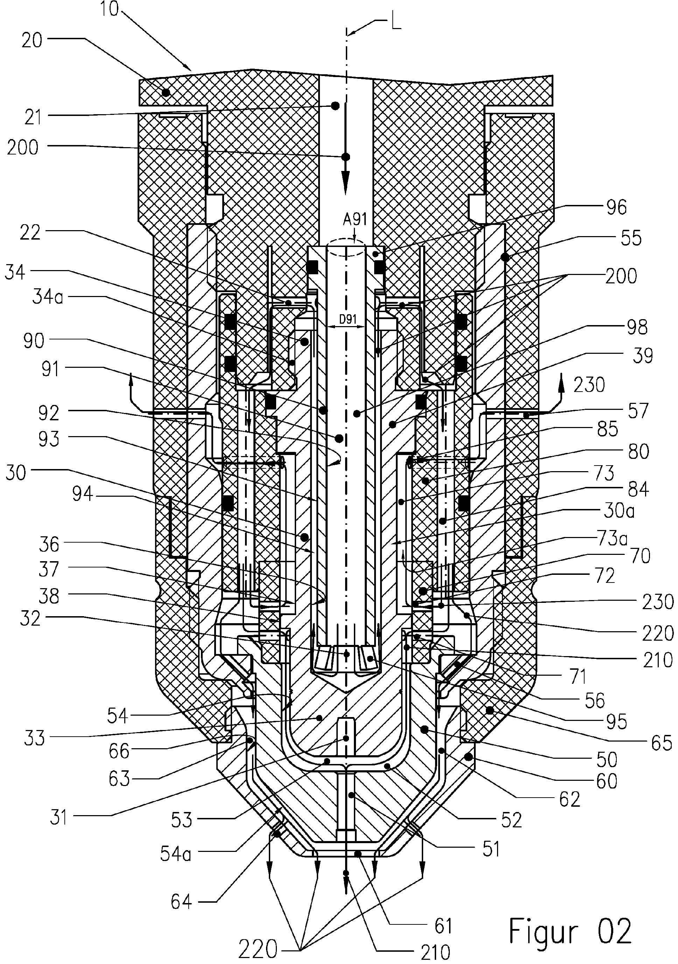

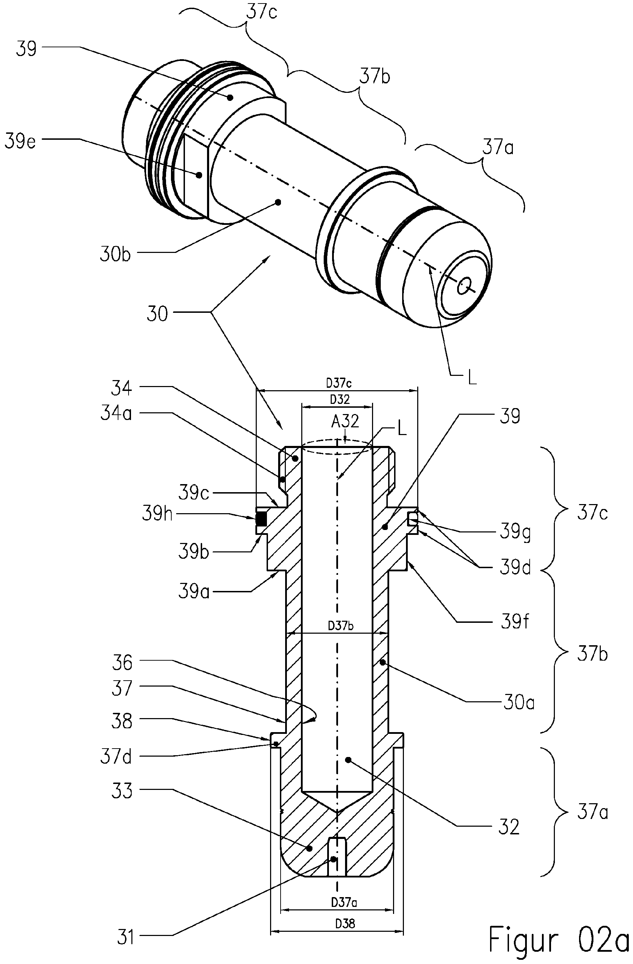

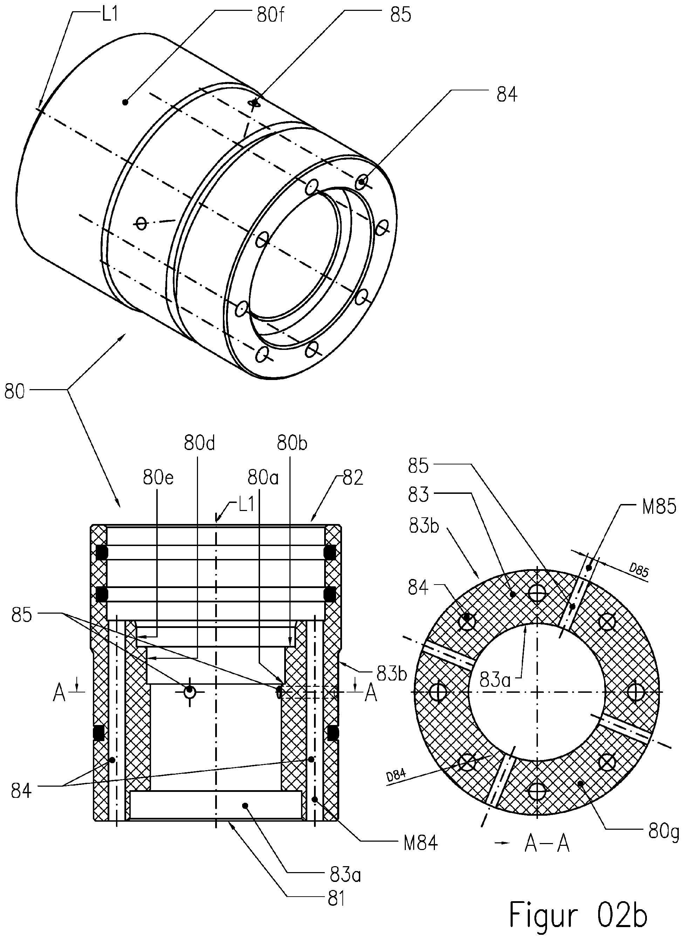

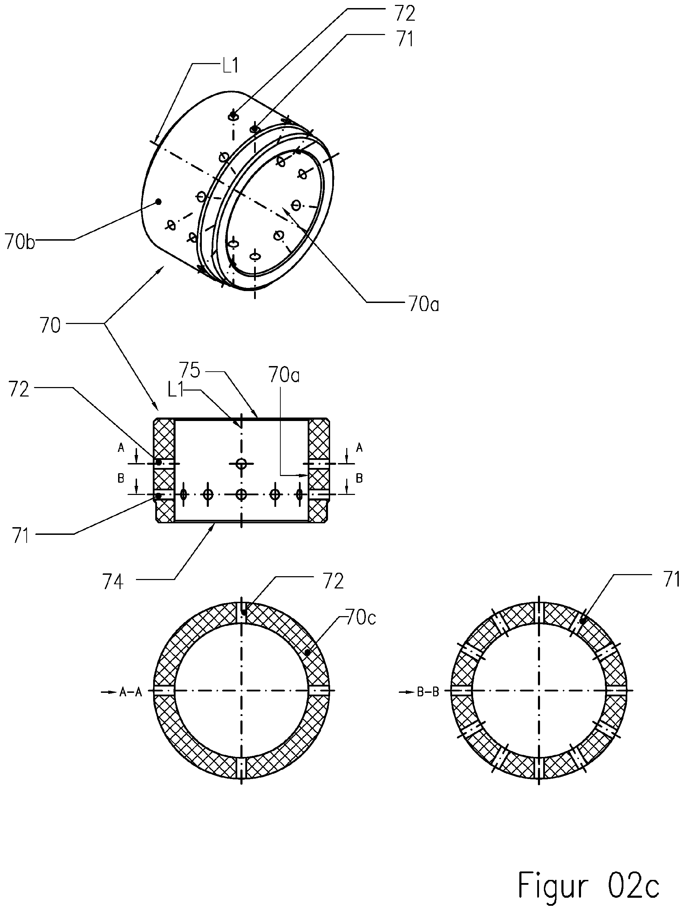

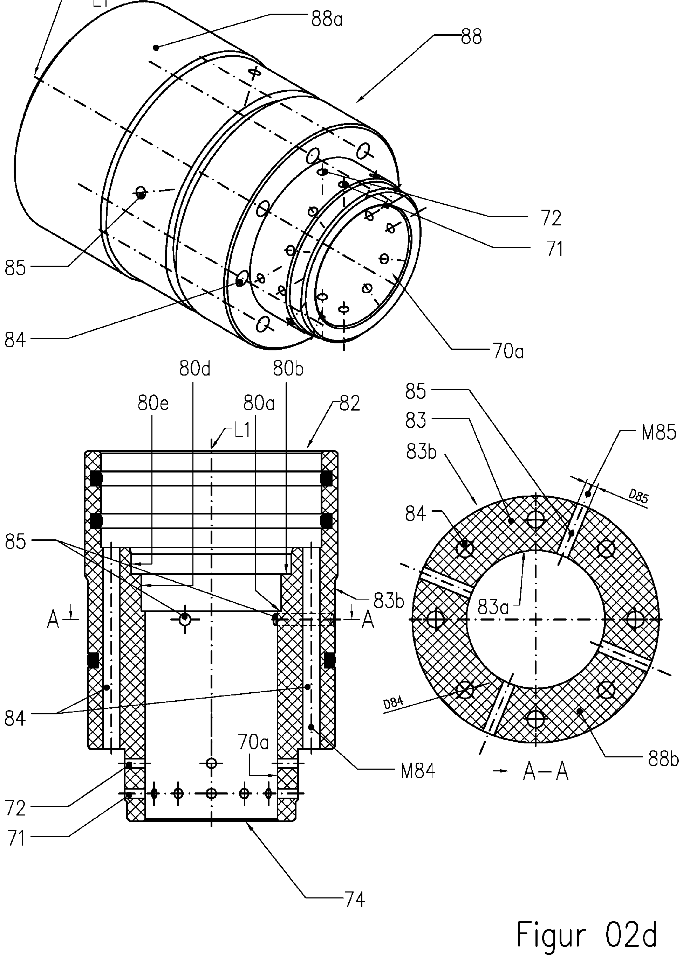

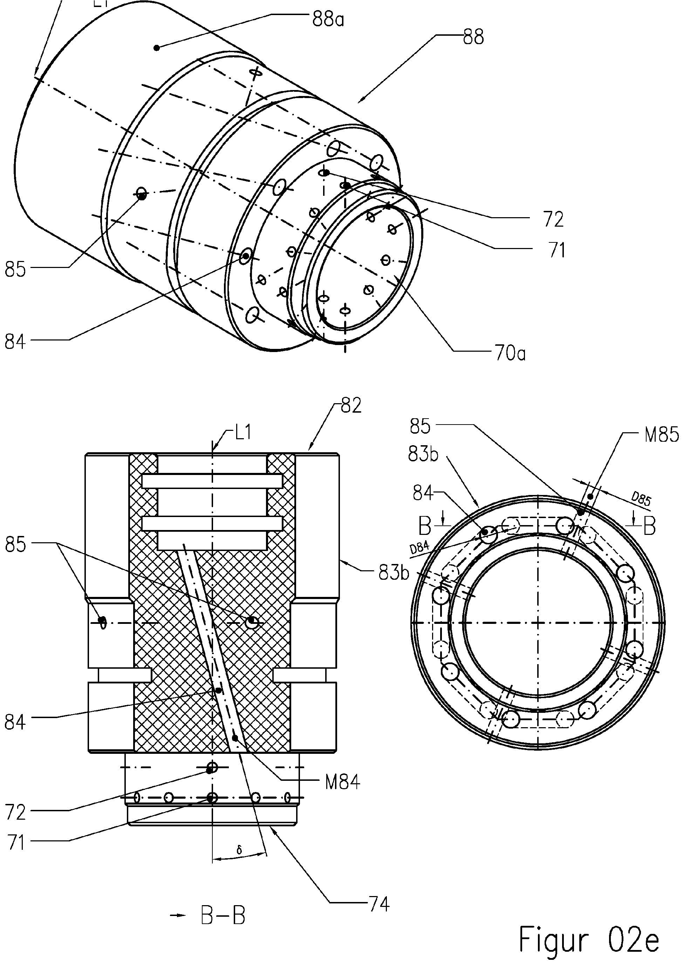

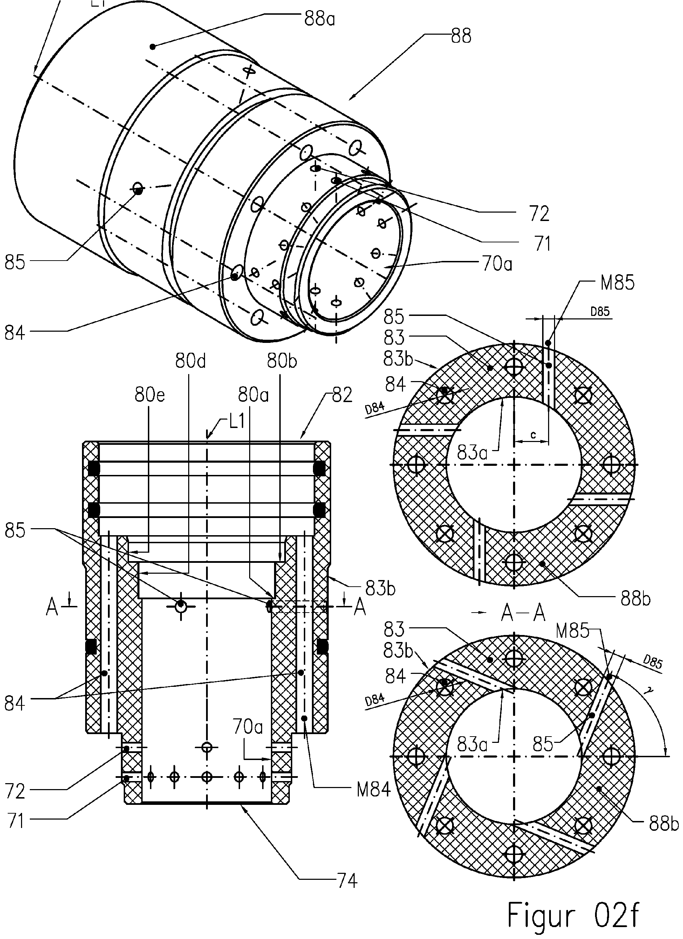

Figur 2 zeigt beispielhaft einen Plasmabrenner 10 gemäß einer besonderen Ausführungsform der vorliegenden Offenbarung, die nicht unter den Wortlaut der Ansprüche fällt, wird aber als das Verständnis der Erfindung erleichternd angesehen.

In der Figur 2a sind Einzelheiten einer darin eingesetzten Elektrode 30, in der Figur 2b Einzelheiten einer darin eingesetzten Gasführung 80 und in der Figur 2c einer darin eingesetzten Gasführung 70 gezeigt. Der gezeigte Plasmabrenner 10 umfasst einen Plasmabrennerkörper 20, der wiederum aus mehreren hier nicht gezeigten Bestandteilen besteht, beispielsweise Schlauchanschlüsse, Anschlüsse für elektrische Leitungen und elektrisch leitende Teile zum Durchleiten von Strömen sowie elektrisch isolierende Teile bspw. mit Öffnungen zum Durchleiten von Gas.

In den Plasmabrennerkörper 20 ist die Elektrode 30 eingeschraubt. Die Elektrode 30 hat ein vorderes geschlossenes Ende 33 und ein hinteres offenes Ende 34. Das offene Ende 34 führt in einen inneren Hohlraum 32 der Elektrode 30. Der Hohlraum 32 mit einem Durchmesser D32 erstreckt sich entlang der Längsachse L der Elektrode 30 bzw. des Plasmabrennerkörpers 20. Das geschlossene Ende 33 nimmt einen Emissionseinsatz 31 für einen elektrischen Lichtbogen auf. Ein Kühlrohr 90 ist in eine Öffnung 21 des Plasmabrennerkörpers 20 gesteckt und ragt in den Hohlraum 32 der Elektrode 30 hinein. Das Kühlrohr 90 ragt mit seinem vorderen Ende 95 bis in die Nähe des Endes oder bis zum Ende des Hohlraums 32 hinein und kann sich dort abstützen, damit es nicht weiter nach vorne rutschen kann. Die Elektrode 30 ist hier mit einem Gewinde (Außengewinde) 34a am geschlossenen Ende 34 in den Brennerkörper 20 geschraubt. Hier erfolgt auch eine Stromübertragung vom Plasmabrennerkörper 20 auf die Elektrode 30. Der Hohlraum 32 erstreckt sich zumindest soweit in die Richtung des vorderen geschlossenen Endes 33, wie sich das Gewinde 34a zum Einschrauben in den Plasmabrennerkörper 20 auf der Außenfläche 37 der Elektrode 30 erstreckt. Dadurch wird die Stelle der Stromübertragung zwischen dem Plasmabrennerkörper 20 und der Elektrode 30 gekühlt.

Die Außenfläche 37 der Elektrode 30 umfasst oder besteht im Wesentlichen aus drei Abschnitten (siehe auch Figur 2a). Ein erster Abschnitt 37a am vorderen geschlossenen Ende 33 ragt in den inneren Hohlraum 52 der Düse 50 und einen Teil der Gasführung 70 hinein und hat eine im Wesentlichen zylindrische Form. Ein zweiter Abschnitt 37b beginnt nach einem umlaufenden Vorsprung 37d auf der Oberfläche der Elektrode 30 und ragt in einen Teil der Gasführung 70 und die Gasführung 80 hinein und hat ebenfalls eine im Wesentlichen zylindrische Form. Ein dritter Abschnitt 37c befindet sich am hinteren Ende 34 der Elektrode 30. Er umfasst das Gewinde 34a sowie einen Bereich 39 mit den (im Wesentlichen) kreisringförmigen Anschlagsflächen 39a, 39b und 39c, die äußere (im Wesentlichen zylindrische) Zentrierfläche 39d sowie eine Außenfläche 39f mit einer umlaufenden Nut 39g zur Aufnahme eines Rundrings[VK1]. Die Anschlagflächen 39a und/oder 39b dienen der zur Längsachse L axialen Positionierung der Elektrode 30 zu Anschlagflächen 80a und/oder 80b der Gasführung 80 (siehe auch Figur 2b). Eine Anschlagsfläche 39c dient zur axialen Positionierung der Elektrode 30 zum Plasmabrennerkörper 20. Die (im Wesentlichen zylindrische) Außenfläche 39f der Elektrode 30 dient der zur Längsachse L radialen Ausrichtung zu (im Wesentlichen zylindrischen) inneren Zentrierfläche 80d der Gasführung 80. Die (im Wesentlichen zylindrische) äußere Zentrierfläche 39d der Elektrode 30 ist durch "abgeflachte" Flächen 39e unterbrochen. Diese dienen als Schlüsselflächen für ein Werkzeug, um die Elektrode ein- und ausschrauben zu können. Mit dem Begriff "im Wesentlichen zylindrisch" ist gemeint, dass solche Unterbrechungen auf einer zylindrischen Außenfläche erlaubt sind (Fortsetzung durch eine virtuelle Körperkante möglich).

Die Düse 50 hat einen inneren Hohlraum 52, der einen Teil der Elektrode 30 in einem Abstand umgibt und von dieser elektrisch isoliert ist. Die Isolation und Beabstandung zwischen der Elektrode 30 und der Düse 50 erfolgt durch die Gasführung 70 (in gewissen Fällen kann diese auch als Plasmagaszuführung bezeichnet werden) und die Gasführung 80 (diese kann je nach Gestaltung alle Gase bzw. Gasarten oder Teilgase führen). Die Düse 50 wird durch einen Düsenhalter 55, der mit dem Plasmabrennerkörper 20 durch Gewinde verschraubt ist, gehalten. Zwischen dem vorderen Abschnitt 37a der Außenfläche der Elektrode 30 und der Innenfläche 54 der Düse 50 wird in zusammengebautem Zustand des Plasmabrenners ein Hohlraum 53 gebildet.

Die Düsenschutzkappe 60 hat einen inneren Hohlraum 62, der einen Teil der Düse 50 in einem Abstand umgibt und von dieser elektrisch isoliert ist. Die Isolation und Beabstandung zwischen der Düse 50 und der Düsenschutzkappe 60 erfolgt durch eine Düsenschutzkappenhalterung 65. Hier ist die Düsenschutzkappe 60 über ein Gewinde mit der Düsenschutzkappenhalterung 65 und diese mit dem Düsenhalter 55 verschraubt. Die Gasführung 70, die Gasführung 80 und die Düsenschutzkappenhalterung 65 bestehen aus elektrisch isolierendem Material, während die Elektrode 30, die Düse 50 und die Düsenschutzkappe 60 aus elektrisch gut leitendem Material, meist Kupfer oder eine Legierung mit Kupfer bestehen. Der Emissionseinsatz 31 in der Elektrode 30 ist aus höherschmelzendem Material als die Elektrode selbst. Meist wird hier Hafnium, Zirkonium oder Wolfram verwendet.

Im gezeigten Plasmabrenner 10 wird der Gesamtgasstrom 200 durch eine Öffnung 21 im Brennerkörper 20 durch den Innenraum 91 eines Kühlrohrs 90 in den Innenraum 32 einer Elektrode 30 geleitet. Dieser trifft auf das vordere geschlossene Ende 33 der Elektrode 30, in dem sich auch der Emissionseinsatz 31 befindet. Dadurch wird dieser Abschnitt, an dem die Wärme durch den am Emissionseinsatz ansetzenden Lichtbogen (Plasmastrahl) entsteht, gut gekühlt. Danach strömt der Gesamtgasstrom 200 in einem durch die Außenfläche 93 des Kühlrohrs 90 und die Innenfläche 36 der Elektrode 30 gebildeten Raum 94 zurück und wird durch Öffnungen oder Nuten 22 oder Kanäle, im Plasmabrennerkörper 20 zunächst radial zur Längsachse L in Richtung nach außen und dann durch Öffnungen 84 der Gasführung 80 in Richtung Düse 50 und Düsenschutzkappe 60 geführt. Dann erfolgt die Aufteilung des Gesamtgasstromes 200 in einen ersten Teilgasstrom 210 für das Plasmagas und einen zweiten Teilgasstrom 220 für das Kühlgas für die Düse 50 und die Düsenschutzkappe 60 sowie einen dritten Teilgasstrom 230 für das Kühlgas für die Elektrode 30.

Der erste Teilgasstrom 210, d.h. in diesem Fall das Plasmagas, strömt durch Öffnungen 71 in der Gasführung 70, bevor er in den Raum 53 zwischen der Düse 50 und der Elektrode 30 und letztlich aus der Düsenbohrung 51 strömt. Der erste Teilgasstrom 210 umströmt somit den ersten vorderen Abschnitt 37a der Außenfläche 37 der Elektrode 30.

Der zweite Teilgasstrom 220, d.h. in diesem Fall das Kühlgas für die Düse 50 und die Düsenschutzkappe 60, strömt durch Öffnungen oder Nuten 56 des Düsenhalters 55, bevor es in den Raum 63 zwischen der Außenfläche 54a der Düse 50 und der Innenfläche 66 der Düsenschutzkappe 60 und dann aus der Düsenschutzkappenöffnung 61 und den weiteren Öffnungen 64 der Düsenschutzkappe 60 strömt.

Der dritte Teilgasstrom 230, d. h. in diesem Fall das Kühlgas für die Elektrode 30, strömt durch Öffnungen 72 in der Gasführung 70 in den durch den zweiten mittleren Abschnitt 37b der Außenfläche 37 der Elektrode 30, die vordere Gasführung 70 und die hintere Gasführung 80 gebildeten Raum 73 und durchströmt diesen in Richtung des hinteren Endes 34. Der Teilgasstrom 230 umströmt somit den zweiten mittleren Abschnitt 37b der Außenfläche 37 der Elektrode 30. In der Nähe des hinteren Endes 34 der Elektrode 30 wird der Teilgasstrom 230 durch Öffnungen 85 in der Gasführung 80 und die Öffnungen 57 des Düsenhalters 55 radial nach außen geführt.

So kühlt der Gesamtgasstrom 200 die Innenfläche 36 und kühlt der dritte Teilgasstrom 230 den zweiten mittleren Abschnitt 37b der Außenfläche 37 der Elektrode 30. Durch die Verbesserung der Kühlung wird die Lebensdauer der Elektrode 30 erheblich erhöht. So kann zusätzlich eine gute Schnittqualität über einen längeren Zeitraum erreicht werden.

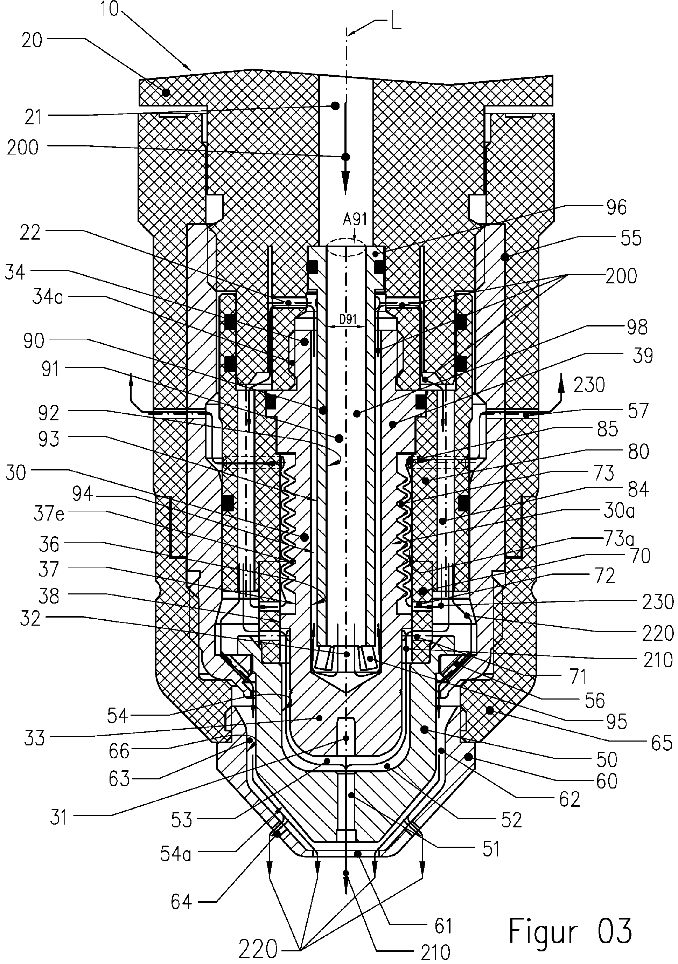

Die Figur 2a zeigt die in dem Plasmabrenner 10 eingesetzte Elektrode 30, wobei die obere Abbildung eine perspektivische und die untere Abbildung eine geschnittene Darstellung (Längsschnitt) ist. Die Elektrode 30 ist schon in Figur 2 gezeigt und wurde schon beschrieben. Sie erstreckt sich entlang der Längsachse L und hat ein vorderes geschlossenes Ende 33 und ein hinteres offenes Ende 34 und eine im Wesentlichen zylindrische Form. Sie hat im Bereich 39 die senkrecht zur Längsachse ausgebildeten Anschlagflächen 39a und/oder 39b zur axialen Positionierung zu Anschlagflächen 80a und/oder 80b der Gasführung 80. Sie weist am Übergang zwischen dem vorderen ersten Abschnitt 37a und dem mittleren zweiten Abschnitt 37b einen umlaufenden Vorsprung 37d auf, der eine Außenfläche 38 (Zentrierfläche) aufweist, die die Elektrode 30 mit der Innenfläche 70a der vorderen Gasführung 70 (Figur 3c) radial zur Längsachse L ausrichtet.

Die Figur 2b zeigt die im Plasmabrenner 10 der Figuren 2 bis 20 eingesetzte hintere Gasführung 80, wobei die obere Abbildung eine perspektivische und die untere linke Abbildung den Längsschnitt und die untere rechte Abbildung den Schnitt durch die Ebene A-A zeigt. Die hintere Gasführung 80 ist schon teilweise in Figur 2 gezeigt und im Zusammenhang damit beschrieben worden. Die hintere Gasführung 80 erstreckt sich entlang der Längsachse L und hat ein vorderes Ende 81 und ein hinteres Ende 82 und eine im Wesentlichen zylindrische Form. Sie hat auf der Innenfläche 83a die senkrecht zur Längsachse ausgebildeten Anschlagflächen 80a und/oder 80b zur axialen Positionierung zu den Anschlagflächen 39a und/oder 39b der Elektrode 30. Die hintere Gasführung 80 hat weiterhin zylindrische Innenflächen 80d und 80e. Im eingebauten Zustand fungiert die Innenfläche 80e mit der dann gegenüberliegenden Außenfläche 39d der Elektrode 30 und einem in der Nut 39g befindlichen Rundring 39h als Dichtfläche. Die Innenfläche 80e fungiert im eingebauten Zustand ebenso als Zentrierfläche mit der gegenüberliegenden äußeren Zentrierfläche 39d der Elektrode 30. Die Elektrode 30 und die hintere Gasführung 80 werden so zueinander zentriert und entlang der Längsachse L radial ausgerichtet.

In der Wand 83 der Gasführung 80 befinden sich Öffnungen. In diesem Beispiel sind acht Öffnungen 84 gezeigt, die sich in der Wand 83 parallel zur Längsachse L erstrecken. Diese führen in eingebautem Zustand den Gesamtgasstrom 200 oder einen Teilgasstrom vom hinteren Ende oder der Nähe des hinteren Endes 82 zum vorderen Ende 81. Es sind hier acht Öffnungen 85 gezeigt, die sich von der Innenfläche 83a zur Außenfläche 83b erstrecken. Hier sind diese Öffnungen 85 rechtwinklig zur Längsachse L ausgerichtet. Im eingebauten Zustand führen die Öffnungen 85 den Teilgasstrom 230 zur Kühlung der Elektrode 30 aus dem durch die Außenfläche 37 der Elektrode 30, die Gasführung 70 und die Gasführung 80 gebildeten Raum 73 durch die Wand der Gasführung 80 nach außen (siehe auch Figur 2 und die Beschreibung dazu).

Die Öffnungen 84 müssen nicht parallel zur Längsachse L angeordnet sein, Abweichungen sind möglich. Wichtig ist, dass das hintere Ende 82 oder die Nähe des hinteren Endes mit dem vorderen Ende 81 oder der Nähe des vorderen Endes miteinander verbinden. Abweichungen von bis zu 20 ° sind möglich.

Die Öffnungen 85 müssen nicht senkrecht zur Längsachse L angeordnet sein, Abweichungen sind möglich. Wichtig ist, dass sie die Innenfläche 83a mit der Außenfläche 83b miteinander verbinden. Abweichungen von bis zu 40° sind möglich. Die Öffnungen 84 sind zu den Öffnungen 85 so zueinander angeordnet, dass sie innerhalb des Gasführungskörpers 80f nicht miteinander in Verbindung stehen.

Die Figur 2c zeigt die vordere Gasführung 70 der Plasmabrenner aus den Figuren 2 bis 4, wobei die obere Abbildung eine perspektivische, die mittlere Abbildung den Längsschnitt, die untere linke Abbildung den Schnitt durch die Ebene A-A und die untere rechte Abbildung die Schnitt durch die Ebene B-B zeigt. Die vordere Gasführung 70 ist schon teilweise in Figur 2 beschrieben. Die vordere Gasführung 70 erstreckt sich entlang der Längsachse L und hat ein vorderes Ende 74 und ein hinteres Ende 75 und eine im Wesentlichen zylindrische Form. Sie weist in der Nähe des vorderen Endes 74 Öffnungen 71 auf, durch die im eingebauten Zustand der erste Teilgasstrom 210 Plasmagas strömt und Öffnungen 72 auf, durch die in eingebautem Zustand der Teilgasstrom 230 Kühlgas Elektrode strömt.

Durch das Vorhandensein der Bohrungen 84 und 85 und das Durchströmen mit dem Gesamt- und einen Teilgasstrom wird die hintere Gasführung 80 gut gekühlt. Dadurch und wegen des größeren Abstands zum Lichtbogen verringert sich die thermische Beanspruchung gegenüber der vorderen Gasführung 70 und kann somit aus einem thermisch weniger beständigen Material hergestellt werden als die vordere Gasführung 70.

Es ist aber möglich, die Gasführungen 70 und 80 aus einem Teil herzustellen. Figur 2d zeigt eine solche einteilige Gasführung 88.

Die Innenfläche 70a liegt im eingebauten Zustand der Außenfläche 38 des Vorsprungs 37d der Elektrode 30 gegenüber. Durch diese beiden Zentrierflächen werden die Gasführung 88 und die Elektrode 30 radial zur Längsachse zueinander ausgerichtet und zentriert.

Figur 2e zeigt eine Ausführungsvariante einer einteiligen Gasführung 88, die ebenfalls nicht unter den Wortlaut der Ansprüche fällt, wird aber als das Verständnis der Erfindung erleichternd angesehen. Im Unterschied zu Figur 2d sind die Öffnungen 84 zur Längsachse L und den Winke δ geneigt. Dieser beträgt sinnvoll maximal 20°. Das durch diese Öffnungen strömende Gas hat bei Neigung zur Längsachse einen längeren Strömungsweg durch die Gasführung 80 oder 88 und kühlt diese somit besser. Außerdem kommt es nach dem Austritt aus den Öffnungen 84 zu stärkeren Verwirbelungen im Innenraum des Plasmabrenners und kühlt die mit der Gasströmung in Berührung kommenden Brennerteile besser.

Die Ausführungsvariante mit den geneigten Öffnung 84 ist genauso für die Gasführung 80, wie in beispielsweise in Figur 2b gezeigt, möglich, es gelten die gleichen Bemerkungen.

Figur 2f zeigt eine weitere Ausführungsvariante einer einteiligen Gasführung 88, die nicht unter den Wortlaut der Ansprüche fällt, wird aber als das Verständnis der Erfindung erleichternd angesehen.

Im Unterschied zu Figur 2d sind die Öffnungen 85 zur Radialen zur Längsachse L um c versetzt (untere rechte Figur, oberer Schnitt A-A) Figur oder den Winke γ zur Radialen zur Längsachse geneigt. Dieser beträgt sinnvoll maximal 45°. Das durch diese Öffnungen strömende Gas hat bei Neigung einen längeren Strömungsweg durch die Gasführung 80 oder 88 und kühlt diese somit besser. Außerdem kommt es nach dem Austritt aus den Öffnungen 85 zu stärkeren Verwirbelungen im Innenraum des Plasmabrenners und kühlt die mit der Gasströmung in Berührung kommenden Brennerteile besser.

Die Ausführungsvariante mit den geneigten Öffnung 84 ist genauso für die Gasführung 80, wie in beispielsweise in Figur 2b gezeigt, möglich, es gelten die gleichen Bemerkungen.

Es ist auch die aus Neigung der Öffnungen 84 und 85 sowie Versatz der Öffnungen 85 möglich.

Zum Schneiden strömt zunächst der Gesamtgasstrom. Danach erfolgt die Zündung des zwischen der Elektrode 30 und Düse 50 brennenden Pilotlichtbogens. Die Zündung erfolgt durch das Anlegen einer Hochspannung zwischen der Elektrode 30 und Düse 50. Die Hochspannung ionisiert das Plasmagas, so dass es elektrisch leitfähig und der Pilotlichtbogen ausgebildet wird. Berührt der Pilotlichtbogen das Werkstück, setzt der anodische Ansatzpunkt des Lichtbogens von der Düse auf das Werkstück über und es kann geschnitten werden.

Es besteht auch die Möglichkeit, den Pilotlichtbogen durch einen Kurzschluss, d.h. durch die Berührung der Elektrode 30 und Düse 50, zu zünden. Dazu sind die Düse und/oder Elektrode beweglich zueinander angeordnet, so dass sie sich vor dem Strömen des Gesamtgasstromes 200 berühren. Durch Anlegen einer Gleichspannung bildet sich ein Strom aus, der über die Düse und Elektrode fließt. Danach strömt der Gesamtgasstrom, der, wie oben beschrieben, in die Teilgasströme aufgeteilt wird. Der erste Teilgasstrom 210 (Plasmagas) sorgt dafür, das entweder die Düse nach vorne von der Elektrode weg oder die Elektrode nach hinten von der Düse weg bewegt werden. Danach bildet sich der Pilotlichtbogen aus.

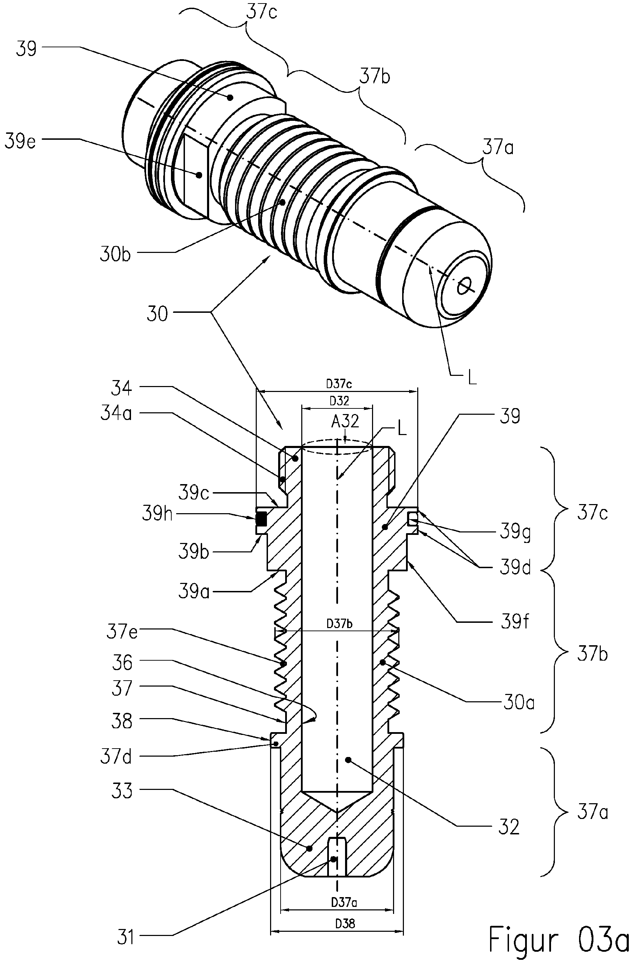

Figur 3 zeigt beispielhaft eine ähnliche Anordnung, die ebenfalls nicht unter den Wortlaut der Ansprüche fällt, wird aber als das Verständnis der Erfindung erleichternd angesehen, wie Figur 2. Zur (weiteren) Verbesserung der Kühlwirkung wurde der zweite mittlere Abschnitt 37b der Außenfläche 37 so gestaltet, dass der vorbeiströmende Teilgasstrom 230 durch ein Gewinde stärker verwirbelt und dadurch die Kühlung weiter verbessert wird.

Figur 3a zeigt die in dem in Figur 3 gezeigten Plasmabrenner 10 eingesetzte Elektrode 30, wobei die obere Abbildung eine perspektivische und die untere Abbildung eine geschnittene Darstellung (Längsschnitt) ist. Sie ist ähnlich gestaltet wie die Elektrode in Figur 2a. Im Unterschied dazu ist der mittlere zweite Abschnitt 37b der Außenfläche 37 so gestaltet, dass im eingebauten Zustand der vorbeiströmende Teilgasstrom 230 durch ein Gewinde stärker verwirbelt und dadurch die Kühlung weiter verbessert wird.

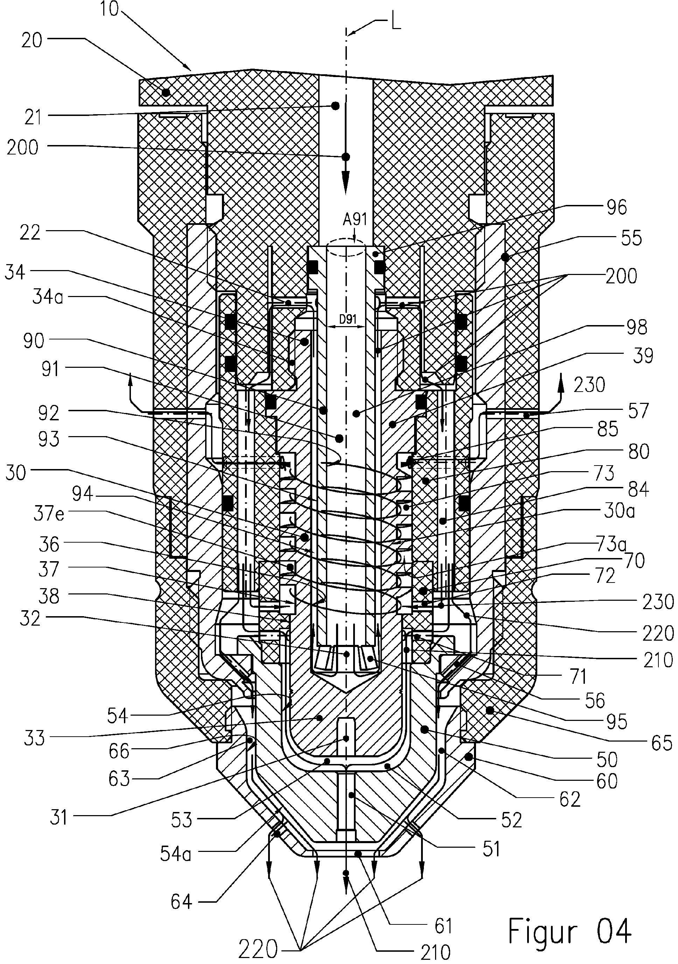

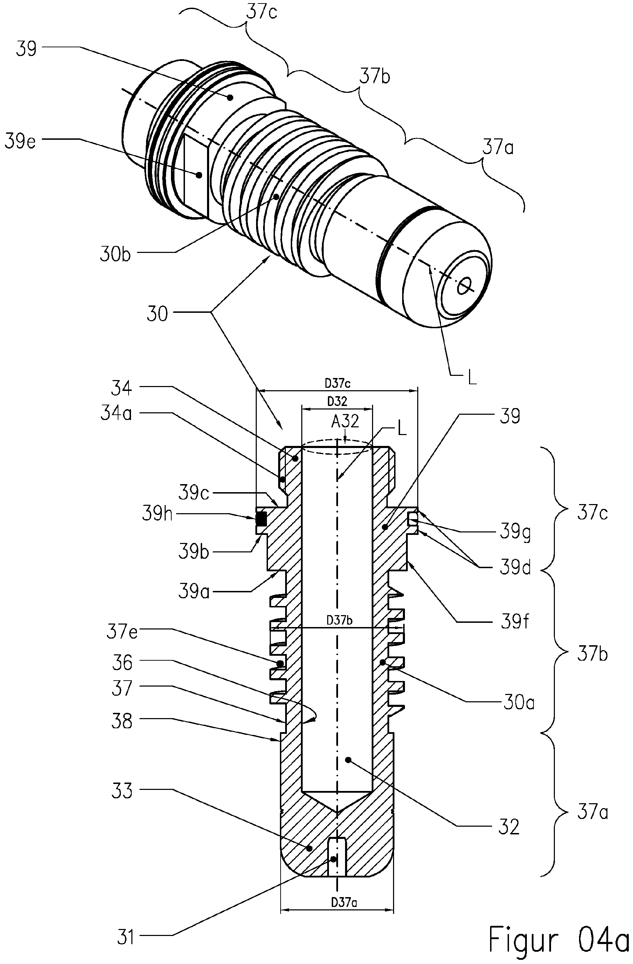

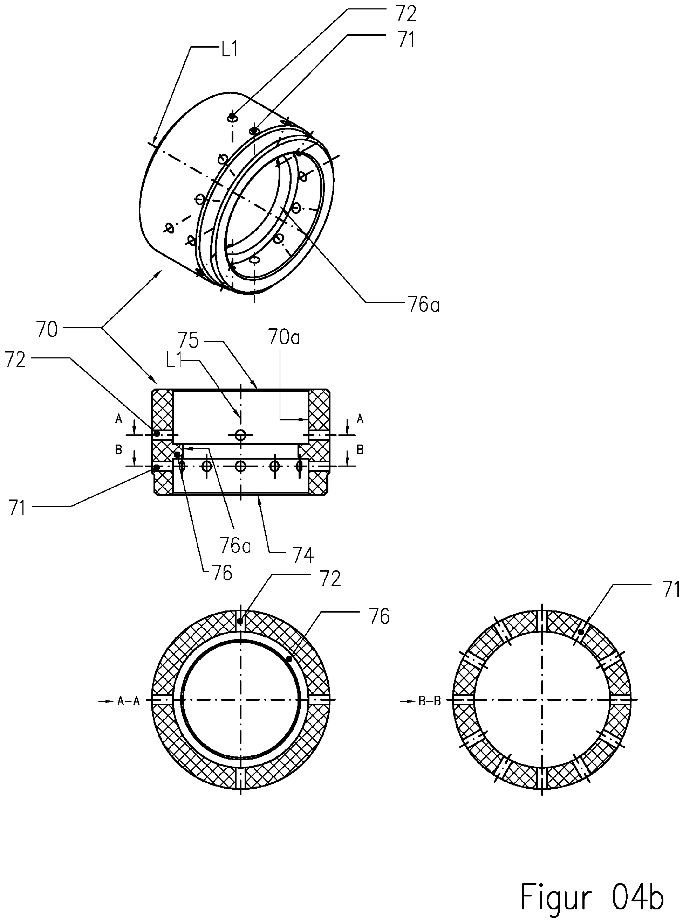

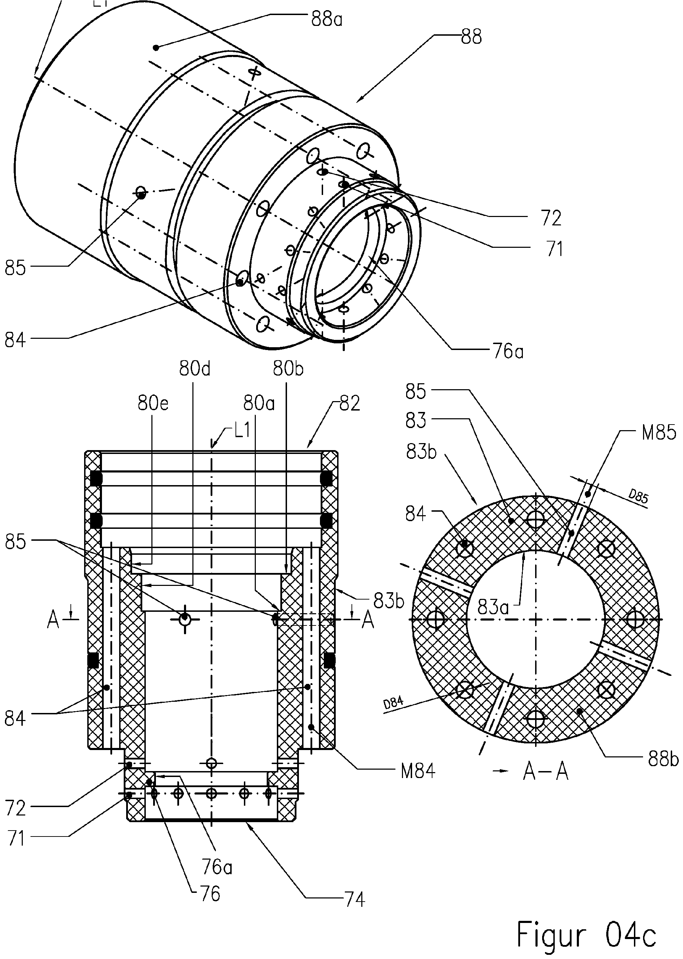

Figur 4 zeigt eine weitere Anordnung, die nicht unter den Wortlaut der Ansprüche fällt, wird aber als das Verständnis der Erfindung erleichternd angesehen, ähnlich wie Figur 2. Zur (weiteren) Verbesserung der Kühlwirkung wurde der mittlere zweite Abschnitt 37b der Außenfläche 37 so gestaltet, dass der Teilgasstrom 230 durch eine spiralförmige Nut 37e geführt und so länger mit der Oberfläche des mittleren zweiten Abschnitts 37b in Kontakt bleibt und dadurch die Kühlung weiter verbessert wird. Es ist auch die Anordnung von zwei oder mehreren parallel verlaufenden spiralförmigen Nuten möglich.

Weiterhin weist im Gegensatz zu Figur 2 die Elektrode 30 keinen Vorsprung 37d auf der Außenfläche 37 zwischen dem ersten vorderen Abschnitt 37a und dem zweiten mittleren Abschnitt 37b der Außenfläche 37 der Elektrode 30 auf. Die Zentrierfläche 38 ist hier Bestandteil des ersten vorderen Abschnitts 37a.

Figur 4a zeigt die in dem in Figur 4 gezeigten Plasmabrenner 10 eingesetzte Elektrode 30, wobei die obere Abbildung eine perspektivische und die untere Abbildung eine geschnittene Darstellung (Längsschnitt) ist. Sie ist ähnlich gestaltet wie die Elektrode in Figur 3a. Im Unterschied dazu ist der zweite mittlere Abschnitt 37b der Außenfläche 37 so gestaltet, dass im eingebauten Zustande der Teilgasstrom 230 durch eine spiralförmige Nut 37e geführt und so länger mit der Oberfläche des zweiten mittleren Abschnitts 37b in Kontakt bleibt und dadurch die Kühlung weiter verbessert wird. Weiterhin weist im Gegensatz zu Figur 2a die Elektrode 30 keinen Vorsprung 37d auf der Außenfläche 37 zwischen dem ersten vorderen Abschnitt 37a und dem zweiten mittleren Abschnitt 37b der Außenfläche 37der Elektrode 30 auf. Die Zentrierfläche 38 ist hier Bestandteil des ersten vorderen Abschnitts 37a.

Figur 4b zeigt die vordere Gasführung 70, wobei die obere Abbildung eine perspektivische, die mittlere Abbildung den Längsschnitt, die untere linke Abbildung die Schnitt durch die Ebene A-A und die untere rechte Abbildung die Schnitt durch die Ebene B-B zeigt. Sie unterscheidet sich von der in Figur 2c gezeigten Gasführung in dem auf der Innenfläche 70a vorhanden Vorsprung 76 mit der Innenfläche 76a. Diese Innenfläche 76a liegt im eingebauten Zustand der äußeren Zentrierfläche 38, die Bestandteil des ersten vorderen Abschnitts 37a der Elektrode 30 ist, gegenüber. Durch diese beiden Zentrierflächen werden die Gasführung 80 und die Elektrode 30 radial zur Längsachse zueinander ausgerichtet und zentriert.

Es ist aber möglich, die Gasführungen 70 und 80 aus einem Teil herzustellen. Figur 4c zeigt eine solche einteilige Gasführung 88.

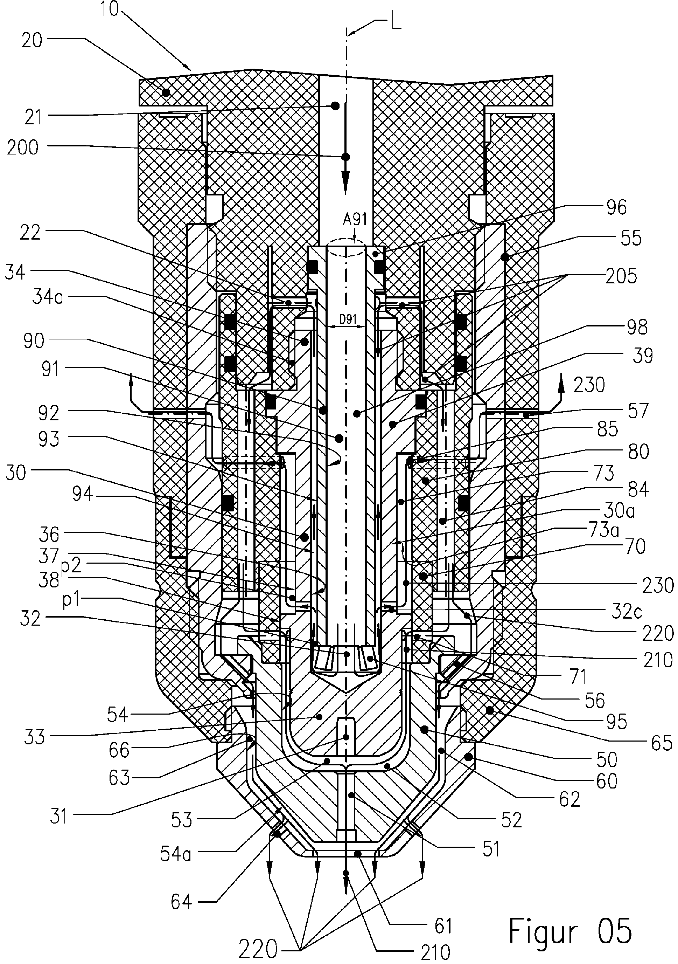

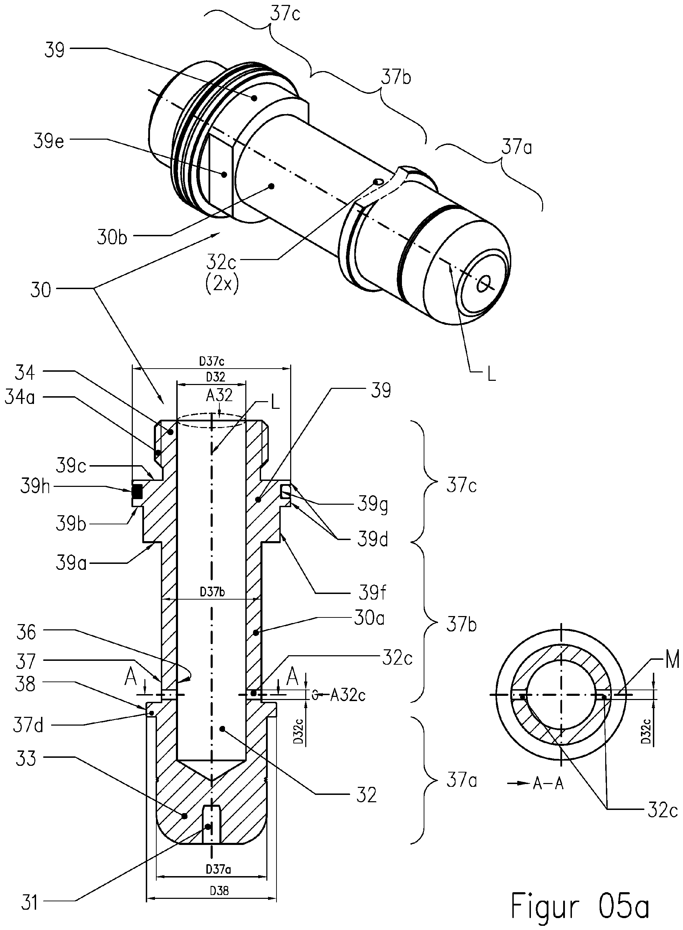

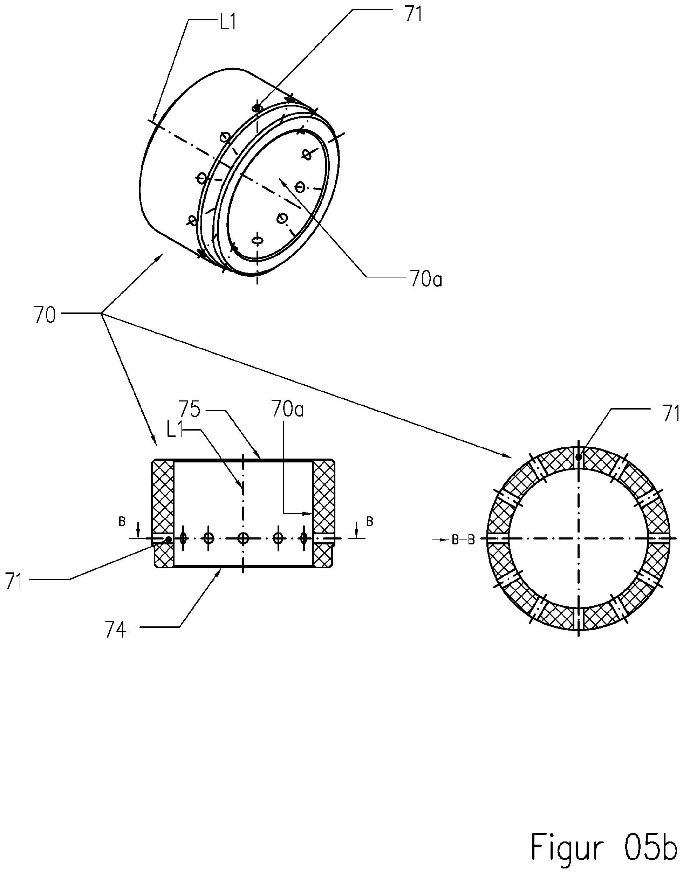

Figur 5 zeigt beispielhaft eine Variante eines Plasmabrenners, die nicht unter den Wortlaut der Ansprüche fällt, wird aber als das Verständnis der Erfindung erleichternd angesehen. In der Figur 5a sind Einzelheiten der darin eingesetzten Elektrode 30 und in der Figur 5b Einzelheiten der darin eingesetzten vorderen Gasführung 70 gezeigt. Die hintere Gasführung 80 ist mit der in Figur 2b gezeigten identisch.

Der gezeigte Plasmabrenner unterscheidet sich von dem in Figur 2 gezeigten durch eine andere Elektrode 30 und eine andere vordere Gasführung 70. Damit verbunden ist die Veränderung Führung des Gesamtgasstromes 200 und die Aufteilung in die Teilgasströme 210, 220 und 230.

Der Hohlraum 32 der Elektrode 30 erstreckt sich entlang der Längsachse L bis in die Nähe des Übergangs zwischen dem vorderen ersten Abschnitt 37a und dem mittleren zweiten Abschnitt 37b. Vom Hohlraum 32 bzw. der Innenfläche 36 der Elektrode 30 führen in diesem Falle zwei Öffnungen 32c durch die Elektrodenwand 30a im zweiten mittleren Abschnitt 37b nach außen. Durch diese Öffnungen strömt der dritte Teilgasstrom 230 (Kühlgas Elektrode). Es ist aber auch eine Öffnung oder es sind auch mehr als zwei Öffnungen möglich. Die Öffnungen 32c sind hier radial zur Längsachse L angeordnet. Es ist auch ein Versatz zur Radialen möglich, um den dritten Teilgasstrom 230 im Raum 73 zwischen der Elektrode 30 und der vorderen Gasführung 70 und der hinteren Gasführung 80 rotieren zu lassen. Dies verbessert wiederum die Kühlwirkung (noch weiter).

Im gezeigten Plasmabrenner 10 wird der Gesamtgasstrom 200 durch eine Öffnung 21 im Brennerkörper 20 durch den Innenraum 91 eines Kühlrohrs 90 in den Innenraum 32 einer Elektrode 30 geleitet. Dieser trifft auf das vordere geschlossene Ende 33 der Elektrode 30, in dem sich auch der Emissionseinsatz 31 befindet. Dadurch wird dieser Abschnitt, an dem die Wärme durch den am Emissionseinsatz ansetzenden Lichtbogen (Plasmastrahl) entsteht, gut gekühlt. Der dritte Teilgasstrom 230 strömt durch die Öffnungen 32c durch die Wand 30a der Elektrode 30 nach außen.

Der im Hohlraum der Elektrode 30 verbleibende Teilgasstrom 205 strömt in dem durch die Außenfläche 93 des Kühlrohrs 90 und die Innenfläche 36 der Elektrode 30 gebildeten Raum 94 zurück und wird durch Öffnungen oder Nuten oder Kanäle 22 im Plasmabrennerkörper 20 zunächst radial zur Längsachse L in Richtung nach außen und dann durch Öffnungen 84 der hinteren Gasführung 80 in Richtung Düse 50 und Düsenschutzkappe 60 geführt. Danach erfolgt die Aufteilung des Teilgasstromes 205 in den ersten Teilgasstrom 210 für das Plasmagas und den zweiten Teilgasstrom 220 für das Kühlgas für die Düse 50 und die Düsenschutzkappe 60.

Der erste Teilgasstrom 210, d.h. in diesem Fall das Plasmagas, strömt durch Öffnungen 71 der Gasführung 70, bevor es in den Raum 53 zwischen der Düse 50 und der Elektrode 30 und letztlich aus der Düsenbohrung 51 strömt. Der erste Teilgasstrom 210 umströmt somit den ersten vorderen Abschnitt 37a der Außenfläche 37 der Elektrode 30. Im Gegensatz zur Figur 3 hat die vordere Gasführung 70 keine Öffnungen 72 für den Teilgasstrom 230 Kühlgas Elektrode, da dieser bereits durch die Öffnungen 32c der Elektrode 30 geführt wird.

Der zweite Teilgasstrom 220, d.h. in diesem Fall das Kühlgas für die Düse 50 und die Düsenschutzkappe 60, strömt durch Öffnungen oder Nuten 56 des Düsenhalters 55 bevor es in den Raum 63 zwischen der Außenfläche 54a der Düse 50 und Innenfläche 66 der Düsenschutzkappe 60 und dann aus der Düsenschutzkappenöffnung 61 und den weiteren Öffnungen 64 der Düsenschutzkappe 60 strömt.

Der dritte Teilgasstrom 230, d. h. das Kühlgas für die Elektrode 30 strömt, wie im vorherigen Absatz bereits beschrieben, durch die Öffnungen 32c der Elektrode in den durch den zweiten mittleren Abschnitt 37b der Außenfläche 37 der Elektrode 30, die vordere Gasführung 70 und die hintere Gasführung 80 gebildeten Raum 73 und durchströmt diesen. Der dritte Teilgasstrom 230 umströmt somit den zweiten mittleren Abschnitt 37b der Außenfläche 37 der Elektrode 30 in Richtung des hinteren Endes 34 der Elektrode 30. In der Nähe des hinteren offenen Endes 34 der Elektrode 30 wird der dritte Teilgasstrom 230 durch Öffnungen 85 der Gasführung 80 und die Öffnungen 57 des Düsenhalters 55 (radial) nach außen geführt.

So kühlt der Teilgasstrom 205 die Innenfläche 36 der Elektrode 30 und der dritte Teilgasstrom 230 den mittleren zweiten Abschnitt 37b der Außenfläche 37 der Elektrode 30. Durch die Verbesserung der Kühlung erhöht sich die Lebensdauer der Elektrode 30 erheblich. Zusätzlich kühlt der durch die Öffnungen 32c strömende dritte Teilgasstrom 230 die Elektrode in diesen Öffnungen und verbessert deren Kühlung. So kann zusätzlich eine gute Schnittqualität über einen längeren Zeitraum erreicht werden.

Die Figur 5a zeigt die in dem Plasmabrenner 10 eingesetzte Elektrode 30, wobei die obere Abbildung eine perspektivische und die untere linke Abbildung eine geschnittene Darstellung (Längsschnitt) und die untere rechte Abbildung ein Schnitt durch die Ebene A-A ist. Die Elektrode 30 unterscheidet sich von der in Figur 2a beschriebenen durch die sich zwischen der Innenfläche 36 und der Außenfläche 37 durch die Wand 30a im zweiten mittleren Abschnitt 37b radial zur Längsachse L erstreckenden Öffnungen 32c. Durch diese Öffnungen kann Gas vom Hohlraum 32 der Elektrode 30 nach außen strömen.

Im in den Plasmabrenner 10 eingebauten Zustand soll während des Schneidens durch die Öffnungen 32c eine möglichst hohe Strömungsgeschwindigkeit für den dritten Teilgasstrom 230 erreicht werden. Hierfür sind bei strömendem Gas (Gesamtgasstrom) ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32c zwischen dem inneren Hohlraum 32 der Elektrode 30 und dem Raum 73 zwischen der Elektrode 30 und den Gasführungen 70 und 80 notwendig. Bei strömendem Teilgasstrom 230 beträgt die Differenz zwischen dem Druck p1 im inneren Hohlraum 32 und dem Druck p2 im Raum 73 jeweils in unmittelbarer Nähe der/den Öffnungen 32c vorteilhafterweise mindestens 0,5 bar, besser jedoch 1 bar.

Das wird beispielsweise dadurch erreicht, dass sich die durch den Durchmesser D91 radial zur Längsachse L ergebende Fläche A91 des Innenraums 91 des Kühlrohrs 90 größer ist als die Summe der Flächen A32c, die sich durch den Durchmesser D32c radial zu der/den Mittelachse M der Öffnungen 32c ergeben. Die hohe Strömungsgeschwindigkeit verbessert insbesondere die Kühlwirkung in den Öffnungen 32c und auch an den Oberflächen der nachfolgenden Raumes 73, durch den der dritte Teilgasstrom 230 strömt.

Der Durchmesser D91 des Hohlraums 91 des Kühlrohrs 90 beträgt hier beispielhaft 3 mm, der Durchmesser D32c (wobei die Durchmesser auch unterschiedlich sein können) der zwei Öffnungen 32c beträgt hier 1,0 mm. Damit ergibt sich nach PI/4*D² für den Hohlraum 91 eine sich radial zur Längsachse L gebildete Fläche A91 von ca. 7 mm² und für eine Bohrung 32c eine sich radial zur Mittelachse M der Bohrung 32c gebildete Fläche A32c von ca. 0,8 mm². Zwei Bohrungen ergeben somit ca. 1,6 mm². Das Verhältnis zwischen der Fläche A91 und der Summe der beiden Flächen A32c beträgt 4,3.

Die Figur 5b zeigt die vordere Gasführung 70 der Plasmabrenner aus den Figuren 5 bis 7, wobei die obere Abbildung eine perspektivische, die untere linke Abbildung den Längsschnitt und die untere rechte Abbildung den Schnitt durch die Ebene B-B zeigt. Die vordere Gasführung 70 unterscheidet sich von der in Figur 2c beschriebenen, dass sie keine Öffnungen 72 für den dritten Teilgasstrom 230 (Kühlgas Elektrode) aufweist.

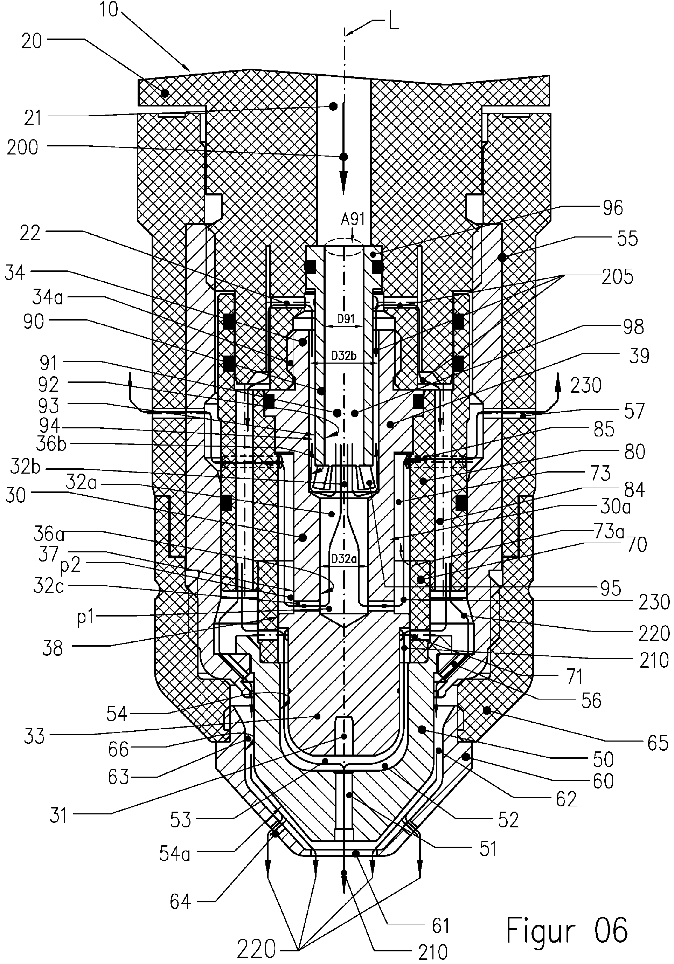

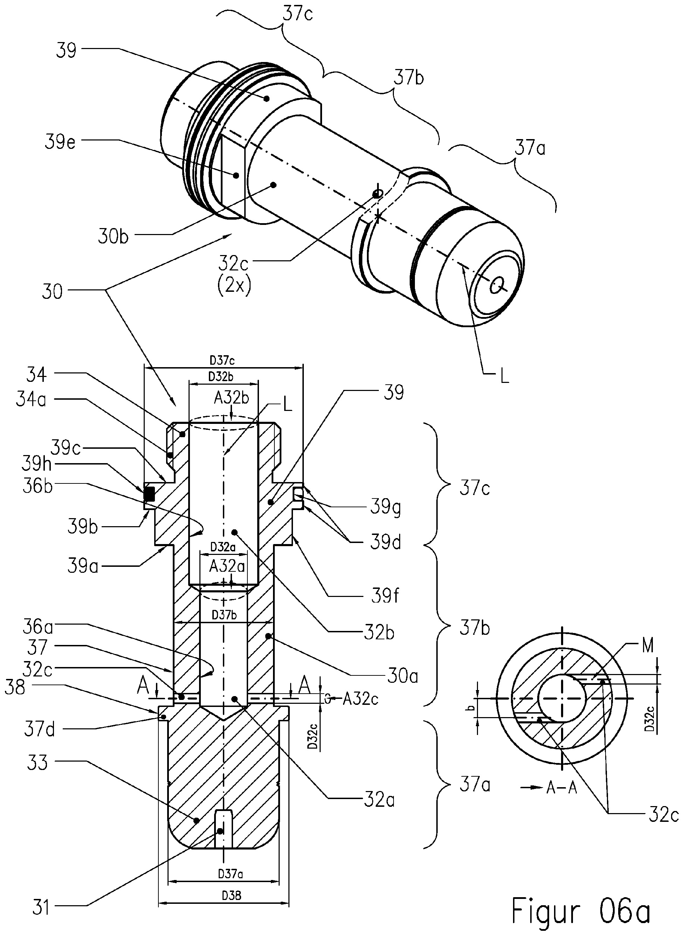

Figur 6 zeigt beispielhaft eine ähnliche Anordnung, die nicht unter den Wortlaut der Ansprüche fällt, wird aber als das Verständnis der Erfindung erleichternd angesehen, wie Figur 5. Der Hohlraum 32 der Elektrode 30 besteht hier allerdings aus zwei Hohlräumen, dem vorderen Hohlraum 32a und dem hinteren Hohlraum 32b, die sich in ihrem Durchmesser D32a und D32b unterscheiden. Der hintere Hohlraum 32b hat in diesem Beispiel einen größeren Durchmesser als der vordere Hohlraum 32a. Es sind auch weitere Hohlräume mit unterschiedlichen Durchmessern möglich. Das Kühlrohr 90 ragt mit seinem vorderen Ende 95 bis in die Nähe des Übergangs oder bis zum Übergang vom hinteren Hohlraum 32b auf den vorderen Hohlraum 32a und kann sich dort abstützen, damit es nicht weiter nach vorn rutschen kann.

Durch diese Anordnung ist die Dicke der Wand 30a der Elektrode 30 im Bereich des vorderen Hohlraums 32a größer und kann die Wärme durch Wärmeleitung vom vorderen Ende 33 der Elektrode 30 besser in Richtung des hinteren offenen Endes 34 abführen.

Figur 6a zeigt die im Plasmabrenner 10 der Figur 6 eingesetzte Elektrode 30. Sie unterscheidet sich von der Elektrode in Figur 5a durch den Hohlraum 32, hier aus zwei Hohlräumen, dem vorderen Hohlraum 32a und dem hinteren Hohlraum 32b, die sich in ihrem Durchmesser D32a und D32b unterscheiden. Der hintere Hohlraum 32b hat einen größeren Durchmesser als der vordere Hohlraum 32a. Weiterhin sind die Öffnungen 32c im zweiten mittleren Abschnitt 37b, wie im Schnitt A-A dargestellt, zur Radialen der Längsachse L um b versetzt versetzt angeordnet. Durch diese kann Gas vom Hohlraum 32a der Elektrode 30 nach außen strömen. Damit wird das durch die Öffnungen strömende Gas im eingebauten Zustand im Raum 73 in Rotation versetzt und kühlt die Oberfläche des Abschnitts 37b der Elektrode 30 besser.

Im in den Plasmabrenner 10 eingebauten Zustand soll während des Schneidens durch die Öffnungen 32c eine möglichst hohe Strömungsgeschwindigkeit für den dritten Teilgasstrom 230 erreicht werden. Hierfür sind bei strömendem Gas (Gesamtgasstrom) ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32c zwischen dem vorderen inneren Hohlraum 32a der Elektrode 30 und dem Raum 73 zwischen der Elektrode 30 und den Gasführungen 70 und 80 notwendig. Bei strömendem Teilgasstrom 230 beträgt die Differenz zwischen dem Druck p1 im vorderen inneren Hohlraum 32a und dem Druck p2 im Raum 73 jeweils in unmittelbarer Nähe der/den Öffnungen 32c vorteilhafterweise mindestens 0,5 bar, besser jedoch 1 bar.

Das wird dadurch erreicht, dass sich die durch den Durchmesser D91 radial zur Längsachse L ergebende Fläche A91 des Innenraums 91 des Kühlrohrs 90 größer ist als die Summe Flächen A32c, die sich durch den Durchmesser D32c radial zu der/den Mittelachse M der Öffnungen 32c ergeben. Die hohe Strömungsgeschwindigkeit verbessert insbesondere die Kühlwirkung in den Öffnungen 32c und auch an den Oberflächen der nachfolgenden Raumes 73, durch den der dritte Teilgasstrom 230 strömt.

Da der Durchmesser D91 des Innenraums 91 des Kühlrohrs 90 kleiner ist als der Durchmesser D32a des vorderen Hohlraums 32a der Elektrode 30, bestimmt die durch den Durchmesser D91 gebildete Fläche A91 den Druckabfall stärker als die durch den Durchmesser D32a gebildete Fläche A32a.

Der Durchmesser D91 des Hohlraums 91 des Kühlrohrs 90 beträgt hier beispielhaft 3 mm, der Durchmesser D32c (wobei die Durchmesser auch unterschiedlich sein können) der zwei Öffnungen 32c beträgt hier 1,0 mm. Damit ergibt sich nach PI/₄*D² für den Hohlraum 91 eine sich radial zu Längsachse L gebildete Fläche A91 von ca. 7 mm² und für eine Bohrung 32c eine sich radial zur Mittelachse M der Bohrung 32c gebildete Fläche A32c von ca. 0,8 mm². Zwei Bohrungen ergeben somit ca. 1,6 mm². Das Verhältnis zwischen der Fläche A91 und der Summe der beiden Flächen A32c beträgt in diesem Beispiel 4,3.

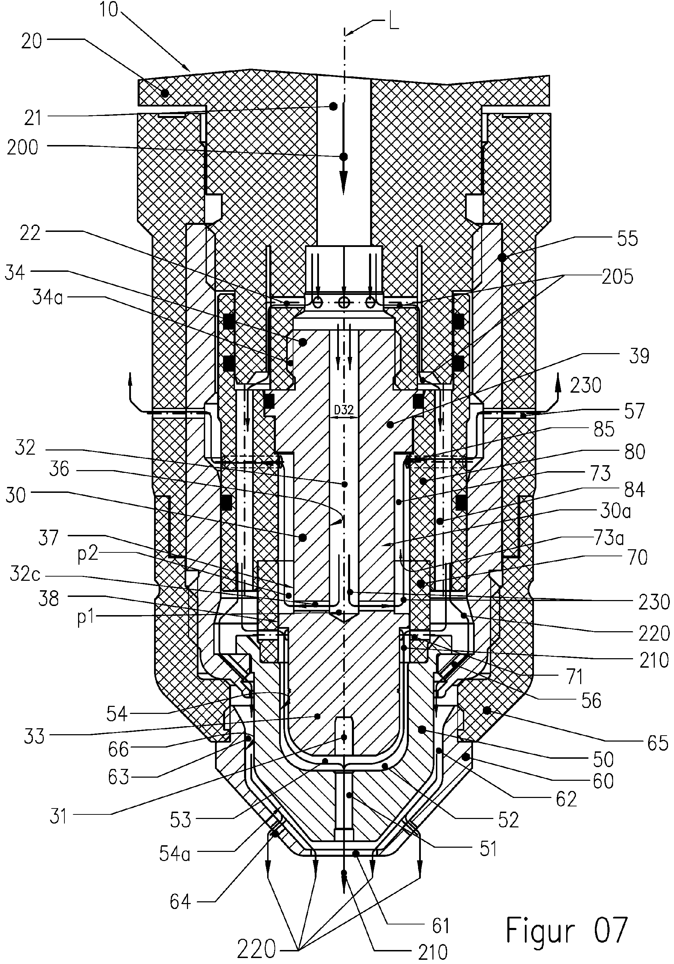

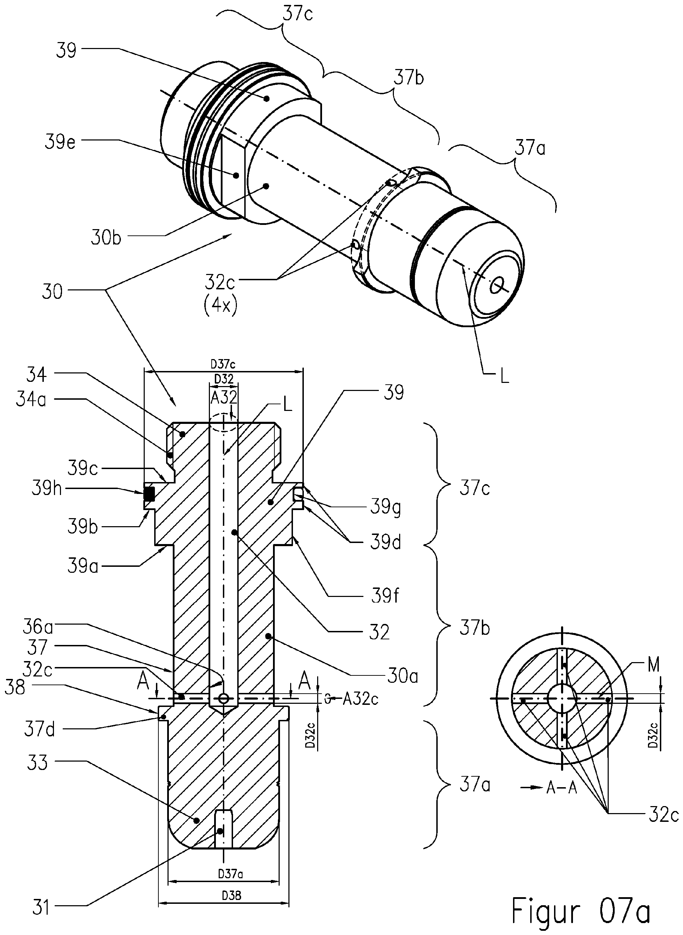

Figur 7 zeigt eine ähnliche Anordnung, die nicht unter den Wortlaut der Ansprüche fällt, wird aber als das Verständnis der Erfindung erleichternd angesehen, wie Figur 5, jedoch ohne Kühlrohr. Der Hohlraum 32 der Elektrode 30 hat einen kleineren Durchmesser D32 als der in Figur 5. Durch diese Anordnung ist die Dicke der Elektrodenwand 30a größer und kann die Wärme durch Wärmeleitung vom vorderen Ende 33 der Elektrode 30 besser in Richtung des hinteren Endes 34 abführen.

Der Gesamtgasstrom 200 strömt durch die Öffnung 21 im Plasmabrennerkörper 20 zunächst in Richtung Hohlraum 32 der Elektrode 30, wird jedoch in seiner Gesamtheit mit großer Wahrscheinlichkeit nicht den gesamten Hohlraum 32 durchströmen, da vor dem hinteren offenen Ende 34 der Elektrode 30 ein Teilgasstrom 205 durch die Öffnungen 22 des Brennerkörpers strömt und im Gegensatz zur den Figuren 5 und 6 keine Führung durch ein Kühlrohr erfolgt. Durch den Hohlraum 32 strömt zumindest der dritte Teilgasstrom 230, der wie zu Figur 5 bereits erläutert, dann durch die Öffnungen 32c der Elektrode 30 strömt.

Figur 7a zeigt die im Plasmabrenner 10 der Figur 7 eingesetzte Elektrode. Sie unterscheidet sich von der in Figur 5a gezeigten durch den kleineren Durchmesser D32 des Hohlraums 32. Weiterhin verfügt sie im mittleren zweiten Abschnitt 37b beispielhaft über 4 sich radial zur Längsachse erstreckende Öffnungen 32c, durch die Gas vom Hohlraum 32 der Elektrode 30 nach außen strömen kann.

Im in den Plasmabrenner 10 eingebauten Zustand soll während des Schneidens durch die Öffnungen 32c eine möglichst hohe Strömungsgeschwindigkeit für den Teilgasstrom 230 erreicht werden. Hierfür sind bei strömendem Gas ein geringerer Druckabfall auf dem Strömungsweg im Hohlraum 32 der Elektrode 30 zwischen dem hinteren Ende 34 und dem vorderen Ende 33 der Elektrode 30 und ein höherer Druckabfall auf dem Strömungsweg der Öffnungen 32c zwischen dem inneren Hohlraum 32 der Elektrode 30 und dem Raum 73 zwischen der Elektrode 30 und den Gasführungen 70 und 80 notwendig. Bei strömendem dritten Teilgasstrom 230 beträgt die Differenz zwischen dem Druck p1 im inneren Hohlraum 32 und dem Druck p2 im Raum 73 jeweils in unmittelbarer Nähe der/den Öffnungen 32c vorteilhafterweise mindestens 0,5 bar, besser jedoch 1 bar.

Das wird dadurch erreicht, dass sich die durch den Durchmesser D32 radial zur Längsachse L ergebende Fläche A32 des Hohlraums 32 der Elektrode 30 größer ist als die Summe der Flächen A32c, die sich durch den Durchmesser D32c radial zu der/den Mittelachse M der Öffnungen 32c ergeben. Die hohe Strömungsgeschwindigkeit verbessert insbesondere die Kühlwirkung in den Öffnungen 32c und auch an den Oberflächen der nachfolgenden Raumes 73, durch den der dritte Teilgasstrom 230 strömt.

Der Durchmesser D32 des Innenraums 32 der Elektrode 30 beträgt hier beispielhaft 2,5 mm, der Durchmesser D32c der zwei Öffnungen 32c beträgt hier 0,8 mm. Damit ergibt sich nach PI/₄*D² für den Hohlraum 32 eine sich radial zu Längsachse L gebildete Fläche A32 von ca. 5 mm² und für eine Bohrung 32c eine sich radial zur Mittelachse M der Bohrung 32c gebildete Fläche A32c von ca. 0,5 mm². Vier Bohrungen ergeben somit ca. 2 mm². Das Verhältnis zwischen der Fläche A32 und der Summe der vier Flächen A32c beträgt in diesem Beispiel 2,5.

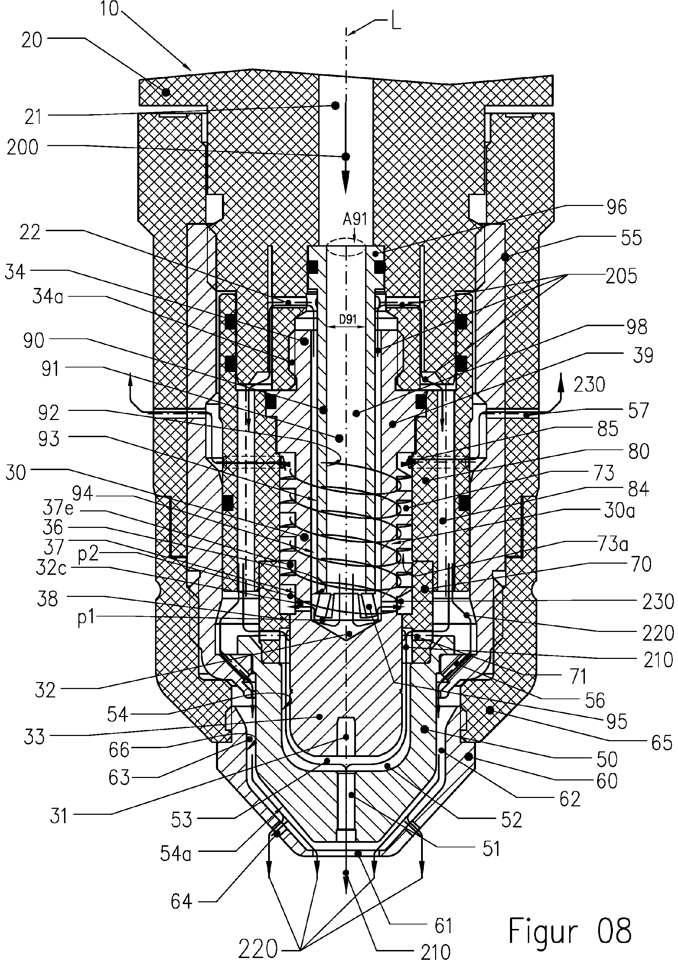

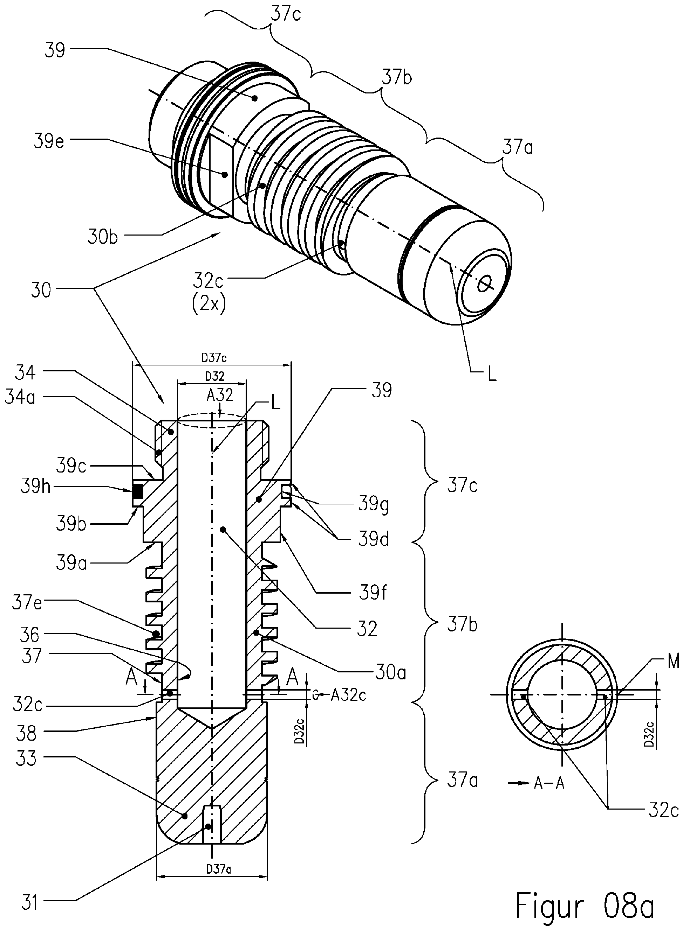

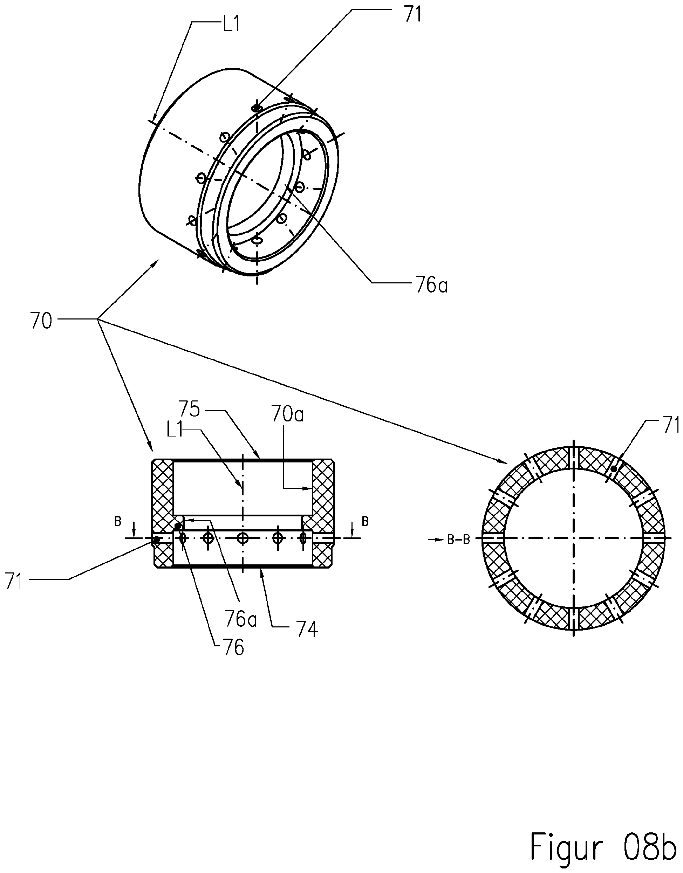

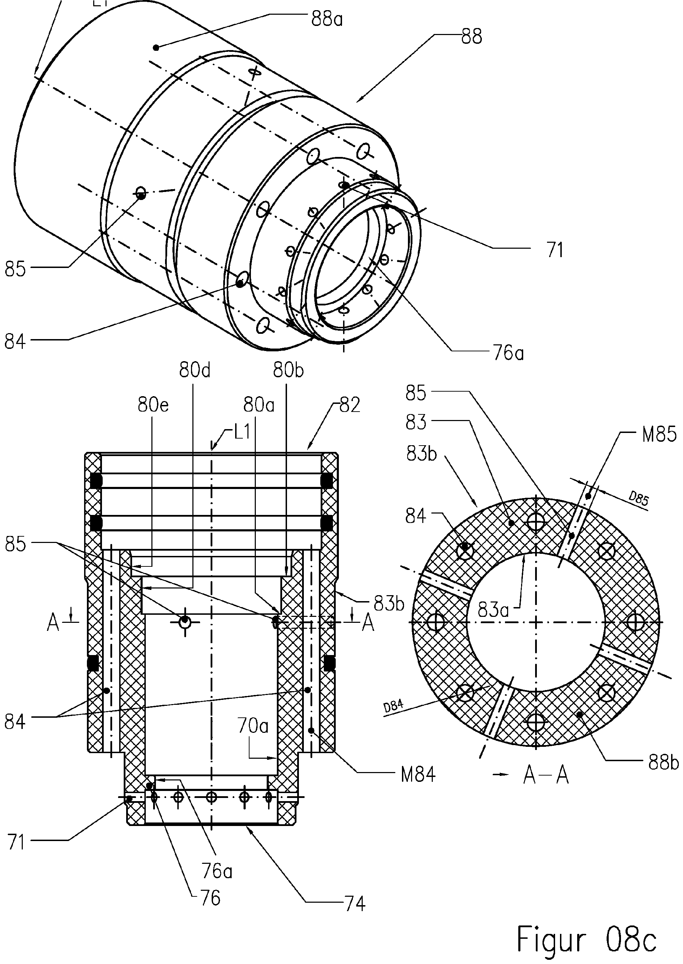

Figur 8 zeigt eine Anordnung ähnlich wie Figur 5, die aber unter den Wortlaut der Ansprüche fällt. Zur (weiteren) Verbesserung der Kühlwirkung wurde der mittlere zweite Abschnitt 37b der Außenfläche 37 so gestaltet, dass der dritte Teilgasstrom 230 durch eine spiralförmige Nut 37e geführt und so länger mit der Oberfläche des mittleren zweiten Abschnitts 37b in Kontakt bleibt und dadurch die Kühlung weiter verbessert wird. Es ist auch die Anordnung von zwei oder mehreren parallel verlaufenden spiralförmigen Nuten oder mehrgängige Nuten möglich.

Weiterhin weist im Gegensatz zu Figur 5 die Elektrode 30 keinen Vorsprung 37d auf der Außenfläche 37 zwischen dem ersten vorderen Abschnitt 37a und dem zweiten mittleren Abschnitt 37b der Außenfläche 37 der Elektrode 30 auf. Die Zentrierfläche 38 ist hier Bestandteil des ersten vorderen Abschnitts 37a.

Die Figur 8a zeigt die in dem Plasmabrenner 10 eingesetzte Elektrode 30, wobei die obere Abbildung eine perspektivische und die untere linke Abbildung eine geschnittene Darstellung (Längsschnitt) und die untere rechte Abbildung ein Schnitt durch die Ebene A-A ist.

Im Unterschied zu Figur 5a ist der zweite mittlere Abschnitt 37b der Außenfläche 37 so gestaltet, dass im eingebauten Zustand der dritte Teilgasstrom 230 durch eine spiralförmige Nut 37e geführt und so länger mit der Oberfläche des zweiten mittleren Abschnitts 37b in Kontakt bleibt und dadurch die Kühlung weiter verbessert wird. Weiterhin weist im Gegensatz zu Figur 5a die Elektrode 30 keinen Vorsprung 37d auf der Außenfläche 37 zwischen dem ersten vorderen Abschnitt 37a und dem zweiten mittleren Abschnitt 37b der Außenfläche 37 der Elektrode 30 auf. Die Zentrierfläche 38 ist hier Bestandteil des ersten vorderen Abschnitts 37a.

Die Elektrode 30 verfügt über zwei sich zwischen der Innenfläche 36 und der Außenfläche 37 im zweiten mittleren Abschnitt 37b durch die Elektrodenwand 30a radial zur Längsachse L erstreckende Öffnungen 32c. Durch diese Öffnungen kann Gas vom Hohlraum 32 der Elektrode 30 nach außen strömen.

Für die Durchmesser D32 und D32c, die sich daraus ergebenden Flächen A32 und A32c sowie die Drücke p1 und p2 gelten die zu Figur 5a gemachten Aussagen.

Die in den Figuren 5 bis 8 gezeigten Anordnungen können mit Elektroden 30, die unterschiedliche Oberfläche im Abschnitt 37b aufweisen, wie diese beispielsweise in der Figur 3 gezeigt ist, ausgestattet sein.

Figur 8b zeigt die vordere Gasführung 70, wobei die obere Abbildung eine perspektivische Abbildung, die untere linke Abbildung den Längsschnitt und die untere rechte Abbildung die Schnitt durch die Ebene B-B zeigt. Sie unterscheidet sich von der in Figur 5b gezeigten Gasführung in dem auf der Innenfläche 70a vorhandenen Vorsprung 76 mit der Innenfläche 76a. Diese Innenfläche 76a liegt im eingebauten Zustand der Außenfläche 38, die Bestandteil des ersten vorderen Abschnitts 37a der Elektrode 30 ist, gegenüber. Durch diese beiden Zentrierflächen werden die Gasführung 70 und die Elektrode 30 radial zur Längsachse zueinander ausgerichtet und zentriert.

Es ist auch möglich, die in den Figuren 2b und 8b gezeigten Gasführungen 70 und 80 aus einem Teil herzustellen. Figur 8c zeigt eine solche einteilige Gasführung 88, die die Merkmale dieser Gasführungen 70 und 80 aufweist.

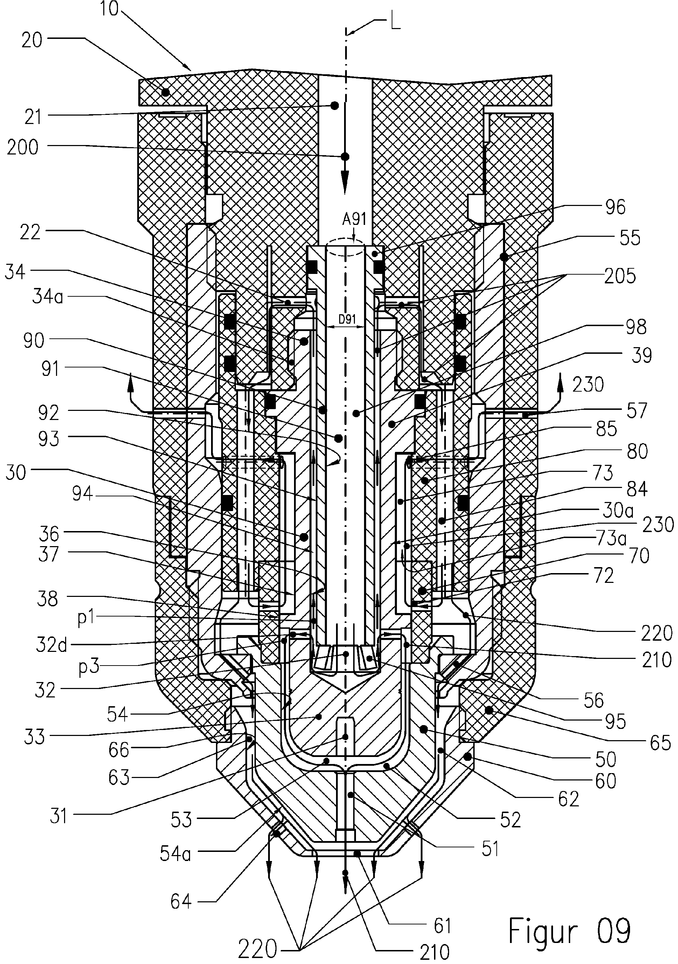

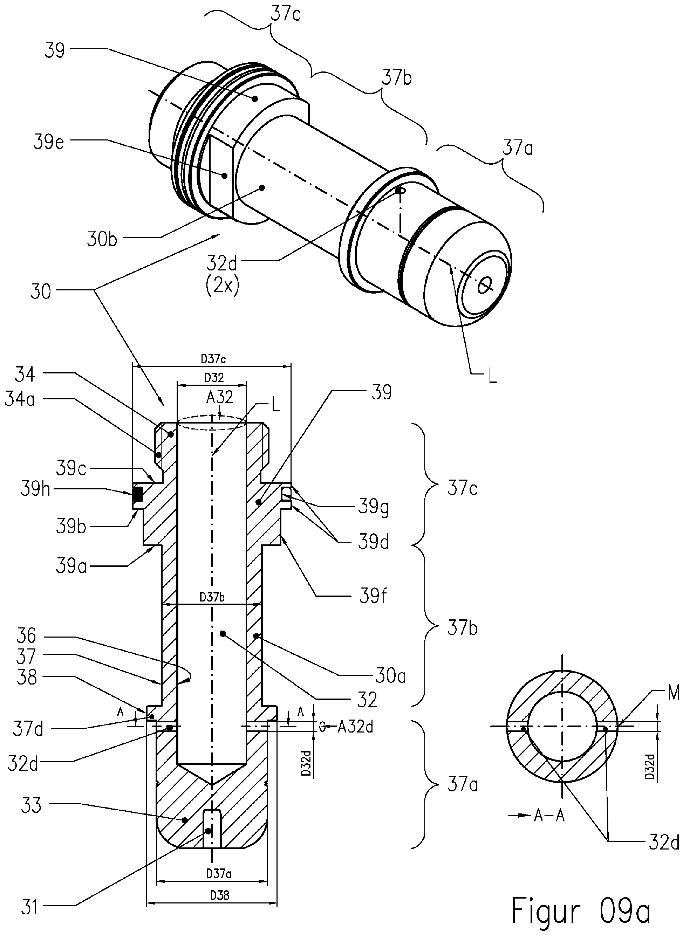

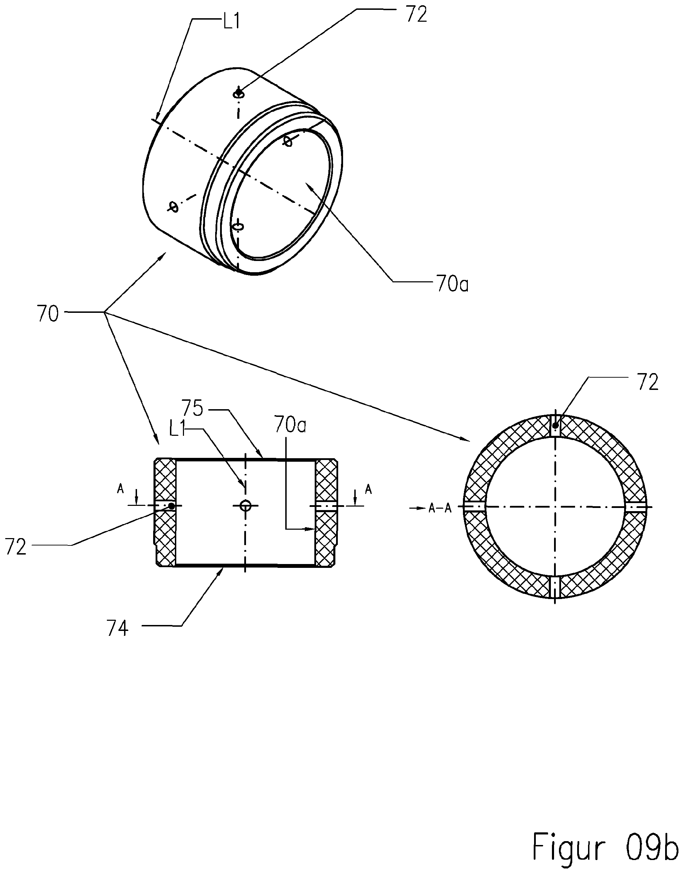

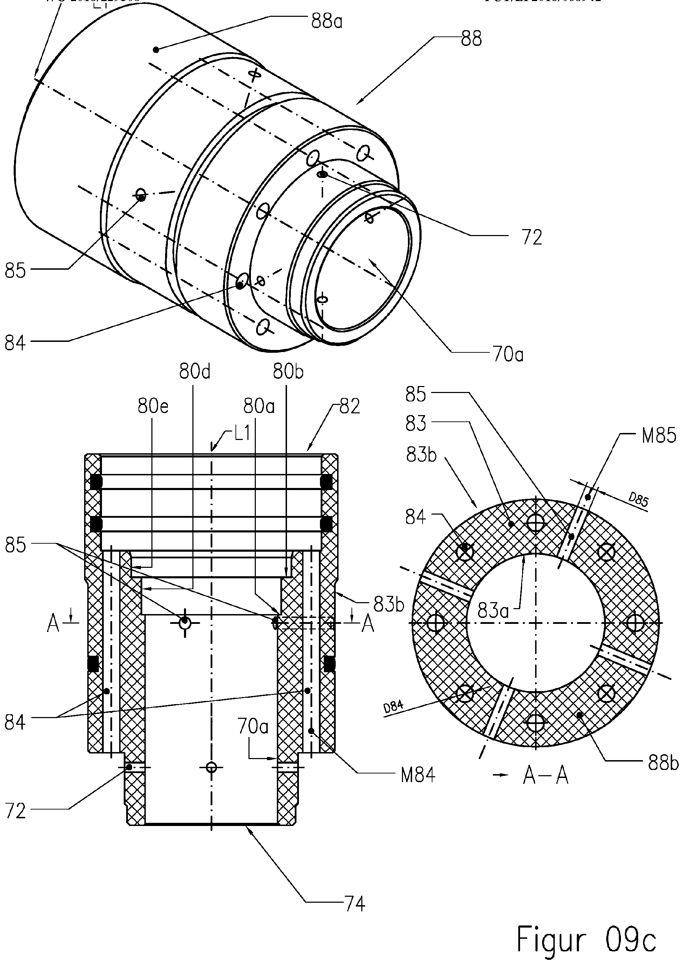

Figur 9 zeigt beispielhaft eine weitere Variante eines Plasmabrenners, die nicht unter den Wortlaut der Ansprüche fällt, wird aber als das Verständnis der Erfindung erleichternd angesehen.

In der Figur 9a sind Einzelheiten der darin eingesetzten Elektrode 30 und in der Figur 9b Einzelheiten der darin eingesetzten vorderen Gasführung 70 gezeigt. Die hintere Gasführung 80 ist mit der in Figur 2b gezeigten identisch.

Der gezeigte Plasmabrenner unterscheidet sich von dem in Figur 2 gezeigten durch eine andere Elektrode 30 und eine andere vordere Gasführung 70. Damit verbunden ist die Veränderung der Führung des Gesamtgasstromes 200 und des ersten Teilgasstromes 210.

Der Hohlraum 32 der Elektrode 30 erstreckt sich entlang der Längsachse L über den Übergang zwischen dem ersten vorderen Abschnitt 37a und dem zweiten mittleren Abschnitt 37b hinaus. Vom Hohlraum 32 bzw. der Innenfläche 36 der Elektrode 30 führen in diesem Falle zwei Öffnungen 32d durch die Elektrodenwand 30a im ersten vorderen Abschnitt 37a nach außen. Durch diese Öffnungen strömt der erste Teilgasstrom 210 (Plasmagas). Es ist aber auch eine Öffnung oder es sind auch mehr als zwei Öffnungen möglich. Die Öffnungen 32d sind hier radial zur Längsachse L angeordnet. Es ist auch ein Versatz zur Radialen möglich, um den ersten Teilgasstrom 210 im Raum 53 zwischen der Elektrode 30, der vorderen Gasführung 70 und der Düse 50 rotieren zu lassen. Dies verbessert die Kühlwirkung und die Schnittqualität.

Im gezeigten Plasmabrenner 10 wird der Gesamtgasstrom 200 durch eine Öffnung 21 im Brennerkörper 20 durch den Innenraum 91 eines Kühlrohrs 90 in den Innenraum 32 einer Elektrode 30 geleitet. Dieser trifft auf das vordere geschlossene Ende 33 der Elektrode 30, in dem sich auch der Emissionseinsatz 31 befindet. Dadurch wird dieser Abschnitt, an dem die Wärme durch den am Emissionseinsatz ansetzenden Lichtbogen (Plasmastrahl) entsteht, gut gekühlt. Der erste Teilgasstrom 210 strömt durch die Öffnungen 32d durch die Elektrodenwand 30a nach außen.

Der im Hohlraum 32 der Elektrode 30 verbleibende Teilgasstrom 205 strömt in dem durch die Außenfläche 93 des Kühlrohrs 90 und die Innenfläche 36 der Elektrode 30 gebildeten Raum 94 zurück und wird durch Öffnungen oder Nuten oder Kanäle 22 im Plasmabrennerkörper 20 zunächst radial zur Längsachse L in Richtung nach außen und dann durch Öffnungen 84 der hinteren Gasführung 80 in Richtung Düse 50 und Düsenschutzkappe 60 geführt. Danach erfolgt die Aufteilung des Teilgasstromes 205 in den dritten Teilgasstrom 230 für das Kühlgas Elektrode 30 und den zweiten Teilgasstrom 220 Kühlgas für die Düse 50 und die Düsenschutzkappe 60.

Der dritte Teilgasstrom 230, d.h. in diesem Fall das Kühlgas für die Elektrode 30, strömt durch Öffnungen 72 der Gasführung 70 in den durch die Elektrode 30, die vordere Gasführung 70 und die hintere Gasführung 80 gebildeten Raum 73 und durchströmt diesen. Der dritte Teilgasstrom 230 umströmt somit den mittleren zweiten Abschnitt 37b der Außenfläche 37 der Elektrode 30. In der Nähe des hinteren offenen Endes 34 der Elektrode 30 wird der dritte Teilgasstrom 230 durch Öffnungen 85 der Gasführung 80 und durch die Öffnungen 57 des Düsenhalter 55 radial nach außen geführt.

Der zweite Teilgasstrom 220, d.h. in diesem Fall das Kühlgas für die Düse 50 und die Düsenschutzkappe 60, strömt durch Öffnungen oder Nuten 56 des Düsenhalters 55, bevor es in den Raum 63 zwischen der Außenfläche 54a der Düse 50 und der Innenfläche 66 der Düsenschutzkappe 60 und dann aus der Düsenschutzkappenöffnung 61 und den weiteren Öffnungen 64 der Düsenschutzkappe 60 strömt.

Der erste Teilgasstrom 210, d. h. in diesem Fall das Plasmagas, strömt, wie im vorherigen Absatz bereits beschrieben, durch die Öffnungen 32d der Elektrode, bevor es in den Raum 53 zwischen der Düse 50 und der Elektrode 30 und letztlich aus der Düsenbohrung 51 strömt. Der erste Teilgasstrom 210 umströmt den ersten vorderen Abschnitt 37a der Außenfläche 37 der Elektrode 30.

So kühlt der Teilgasstrom 205 die Innenfläche 36 und der dritte Teilgasstrom 230 den mittleren zweiten Abschnitt 37b der Außenfläche 37 der Elektrode 30. Durch die Verbesserung der Kühlung erhöht sich die Lebensdauer der Elektrode 30 erheblich. Zusätzlich kühlt der durch die Öffnungen 32d strömende erste Teilgasstrom 210 die Elektrode in diesen Öffnungen und verbessert deren Kühlung. So kann zusätzlich eine gute Schnittqualität über einen längeren Zeitraum erreicht werden.

Die Figur 9a zeigt die in dem Plasmabrenner 10 eingesetzte Elektrode 30, wobei die obere Abbildung eine perspektivische und die untere linke Abbildung eine geschnittene Darstellung (Längsschnitt) und die untere rechte Abbildung den Schnitt durch die Ebene A-A zeigt. Die Elektrode 30 unterscheidet sich von der in Figur 2a beschriebenen u.a. durch die sich zwischen der Innenfläche 36 und der Außenfläche 37 durch die Elektrodenwand 30a im ersten vorderen Abschnitt 37a radial zur Längsachse L erstreckenden Öffnungen 32d. Durch diese Öffnungen kann Gas vom Hohlraum 32 der Elektrode 30 nach außen strömen.

Im in den Plasmabrenner 10 eingebauten Zustand soll während des Schneidens durch die Öffnungen 32d eine möglichst hohe Strömungsgeschwindigkeit für den ersten Teilgasstrom 210 erreicht werden. Hierfür sind bei strömendem Gas (Gesamtgasstrom) ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32d zwischen dem inneren Hohlraum 32 der Elektrode 30 und dem Raum 53 zwischen der Elektrode 30, der Düse 50 und der Gasführung 70 notwendig. Bei strömendem ersten Teilgasstrom 210 beträgt die Differenz zwischen dem Druck p1 im inneren Hohlraum 32 und dem Druck p3 im Raum 53 jeweils in unmittelbarer Nähe der/den Öffnungen 32d vorteilhafterweise mindestens 0,5 bar, besser jedoch 1 bar.

Das wird dadurch erreicht, dass sich die durch den Durchmesser D91 radial zur Längsachse L ergebende Fläche A91 des Innenraums 91 des Kühlrohrs 90 größer ist als die Summe Flächen A32d, die sich durch den Durchmesser D32d radial zu der/den Mittelachse M der Öffnungen 32d ergeben. Die hohe Strömungsgeschwindigkeit verbessert insbesondere die Kühlwirkung in den Öffnungen 32d und auch an den Oberflächen des nachfolgenden Raumes 53, durch den der erste Teilgasstrom 210 strömt.

Der Durchmesser D91 des Hohlraums 91 des Kühlrohrs 90 beträgt hier beispielhaft 3 mm, der Durchmesser D32d der zwei Öffnungen 32d beträgt hier 1,0 mm. Damit ergibt sich nach PI/₄*D² für den Hohlraum 91 eine radial zur Längsachse L gebildete Fläche A91 von ca. 7 mm² und für eine Bohrung 32d eine radial zur Mittelachse M der Bohrung 32d gebildete Fläche A32d von ca. 0,8 mm². Zwei Bohrungen ergeben somit ca. 1,6 mm². Das Verhältnis zwischen der Fläche A91 und der Summe der beiden Flächen A32d beträgt in diesem Beispiel 4,3.

Die Figur 9b zeigt die vordere Gasführung 70 der Plasmabrenner aus den Figuren 9 bis 11, wobei die obere Abbildung eine perspektivische, die untere linke Abbildung den Längsschnitt und die untere rechte Abbildung die Schnitt durch die Ebene A-A zeigt. Die vordere Gasführung 70 unterscheidet sich von der in Figur 2c beschriebenen, dass sie keine Öffnungen 71 für den Teilgasstrom 210 Plasmagas aufweist.

Es ist auch möglich, die in den Figuren 2b und 9b Gasführungen 70 und 80 aus einem Teil herzustellen. Figur 9c zeigt eine solche einteilige Gasführung 88, die die Merkmale dieser Gasführungen 70 und 80 aufweist.

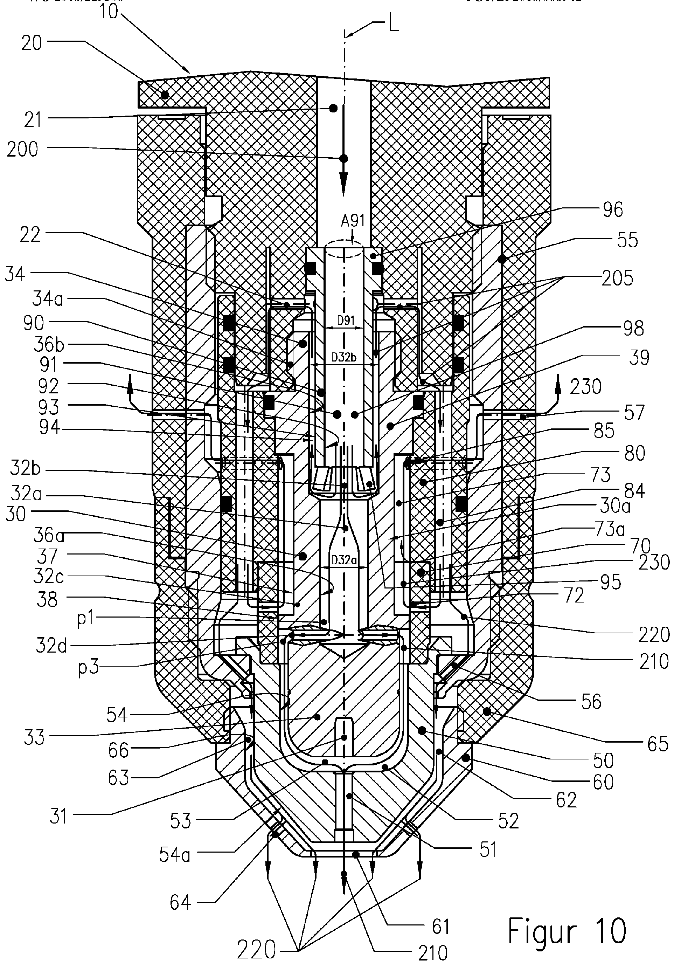

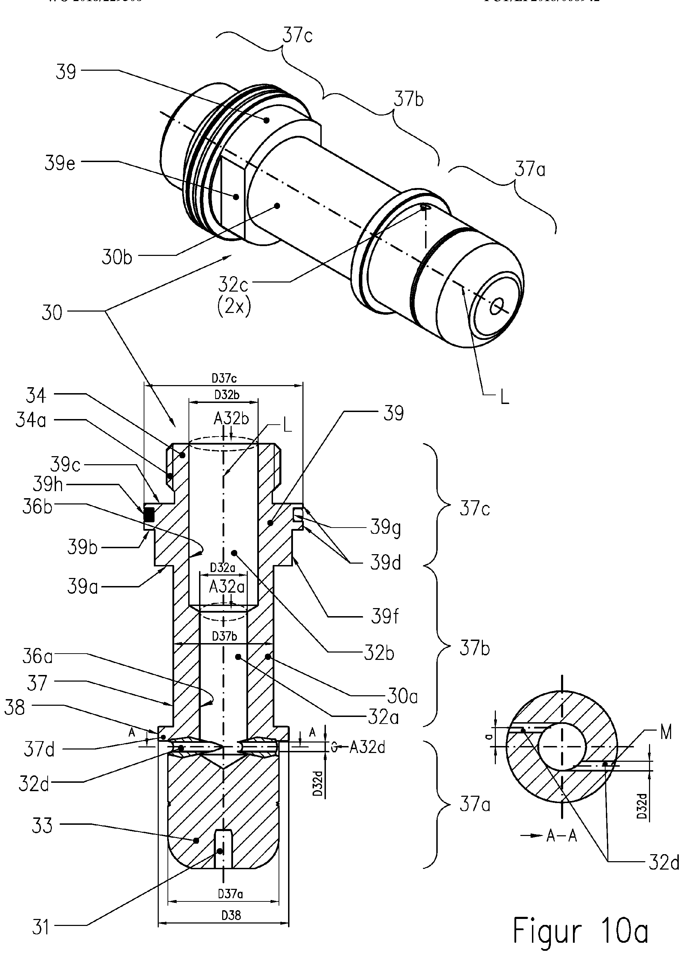

Figur 10 zeigt beispielhaft eine ähnliche Anordnung, die nicht unter den Wortlaut der Ansprüche fällt, wird aber als das Verständnis der Erfindung erleichternd angesehen, wie Figur 9. Der Hohlraum 32 der Elektrode 30 besteht hier aus zwei Hohlräumen, dem vorderen Hohlraum 32a und dem hinteren Hohlraum 32b, die sich in ihrem Durchmesser D32a und D32b unterscheiden. Der hintere Hohlraum 32b hat einen größeren Durchmesser als der vordere Hohlraum 32a. Es sind auch weitere Hohlräume mit unterschiedlichen Durchmessern möglich. Das Kühlrohr 90 ragt mit seinem vorderen Ende 95 bis in die Nähe des Übergangs oder bis zum Übergang vom hinteren Hohlraum 32b auf den vorderen Hohlraum 32a und kann sich dort abstützen, damit es nicht weiter nach vorn rutschen kann.

Durch diese Anordnung ist die Dicke der Wand 30a der Elektrode im Bereich des vorderen Hohlraums 32a größer und kann die Wärme vom vorderen Ende 33 der Elektrode 30 besser in Richtung des hinteren Endes 34 abführen.

Figur 10a zeigt die im Plasmabrenner 10 der Figur 10 eingesetzte Elektrode 30, wobei die obere Abbildung eine perspektivische und die untere linke Abbildung eine geschnittene Darstellung (Längsschnitt) und die untere rechte Abbildung ein Schnitt durch die Ebene A-A ist. Sie unterscheidet sich von der Elektrode in Figur 9a durch den Hohlraum 32, hier aus zwei Hohlräumen, den vorderen Hohlraum 32a und dem hinteren Hohlraum 32b, die sich in ihrem Durchmesser D32a und D32b unterscheiden. Der hintere Hohlraum 32b hat einen größeren Durchmesser als der vordere Hohlraum 32a. Weiterhin sind die Öffnungen 32d im ersten vorderen Abschnitt 37a, wie im Schnitt A-A dargestellt, zur Radialen der Längsachse L um a versetzt angeordnet. Durch diese kann Gas vom vorderen Hohlraum 32a der Elektrode 30 nach außen strömen. Damit wird der durch die Öffnungen strömende Teilgasstrom 210 im eingebauten Zustand in den Raum 53 zwischen der Elektrode 30, der vorderen Gasführung 70 und der Düse 50 in Rotation versetzt. Dies verbessert die Kühlwirkung und die Schnittqualität.

Im in den Plasmabrenner 10 eingebauten Zustand soll während des Schneidens durch die Öffnungen 32d eine möglichst hohe Strömungsgeschwindigkeit für den ersten Teilgasstrom 210 erreicht werden. Hierfür sind bei strömendem Gas ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32d zwischen dem inneren Hohlraum 32a der Elektrode 30 und dem Raum 53 zwischen der Elektrode 30, der Düse 50 und der Gasführungen 70 notwendig. Bei strömendem ersten Teilgasstrom 210 beträgt die Differenz zwischen dem Druck p1 im inneren Hohlraum 32a und dem Druck p3 dem Raum 53 jeweils in unmittelbarer Nähe der/den Öffnungen 32d vorteilhafterweise mindestens 0,5 bar, besser jedoch 1 bar.

Das wird dadurch erreicht, dass sich die durch den Durchmesser D91 radial zur Längsachse L ergebende Fläche A91 des Innenraums 91 des Kühlrohrs 90 größer ist als die Summe Flächen A32d, die sich durch den Durchmesser D32d radial zu der/den Mittelachse M der Öffnungen 32d ergeben. Die hohe Strömungsgeschwindigkeit verbessert insbesondere die Kühlwirkung in den Öffnungen 32d und auch an den Oberflächen der nachfolgenden Raumes 53, durch den der Teilgasstrom 210 strömt. Da der Durchmesser D91 des Innenraums 91 des Kühlrohrs 90 kleiner ist als der Durchmesser D32a des vorderen Hohlraums 32a der Elektrode 30, bestimmt die Fläche A91 den Druckabfall stärker als die Fläche A32a.

Der Durchmesser D91 des Hohlraums 91 des Kühlrohrs 90 beträgt hier beispielhaft 3 mm, der Durchmesser D32d der zwei Öffnungen 32d beträgt hier 1,0 mm. Damit ergibt sich nach PI/₄*D² für den Hohlraum 91 eine radial zur Längsachse L gebildete Fläche A91 von ca. 7 mm² und für eine Bohrung 32d eine radial zur Mittelachse M der Bohrung 32d gebildete Fläche A32d von ca. 0,8 mm². Zwei Bohrungen ergeben somit ca. 1,6 mm². Das Verhältnis zwischen der Fläche A91 und der Summe der beiden Flächen A32d beträgt in diesem Beispiel 4,3.

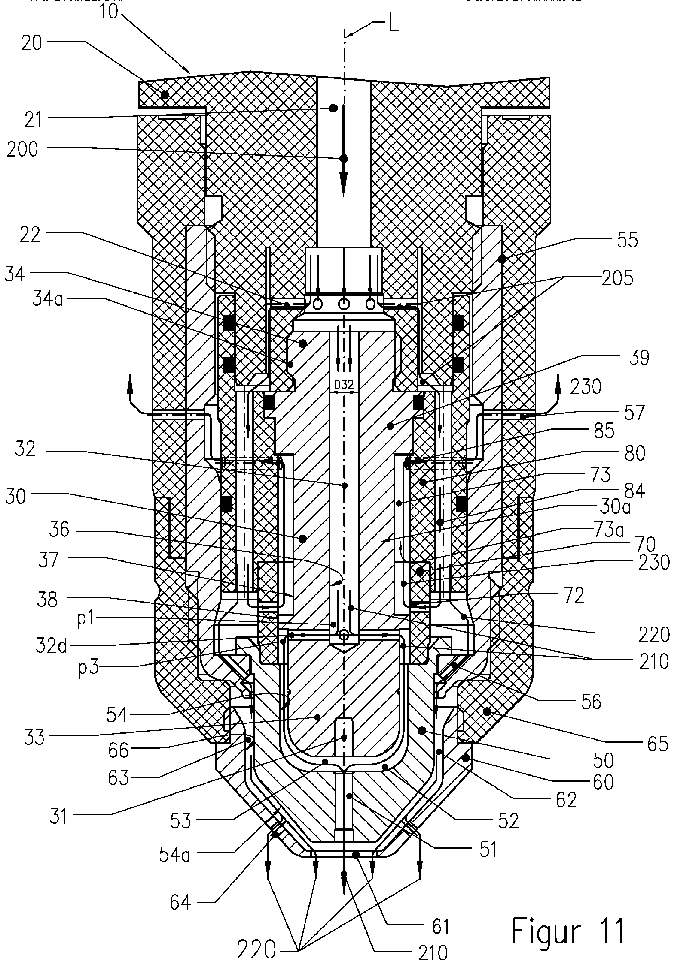

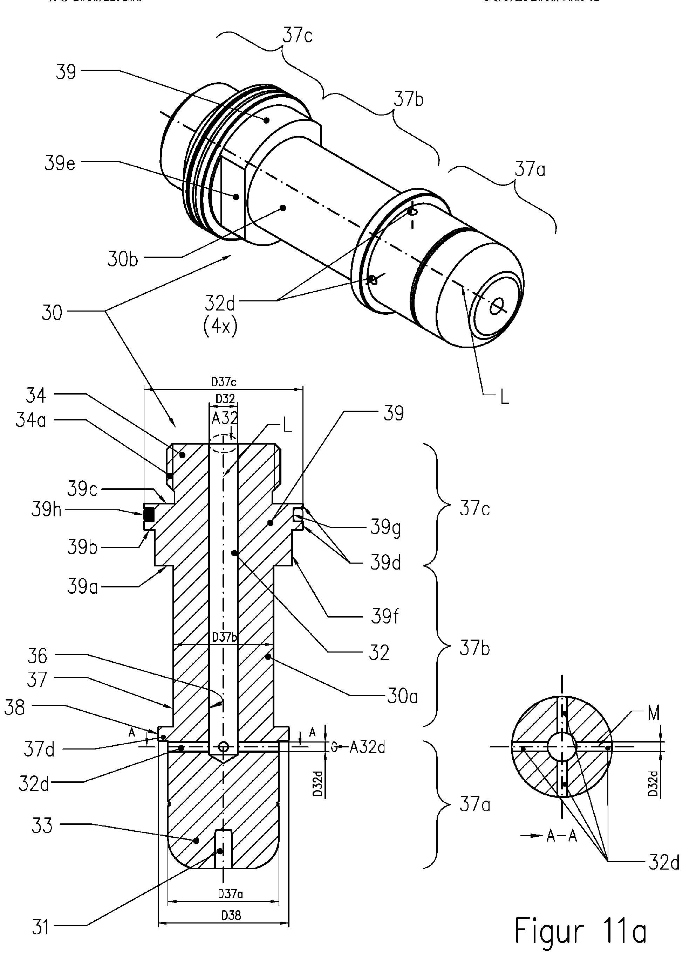

Figur 11 zeigt eine ähnliche Anordnung, die nicht unter den Wortlaut der Ansprüche fällt, wird aber als das Verständnis der Erfindung erleichternd angesehen, wie Figur 9, jedoch ohne Kühlrohr. Der Hohlraum 32 der Elektrode 30 hat einen kleineren Durchmesser D32 als der in Figur 9. Durch diese Anordnung ist die Dicke der Elektrodenwand 30a größer und kann die Wärme vom vorderen geschlossenen Ende 33 der Elektrode 30 besser in Richtung des hinteren offenen Endes 34 abführen.

Der Gesamtgasstrom 200 strömt durch die Öffnung 21 im Plasmabrennerkörper 20 zunächst in Richtung Hohlraum 32 der Elektrode 30, wird jedoch in seiner Gesamtheit mit großer Wahrscheinlichkeit nicht den gesamten Hohlraum 32 durchströmen, da vor dem hinteren Ende 34 der Elektrode 30 ein Teilgasstrom 205 durch die Öffnungen 22 des Brennerkörpers 20 strömt und keine Führung durch ein Kühlrohr, wie in Figur 9 gezeigt, erfolgt. Durch den Hohlraum 32 strömt zumindest der Teilgasstrom 210 Plasmagas, der wie zu Figur 9 bereits erläutert, durch die Öffnungen 32d der Elektrode strömt.

Figur 11a zeigt die im Plasmabrenner 10 der Figur 11 eingesetzte Elektrode, wobei die obere Abbildung eine perspektivische und die untere linke Abbildung eine geschnittene Darstellung (Längsschnitt) und die untere rechte Abbildung ein Schnitt durch die Ebene A-A ist. Sie unterscheidet sich von der in Figur 9a gezeigten durch den kleineren Durchmesser D32 des Hohlraums 32. Weiterhin verfügt sie im ersten vorderen Abschnitt 37a beispielhaft über vier sich radial zur Längsachse L erstreckende Öffnungen 32d, durch die Gas vom Hohlraum 32 der Elektrode 30 nach außen strömen kann.

Im in den Plasmabrenner 10 eingebauten Zustand soll während des Schneidens durch die Öffnungen 32d eine möglichst hohe Strömungsgeschwindigkeit für den Teilgasstrom 210 erreicht werden. Hierfür sind bei strömendem Gas ein geringerer Druckabfall auf dem Strömungsweg im Hohlraum 32 der Elektrode 30 zwischen dem hinteren Ende 34 und dem vorderen Ende 33 der Elektrode 30 und ein höherer Druckabfall auf dem Strömungsweg der Öffnungen 32d zwischen dem inneren Hohlraum 32 der Elektrode 30 und dem Raum 53 zwischen der Elektrode 30, der Düse 50 und der Gasführung 70 notwendig. Bei strömendem Teilgasstrom 210 beträgt die Differenz zwischen dem Druck p1 im inneren Hohlraum 32 und dem Druck p3 im Raum 53 jeweils in unmittelbarer Nähe der/den Öffnungen 32d vorteilhafterweise mindestens 0,5 bar, besser jedoch 1 bar.

Das wird dadurch erreicht, dass sich die durch den Durchmesser D32 radial zur Längsachse L ergebende Fläche A32 des Hohlraums 32 der Elektrode 30 größer ist als die Summe der Flächen A32d, die sich durch den Durchmesser D32d radial zu der/den Mittelachse M der Öffnungen 32d ergeben. Die hohe Strömungsgeschwindigkeit verbessert insbesondere die Kühlwirkung in den Öffnungen 32d und auch an den Oberflächen der nachfolgenden Raumes 53, durch den der erste Teilgasstrom 210 strömt.

Der Durchmesser D32 des Innenraums 32 der Elektrode 30 beträgt hier beispielhaft 2,5 mm, der Durchmesser D32d der vier Öffnungen 32d beträgt hier 0,8 mm. Damit ergibt sich nach PI/₄*D² für den Hohlraum 32 eine radial zur Längsachse L gebildete Fläche A32 von ca. 5 mm² und für eine Bohrung 32d eine radial zur Mittelachse M der Bohrung 32d gebildete Fläche A32d von ca. 0,5 mm². Vier Bohrungen ergeben somit ca. 2 mm². Das Verhältnis zwischen der Fläche A32 und der Summe der vier Flächen A32d beträgt in diesem Beispiel ca. 2,5.

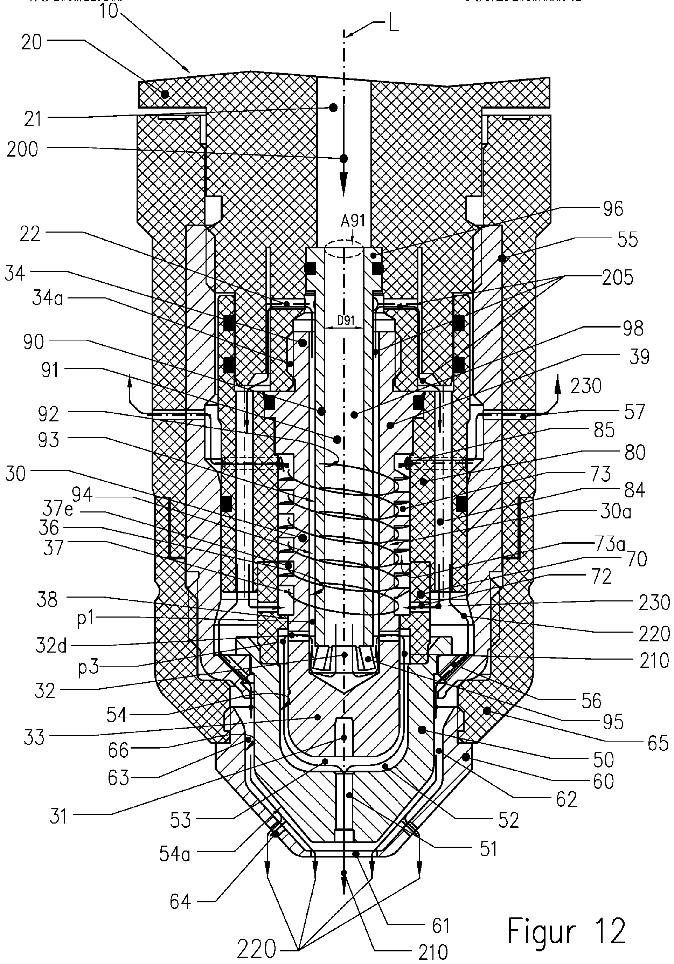

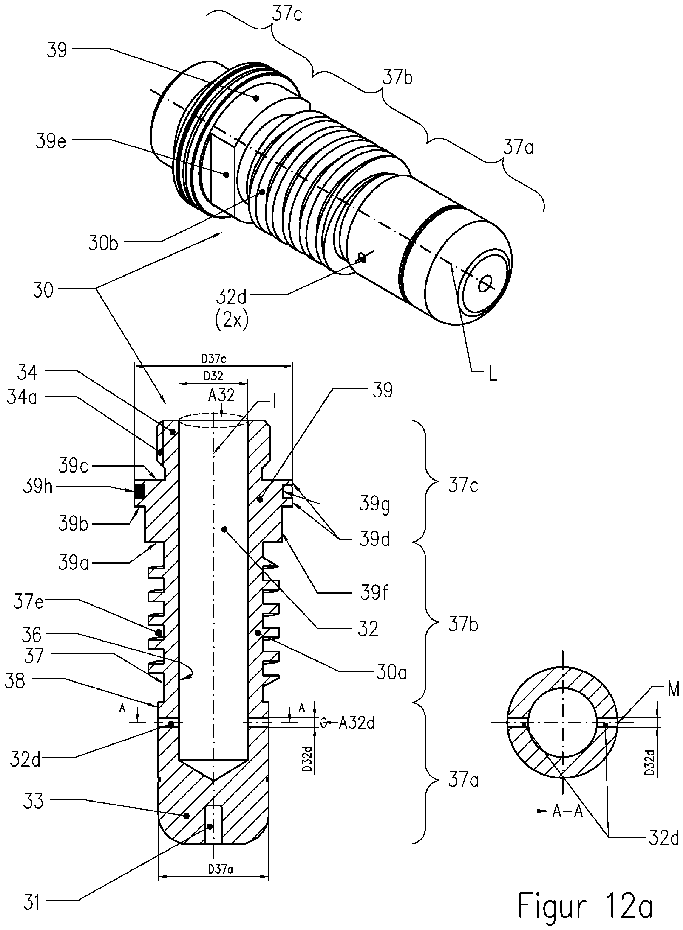

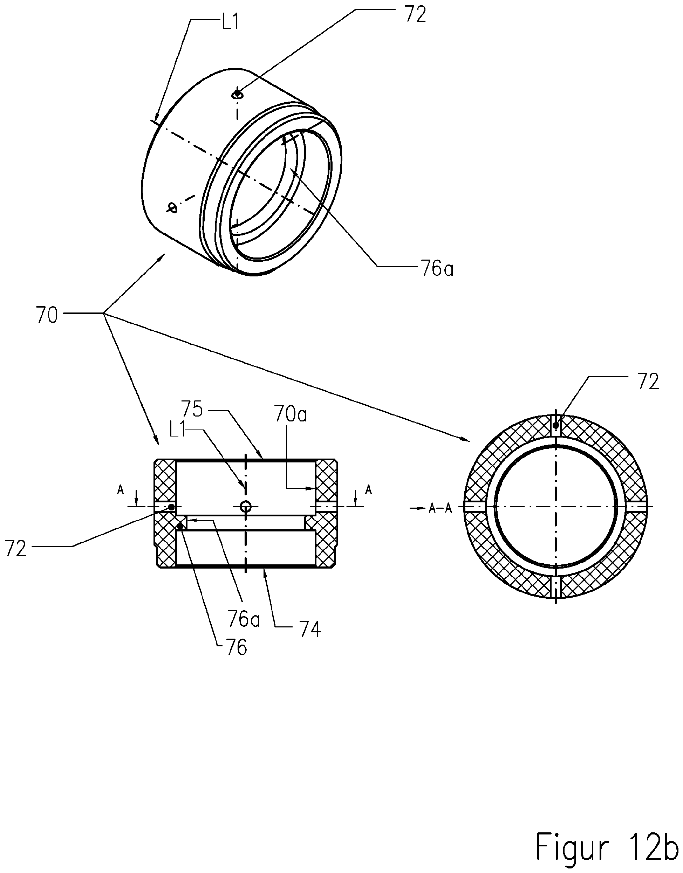

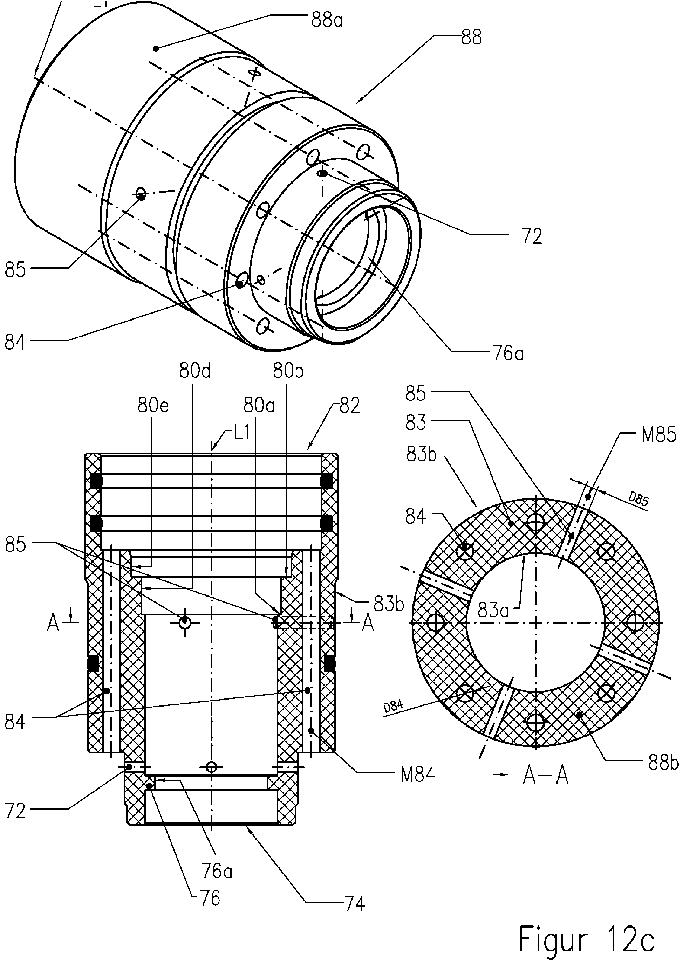

Figur 12 zeigt eine weitere Anordnung ähnlich wie Figur 9, die aber unter den Wortlaut der Ansprüche fällt. Zur Verbesserung der Kühlwirkung wurde der zweite mittlere Abschnitt 37b der Außenfläche 37 so gestaltet, dass der dritte Teilgasstrom 230 durch eine spiralförmige Nut 37e geführt und so länger mit der Oberfläche des zweiten mittleren Abschnitts 37b in Kontakt bleibt und dadurch die Kühlung weiter verbessert wird. Es ist auch die Anordnung von zwei oder mehreren parallel verlaufenden spiralförmigen Nuten möglich.

Weiterhin weist im Gegensatz zu Figur 9 die Elektrode 30 keinen Vorsprung 37d auf der Außenfläche 37 zwischen dem ersten vorderen Abschnitt 37a und dem zweiten mittleren Abschnitt 37b der Außenfläche 37der Elektrode 30 auf. Die Zentrierfläche 38 ist hier Bestandteil des ersten vorderen Abschnitts 37a.

Die Figur 12a zeigt die in dem Plasmabrenner 10 eingesetzte Elektrode 30, wobei die obere Abbildung eine perspektivische und die untere linke Abbildung eine geschnittene Darstellung (Längsschnitt) und die untere rechte Abbildung ein Schnitt durch die Ebene A-A ist.

Im Unterschied zu Figur 9a ist der mittlere zweite Abschnitt 37b der Außenfläche 37 so gestaltet, dass im eingebauten Zustand der dritte Teilgasstrom 230 durch eine spiralförmige Nut 37e geführt und so länger mit der Oberfläche des mittleren zweiten Abschnitts 37b in Kontakt bleibt und dadurch die Kühlung weiter verbessert wird. Weiterhin weist im Gegensatz zu Figur 9a die Elektrode 30 keinen Vorsprung 37d auf der Außenfläche 37 zwischen dem vorderen ersten Abschnitt 37a und dem mittleren zweiten Abschnitt 37b der Außenfläche 37 der Elektrode 30 auf. Die Zentrierfläche 38 ist hier Bestandteil des vorderen ersten Abschnitts 37a.

Die Elektrode 30 verfügt über zwei sich zwischen der Innenfläche 36 und der Außenfläche 37 im vorderen ersten Abschnitt 37a durch die Wand 30a radial zur Längsachse L erstreckende Öffnungen 32d. Durch diese Öffnungen kann Gas vom Hohlraum 32 der Elektrode 30 nach außen strömen.

Für die Durchmesser D32 und D32d, die sich daraus ergebenden Flächen A32 und A32d sowie die Drücke p1 und p3 gelten die zu Figur 9a gemachten Aussagen.

Figur 12b zeigt die vordere Gasführung 70, wobei die obere Abbildung eine perspektivische, die untere linke Abbildung den Längsschnitt und die untere rechte Abbildung die Schnitt durch die Ebene A-A zeigt. Sie unterscheidet sich von der in Figur 9b gezeigten Gasführung in dem auf der Innenfläche 70a vorhanden Vorsprung 76 mit der Innenfläche 76a. Diese Innenfläche 76a liegt im eingebauten Zustand der Außenfläche 38, die Bestandteil des ersten vorderen Abschnitts 37a der Elektrode 30 ist, gegenüber. Durch diese beiden Zentrierflächen werden die Gasführung 70 und die Elektrode 30 radial zur Längsachse zueinander ausgerichtet und zentriert.

Es ist auch möglich, die in den Figuren 2b und 12b Gasführungen 70 und 80 aus einem Teil herzustellen. Figur 12c zeigt eine solche einteilige Gasführung 88, die die Merkmale dieser Gasführungen 70 und 80 aufweist.

Die in den Figuren 9 bis 12 gezeigten Anordnungen können mit Elektroden 30, die unterschiedlichen Oberflächen im Abschnitt 37b aufweisen, wie diese beispielsweise in der Figur 3 gezeigt ist, ausgestattet sein.

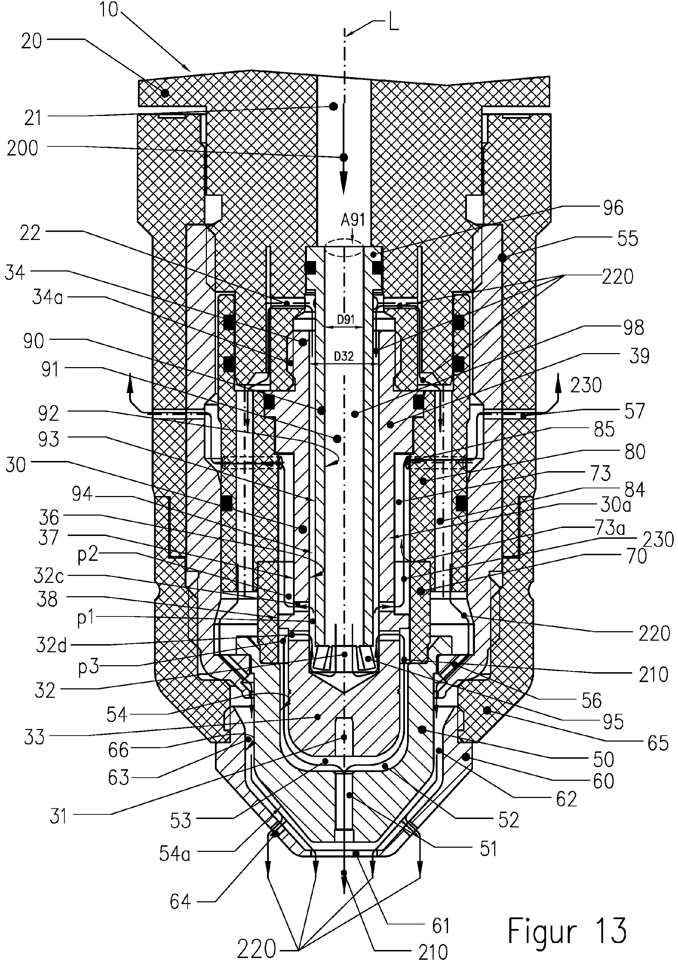

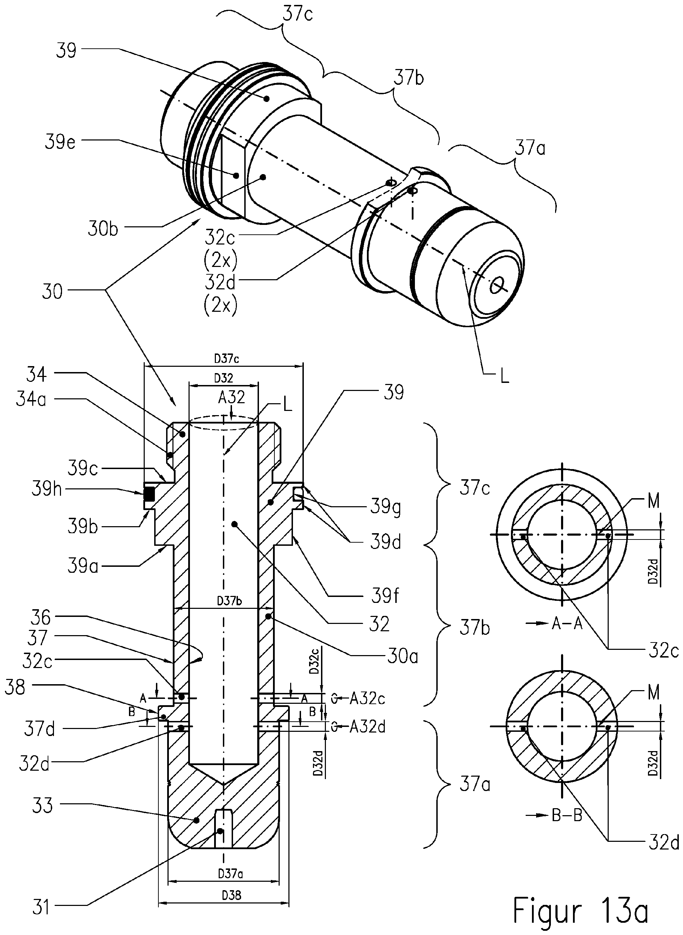

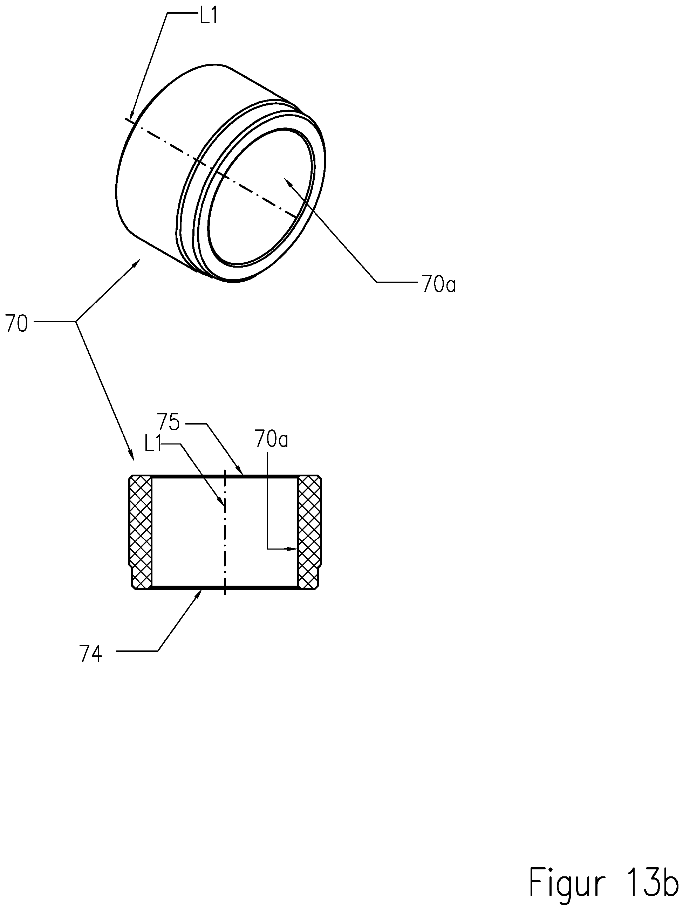

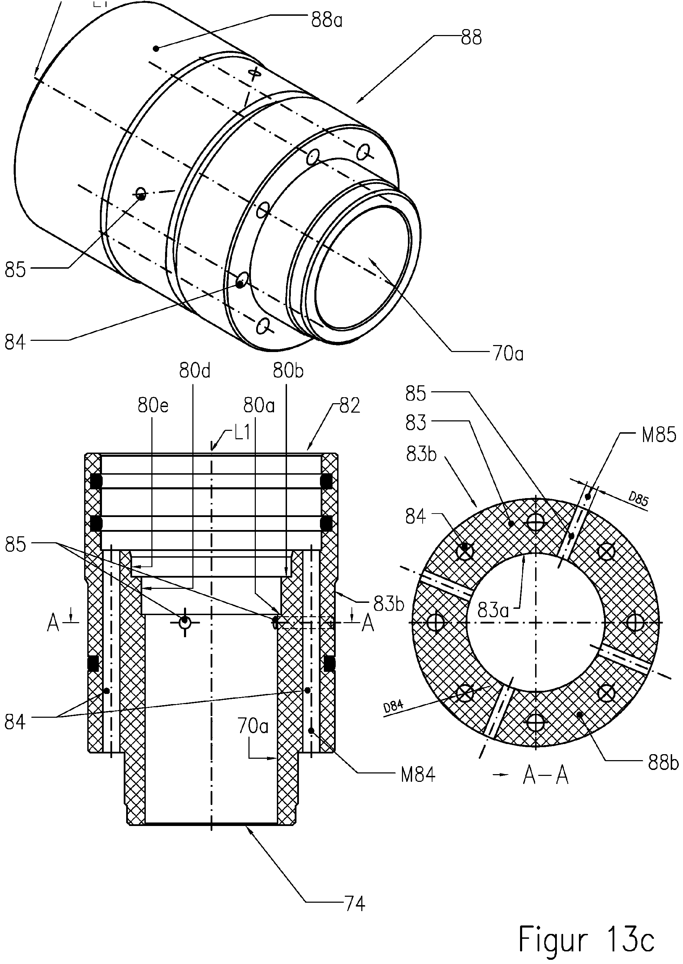

Figur 13 zeigt beispielhaft eine Variante eines Plasmabrenners 10, die nicht unter den Wortlaut der Ansprüche fällt, wird aber als das Verständnis der Erfindung erleichternd angesehen.

In der Figur 13a sind Einzelheiten der darin eingesetzten Elektrode 30 und in der Figur 13b Einzelheiten der darin eingesetzten vorderen Gasführung 70 gezeigt. Die hintere Gasführung 80 ist mit der in Figur 2b gezeigten identisch.

Der gezeigte Plasmabrenner unterscheidet sich von dem in Figur 2 gezeigten durch eine andere Elektrode 30 und eine andere vordere Gasführung 70. Damit verbunden ist die Veränderung der Führung des Gesamtgasstromes 200 und die Aufteilung in die ersten bis dritten Teilgasströme 210, 220 und 230.

Der Hohlraum 32 der Elektrode 30 erstreckt sich entlang der Längsachse L über den Übergang zwischen dem ersten vorderen Abschnitt 37a und dem zweiten mittleren Abschnitt 37b hinaus. Vom Hohlraum 32 bzw. der Innenfläche 36 der Elektrode 30 führen in diesem Falle zwei Öffnungen 32d durch die Elektrodenwand 30a im ersten vorderen Abschnitt 37a und zwei Öffnungen 32c durch die Elektrodenwand 30a im zweiten mittleren Abschnitt 37b nach außen. Durch die Öffnungen 32d strömt der Teilgasstrom 210 Plasmagas und durch die Öffnungen 32c strömt der Teilgasstrom 230 Kühlgas Elektrode. Es ist aber auch eine Öffnung oder es sind auch mehr als zwei Öffnungen möglich. Die Öffnungen 32d und 32c sind hier radial zur Längsachse L angeordnet. Es ist auch ein Versatz der Öffnungen 32d zur Radialen möglich, um den Teilgasstrom 210 im Raum 53 zwischen der Elektrode 30, der vorderen Gasführung 70 und der Düse 50 rotieren zu lassen. Dies verbessert die Kühlwirkung und die Schnittqualität. Ebenso ist auch ein Versatz der Öffnungen 32c zur Radialen möglich, um den Teilgasstrom 230 im Raum 73 zwischen der Elektrode 30 und der vorderen Gasführung 70 und der hinteren Gasführung 80 rotieren zu lassen. Dies verbessert wiederum die Kühlwirkung.

Im gezeigten Plasmabrenner 10 wird der Gesamtgasstrom 200 durch eine Öffnung 21 im Brennerkörper 20 durch den Innenraum 91 eines Kühlrohrs 90 in den Innenraum 32 einer Elektrode 30 geleitet. Dieser trifft auf das vordere geschlossene Ende 33 der Elektrode 30, in dem sich auch der Emissionseinsatz 31 befindet. Dadurch wird dieser Abschnitt, an dem die Wärme durch den am Emissionseinsatz ansetzenden Lichtbogen (Plasmastrahl) entsteht, gut gekühlt. Der dritte Teilgasstrom 230 strömt durch die Öffnungen 32c durch die Wand 30a nach außen und der erste Teilgasstrom 210 strömt durch die Öffnungen 32d durch die Elektrodenwand 30a nach außen. Der im Hohlraum der Elektrode verbleibende zweite Teilgasstrom 220 strömt in dem durch die Außenfläche 93 des Kühlrohrs 90 und die Innenfläche 36 der Elektrode 30 gebildeten Raum 94 zurück und wird durch Öffnungen oder Nuten oder Kanal 22 im Plasmabrennerkörper 20 zunächst radial zur Längsachse L in Richtung nach außen und dann durch Öffnungen 84 der hinteren Gasführung 80 in Richtung Düse 50 und Düsenschutzkappe 60 geführt.

Der zweite Teilgasstrom 220, d.h. in diesem Fall das Kühlgas für die Düse 50 und die Düsenschutzkappe 60, strömt durch Öffnungen oder Nuten 56 des Düsenhalters 55 bevor es in den Raum 63 zwischen der Düse 50 und der Düsenschutzkappe 60 und dann aus der Düsenschutzkappenöffnung 61 und den weiteren Öffnungen 64 der Düsenschutzkappe 60 strömt.

Der dritte Teilgasstrom 230, d. h. in diesem Fall das Kühlgas für die Elektrode 30, strömt, wie vorher bereits beschrieben, durch die Öffnungen 32c der Elektrode in den durch den mittleren zweiten Abschnitt 37b der Außenfläche 37 der Elektrode 30, die vordere Gasführung 70 und die hintere Gasführung 80 gebildeten Raum 73 und durchströmt diesen. Der dritte Teilgasstrom 230 umströmt somit den zweiten mittleren Abschnitt 37b der Außenfläche 37 der Elektrode 30. In der Nähe des hinteren offenen Endes 34 der Elektrode 30 wird der dritte Teilgasstrom 230 durch Öffnungen 85 der Gasführung 80 und die Öffnungen 57 des Düsenhalters 55 radial nach außen geführt.

Der erste Teilgasstrom 210, d. h. in diesem Fall das Plasmagas, strömt, wie vorher bereits beschrieben, durch die Öffnungen 32d der Elektrode bevor es in den Raum 53 zwischen der Düse 50 und der Elektrode 30 und letztlich aus der Düsenbohrung 51 strömt. Der erste Teilgasstrom 210 umströmt den vorderen ersten Abschnitt 37a der Außenfläche 37 der Elektrode 30.

Da sowohl der zweite Teilgasstrom 220 die Innenfläche 36 und der dritte Teilgasstrom 230 die Außenfläche 37b der Elektrode 30 und der erste Teilgasstrom 210 die Außenfläche 37a der Elektrode 30 kühlen, erhöht sich durch die Verbesserung der Kühlung die Lebensdauer der Elektrode 30 erheblich.

So kann zusätzlich eine gute Schnittqualität über einen längeren Zeitraum erreicht werden.

Die Figur 13a zeigt die in dem Plasmabrenner 10 eingesetzte Elektrode 30, wobei die obere Abbildung eine perspektivische und die untere linke Abbildung eine geschnittene Darstellung (Längsschnitt) und die unteren rechten Abbildungen die Schnitte durch die Ebenen A-A und B-B sind. Die Elektrode 30 unterscheidet sich von der in Figur 2a beschriebenen durch die sich zwischen der Innenfläche 36 und der Außenfläche 37 durch die Elektrodenwand 30a im mittleren zweiten Abschnitt 37b radial zur Längsachse L erstreckenden Öffnungen 32c und durch die sich ebenfalls zwischen der Innenfläche 36 und der Außenfläche 37 durch die Elektrodenwand 30a im vorderen ersten Abschnitt 37a radial zur Längsachse L erstreckenden Öffnungen 32d. Durch diese Öffnungen kann Gas vom Hohlraum 32 der Elektrode 30 nach außen strömen.

Im in den Plasmabrenner 10 eingebauten Zustand soll während des Schneidens eine möglichst hohe Strömungsgeschwindigkeit durch die Öffnungen 32c für den dritten Teilgasstrom 230 und durch die Öffnungen 32d für den ersten Teilgasstrom 210 erreicht werden. Hierfür sind bei strömendem Gas (Gesamtgasstrom) ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32c zwischen dem inneren Hohlraum 32 der Elektrode 30 und dem Raum 73 zwischen der Elektrode 30 und den Gasführungen 70 und 80 sowie ein ebenfalls höherer Druckabfall auf dem Strömungsweg der Öffnungen 32d zwischen dem inneren Hohlraum 32 der Elektrode 30 und dem Raum 53 zwischen der Elektrode 30, der Düse 50 und der Gasführung 70 notwendig. Bei strömenden ersten und dritten Teilgasströmen 210 und 230 beträgt die Differenz zwischen dem Druck p1 im inneren Hohlraum 32 und dem Druck p2 im Raum 73 sowie zwischen dem Druck p1 im inneren Hohlraum 32 und dem Druck p3 im Raum 53 jeweils in unmittelbarer Nähe der/den Öffnungen 32c und 32d vorteilhafterweise mindestens 0,5 bar, besser jedoch 1 bar.

Das wird dadurch erreicht, dass sich die durch den Durchmesser D91 radial zur Längsachse L ergebende Fläche A91 des Innenraums 91 des Kühlrohrs 90 größer ist als die Summe Flächen A32c und A32d, die sich durch den Durchmesser D32c radial zu der/den Mittelachse M der Öffnungen 32c sowie den Durchmesser D32d radial zu der/den Mittelachse M der Öffnungen 32d ergeben. Die hohe Strömungsgeschwindigkeit verbessert insbesondere die Kühlwirkung in den Öffnungen 32c und auch an den Oberflächen der nachfolgenden Raumes 73, durch den der dritte Teilgasstrom 230 strömt sowie die Kühlwirkung in den Öffnungen 32d und auch an den Oberflächen der nachfolgenden Raumes 53, durch den der erste Teilgasstrom 210 strömt.

Der Durchmesser D91 des Hohlraums 91 des Kühlrohrs 90 beträgt hier beispielhaft 3 mm, der Durchmesser D32c der zwei Öffnungen 32c beträgt hier 1,0 mm. Damit ergibt sich nach PI/₄*D² für den Hohlraum 91 eine sich radial zu Längsachse L gebildete Fläche A91 von ca. 7 mm² und für eine Bohrung 32c und eine Bohrung 32d eine sich radial zur Mittelachse M der Bohrung 32c, 32c gebildete Fläche A32c, A32d von ca. 0,8 mm². Zwei Bohrungen 32c ergeben somit ca. 1,6 mm², zwei Bohrungen 32d ergeben somit ca. 1,6 mm². Das Verhältnis zwischen der Fläche A91 und der Summe der beiden Flächen A32c beträgt in diesem Beispiel ca. 2,2.

Die Figur 13b zeigt die vordere Gasführung 70 der Plasmabrenner aus den Figuren 13 bis 17, wobei die obere Abbildung eine perspektivische und die untere linke Abbildung den Längsschnitt zeigt. Die vordere Gasführung 70 unterscheidet sich von der in Figur 2c beschriebenen, dass sie weder Öffnungen 72 für den dritten Teilgasstrom 230 (Kühlgas Elektrode) noch Öffnungen 71 für den ersten Teilgasstrom 210 (Plasmagas) aufweist.

Es ist auch möglich, die in den Figuren 2b und 13b gezeigten Gasführungen 70 und 80 aus einem Teil herzustellen. Figur 13c zeigt eine solche einteilige Gasführung 88, die die Merkmale dieser Gasführungen 70 und 80 aufweist.

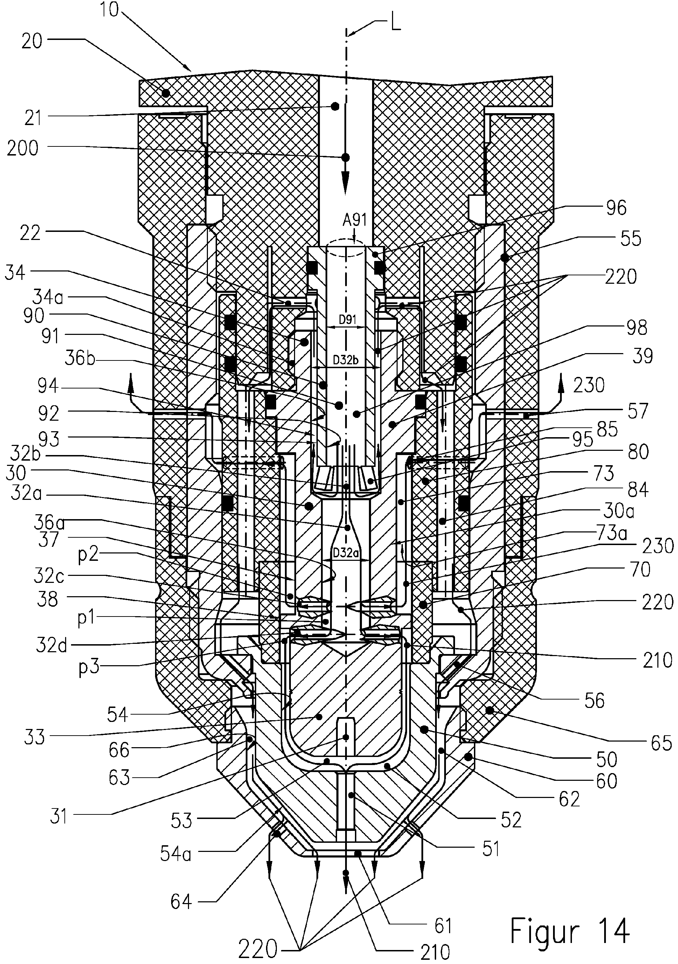

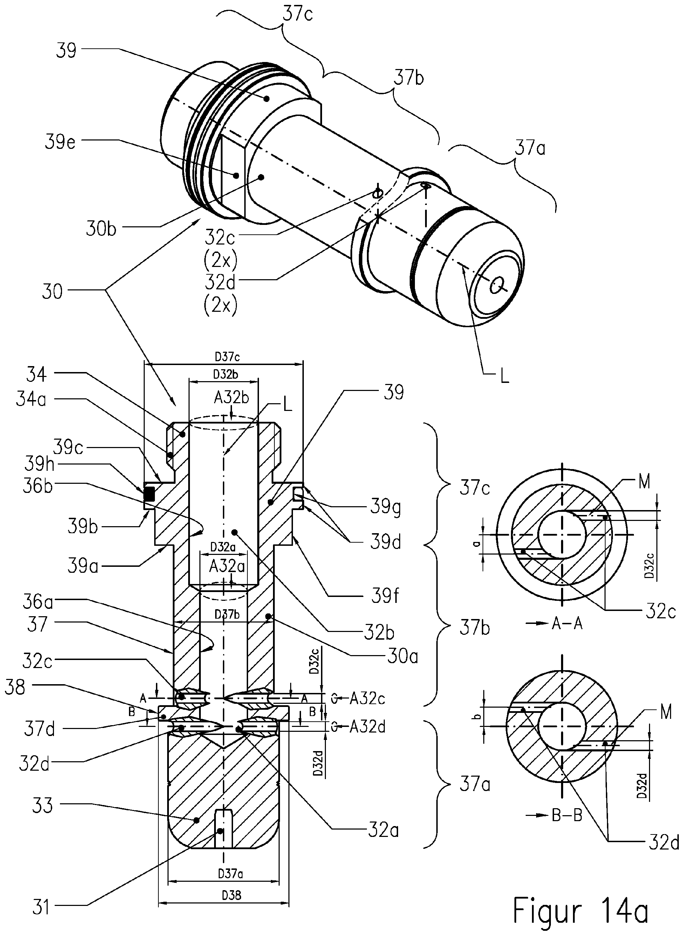

Figur 14 zeigt beispielhaft eine ähnliche Anordnung, die nicht unter den Wortlaut der Ansprüche fällt, wird aber als das Verständnis der Erfindung erleichternd angesehen, wie Figur 13. Der Hohlraum 32 der Elektrode 30 besteht hier aus zwei Hohlräumen, den vorderen Hohlraum 32a und dem hinteren Hohlraum 32b, die sich in ihrem Durchmesser D32a und D32b unterscheiden. Der hintere Hohlraum 32b hat einen größeren Durchmesser als der vordere Hohlraum 32a. Es sind auch weitere Hohlräume mit unterschiedlichen Durchmessern möglich. Das Kühlrohr 90 ragt mit seinem vorderen Ende 95 bis in die Nähe oder bis zum Übergang vom hinteren Hohlraum 32b auf den vorderen Hohlraum 32a und kann sich dort abstützen, damit es nicht weiter nach vorn rutschen kann.

Durch diese Anordnung ist die Dicke der Elektrodenwand 30a im Bereich des vorderen Hohlraums 32a größer als die des hinteren Hohlraumes 32b und kann die Wärme vom vorderen geschlossenen Ende 33 der Elektrode 30 besser in Richtung des hinteren geschlossenen Endes 34 abführen.

Figur 14a zeigt die im Plasmabrenner 10 der Figur 14 eingesetzte Elektrode 30, wobei die obere Abbildung eine perspektivische und die untere linke Abbildung eine geschnittene Darstellung (Längsschnitt) und die unteren rechten Abbildungen die Schnitte durch die Ebenen A-A und B-B sind. Sie unterscheidet sich von der Elektrode in Figur 13a durch den Hohlraum 32, hier aus zwei Hohlräumen bestehend, dem vorderen Hohlraum 32a und dem hinteren Hohlraum 32b, die sich in ihrem Durchmesser D32a und D32b unterscheiden. Der hintere Hohlraum 32b hat einen größeren Durchmesser als der vordere Hohlraum 32a. Weiterhin sind die Öffnungen 32d im ersten vorderen Abschnitt 37a, wie im Schnitt B-B dargestellt, zur Radialen der Längsachse L um das Maß b versetzt angeordnet. Durch diese kann Gas vom Hohlraum 32a der Elektrode 30 nach außen strömen. Damit wird der durch die Öffnungen strömende erste Teilgasstrom 210 im eingebauten Zustand in den Raum 53 zwischen der Elektrode 30, der vorderen Gasführung 70 und der Düse 50 in Rotation versetzt.

Ebenso sind die Öffnungen 32c im zweiten mittleren Abschnitt 37b, wie im Schnitt A-A dargestellt, zur Radialen der Längsachse L um das Maß a versetzt angeordnet. Durch diese kann Gas vom Hohlraum 32a der Elektrode 30 nach außen strömen. Damit wird der durch die Öffnungen strömende Teilgasstrom 230 im eingebauten Zustand im Raum 73 in Rotation versetzt und kühlt die Oberfläche des Abschnitts 37b der Elektrode 30 besser. Dies verbessert die Kühlwirkung und die Schnittqualität.

Der Versatz a zur Radialen zur Längsachse L der Bohrungen 32c für den dritten Teilgasstrom 230 und der Versatz b der Bohrungen 32d für den ersten Teilgasstrom 210 ist zueinander entgegengesetzt, so dass die ersten und dritten Teilgasströme zueinander entgegengesetzt rotieren, wenn die Elektrode 30 in den Plasmabrenner 10 eingebaut ist. Dadurch wird der Einfluss der ersten und dritten Teilgasströme 210 und 230 aufeinander verringert, was positiv auf die Schnittqualität und die Kühlung auswirkt.

Im in den Plasmabrenner 10 eingebauten Zustand soll während des Schneidens eine möglichst hohe Strömungsgeschwindigkeit durch die Öffnungen 32c für den dritten Teilgasstrom 230 und durch die Öffnungen 32d für den ersten Teilgasstrom 210 erreicht werden. Hierfür sind bei strömendem Gas ein geringerer Druckabfall auf dem Strömungsweg im Innenraum 91 des Kühlrohrs 90 zwischen dem hinteren Ende 96 und dem vorderen Ende 95 des Kühlrohrs 90 und ein höherer Druckabfall auf dem Strömungsweg der Öffnungen 32c zwischen dem inneren Hohlraum 32 der Elektrode 30 und dem Raum 73 zwischen der Elektrode 30 und den Gasführungen 70 und 80 sowie ein ebenfalls höherer Druckabfall auf dem Strömungsweg der Öffnungen 32d zwischen dem inneren Hohlraum 32 der Elektrode 30 und dem Raum 53 zwischen der Elektrode 30, der Düse 50 und der vorderen Gasführung 70 notwendig. Bei strömenden ersten und dritten Teilgasströmen 210 und 230 beträgt die Differenz zwischen dem Druck p1 im inneren Hohlraum 32 und dem Druck p2 im Raum 73 sowie zwischen dem Druck p1 im inneren Hohlraum 32 und dem Druck p3 im Raum 53 jeweils in unmittelbarer Nähe der/den Öffnungen 32c und 32d vorteilhafterweise mindestens 0,5 bar, besser jedoch 1 bar.

Das wird dadurch erreicht, dass sich die durch den Durchmesser D91 radial zur Längsachse L ergebende Fläche A91 des Innenraums 91 des Kühlrohrs 90 größer ist als die Summe Flächen A32c und A32d, die sich durch den Durchmesser D32c radial zu der/den Mittelachse M der Öffnungen 32c sowie den Durchmesser D32d radial zu der/den Mittelachse M der Öffnungen 32d ergeben. Die hohe Strömungsgeschwindigkeit verbessert insbesondere die Kühlwirkung in den Öffnungen 32c und auch an den Oberflächen des nachfolgenden Raumes 73, durch den der dritte Teilgasstrom 230 strömt sowie die Kühlwirkung in den Öffnungen 32d und auch an den Oberflächen des nachfolgenden Raumes 53, durch den der erste Teilgasstrom 210 strömt.

Da der Durchmesser D91 des Innenraums 91 des Kühlrohrs 90 kleiner ist als der Durchmesser D32a des vorderen Hohlraums 32a der Elektrode 30, bestimmt die Fläche A91 den Druckabfall stärker als die Fläche A32a.

Der Durchmesser D91 des Hohlraums 91 des Kühlrohrs 90 beträgt hier beispielhaft 3 mm, der Durchmesser D32c der zwei Öffnungen 32c und der Durchmesser D32d der Öffnungen 32d betragen hier 1,0 mm. Damit ergibt sich nach PI/₄*D² für den Hohlraum 91 eine radial zu Längsachse L gebildete Fläche A91 von ca. 7 mm² und für eine Bohrung 32c und eine Bohrung 32d eine radial zur Mittelachse M der Bohrungen 32c, 32d gebildete Fläche A32c, A32d von ca. 0,8 mm². Zwei Bohrungen 32c ergeben somit ca. 1,6 mm², zwei Bohrungen 32d ergeben somit ca. 1,6 mm² und in Summe 3,2 mm². Das Verhältnis zwischen der Fläche A91 und der Summe der beiden Flächen A32c beträgt in diesem Beispiel ca. 2,2.

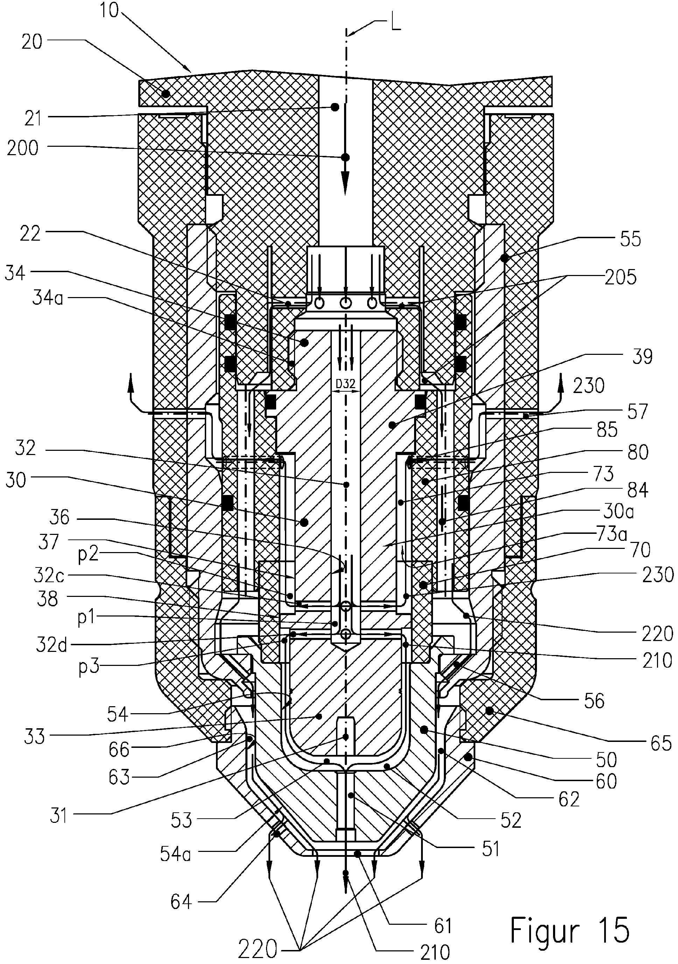

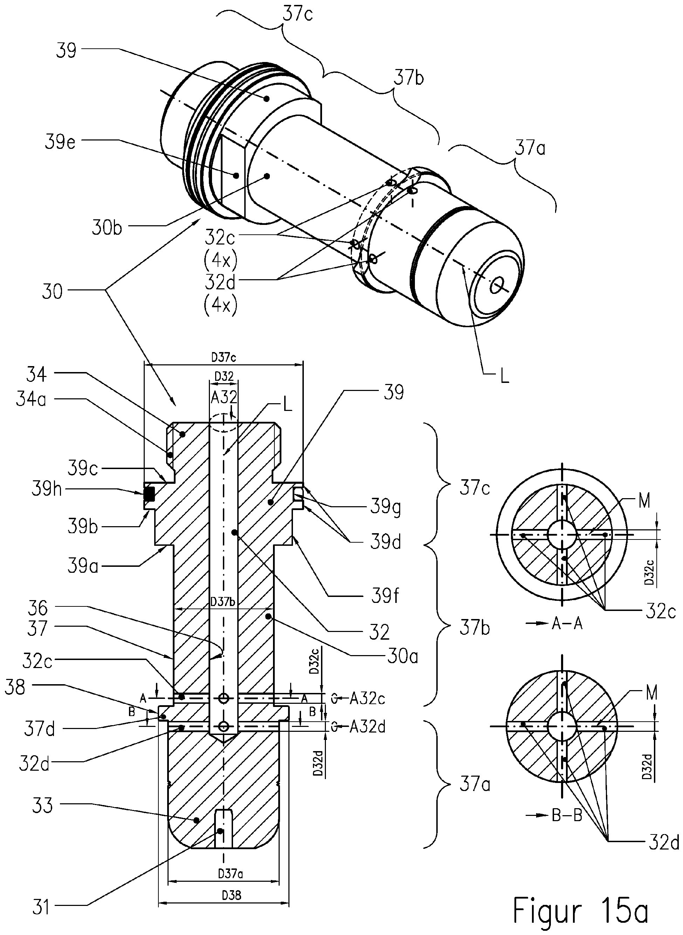

Figur 15 zeigt eine ähnliche Anordnung, die nicht unter den Wortlaut der Ansprüche fällt, wird aber als das Verständnis der Erfindung erleichternd angesehen, wie Figur 13, jedoch ohne Kühlrohr. Der Hohlraum 32 der Elektrode 30 hat einen kleineren Durchmesser D32 als der in Figur 13. Durch diese Anordnung ist die Dicke der Elektrodenwand 30a größer und kann die Wärme vom vorderen Ende 33 der Elektrode 30 besser in Richtung des hinteren Endes 34 abführen.

Der Gesamtgasstrom 200 strömt durch die Öffnung 21 im Plasmabrennerkörper zunächst in Richtung Hohlraum 32 der Elektrode 30, wird jedoch in seiner Gesamtheit mit großer Wahrscheinlichkeit nicht den gesamten Hohlraum 32 durchströmen, da vor dem hinteren Ende 34 der Elektrode 30 ein Teilgasstrom 205 durch die Öffnungen 22 des Brennerkörpers strömt und im Gegensatz zur den Figuren 13 und 14 keine Führung durch ein Kühlrohr erfolgt. Durch den Hohlraum 32 strömt zumindest die Summe der ersten und dritten Teilgasströme 210 (Plasmagas) und 230 (Kühlgas Elektrode). Danach strömt, wie in Figur 14 bereits erläutert, durch die Öffnungen 32c der dritte Teilgasstrom 230 und durch die Öffnungen 32d der erste Teilgasstrom 210.

Da sowohl die Summe der ersten und dritten Teilgasströme 210 und 230 die Innenfläche 36 und der dritte Teilgasstrom 230 die Außenfläche 37b der Elektrode 30 kühlen, erhöht sich durch die Verbesserung der Kühlung die Lebensdauer der Elektrode 30 erheblich.

Figur 15a zeigt die im Plasmabrenner 10 der Figur 15 eingesetzte Elektrode. Sie unterscheidet sich von der in Figur 13a gezeigten durch den kleineren Durchmesser D32 des Hohlraums 32 und die Anzahl der Öffnungen 32c und 32d, hier beispielhaft jeweils vier.

Im in den Plasmabrenner 10 eingebauten Zustand soll während des Schneidens eine möglichst hohe Strömungsgeschwindigkeit durch die Öffnungen 32c für den dritten Teilgasstrom 230 und durch die Öffnungen 32d für den ersten Teilgasstrom 210 erreicht werden. Hierfür sind bei strömendem Gas ein geringerer Druckabfall auf dem Strömungsweg im Hohlraum 32 der Elektrode 30 zwischen dem hinteren offenen Ende 34 und dem vorderen geschlossenen Ende 33 der Elektrode 30 und ein höherer Druckabfall auf dem Strömungsweg der Öffnungen 32c zwischen dem inneren Hohlraum 32 der Elektrode 30 und dem Raum 73 zwischen der Elektrode 30 und den Gasführungen 70 und 80 sowie ein ebenfalls höherer Druckabfall auf dem Strömungsweg der Öffnungen 32d zwischen dem inneren Hohlraum 32 der Elektrode 30 und dem Raum 53 zwischen der Elektrode 30, der Düse 50 und der Gasführung 70 notwendig. Bei strömenden ersten und dritten Teilgasströmen 210 und 230 beträgt die Differenz zwischen dem Druck p1 im inneren Hohlraum 32 und dem Druck p2 im Raum 73 sowie zwischen dem Druck p1 im inneren Hohlraum 32 und dem Druck p3 im Raum 53 jeweils in unmittelbarer Nähe der/den Öffnungen 32c und 32d vorteilhafterweise mindestens 0,5 bar, besser jedoch 1 bar.

Das wird dadurch erreicht, dass die sich durch den Durchmesser D32 radial zur Längsachse L ergebende Fläche A32 des Hohlraums 32 der Elektrode 30 größer ist als die Summe Flächen A32c und A32d, die sich durch den Durchmesser D32c radial zu der/den Mittelachse M der Öffnungen 32c sowie den Durchmesser D32d radial zu der/den Mittelachse M der Öffnungen 32d ergeben. Die hohe Strömungsgeschwindigkeit verbessert insbesondere die Kühlwirkung in den Öffnungen 32c und auch an den Oberflächen des nachfolgenden Raumes 73, durch den der dritte Teilgasstrom 230 strömt sowie die Kühlwirkung in den Öffnungen 32d und auch an den Oberflächen der nachfolgenden Raumes 53, durch den der erste Teilgasstrom 210 strömt.

Der Durchmesser D32 des Innenraums 32 der Elektrode 30 beträgt hier beispielhaft 2,5 mm, der Durchmesser D32c der vier Öffnungen 32c und der Durchmesser D32d der vier Öffnungen 32d beträgt hier 0,6 mm. Damit ergibt sich nach PI/₄*D² für den Hohlraum 32 eine radial zu Längsachse L gebildete Fläche A32 von ca. 5 mm² und für eine Bohrung 32c und eine Bohrung 32d eine radial zur Mittelachse M der Bohrung 32c, 32d gebildete Fläche A32c, A32d von ca. 0,3 mm². Vier Bohrungen 32c ergeben somit ca. 1,2 mm², vier Bohrungen 32d ergeben somit ca. 1,2 mm², in Summe also 2,4 mm². Das Verhältnis zwischen der Fläche A32 und der Summe der beiden Flächen A32c und A32d beträgt in diesem Beispiel ca. 2,2.

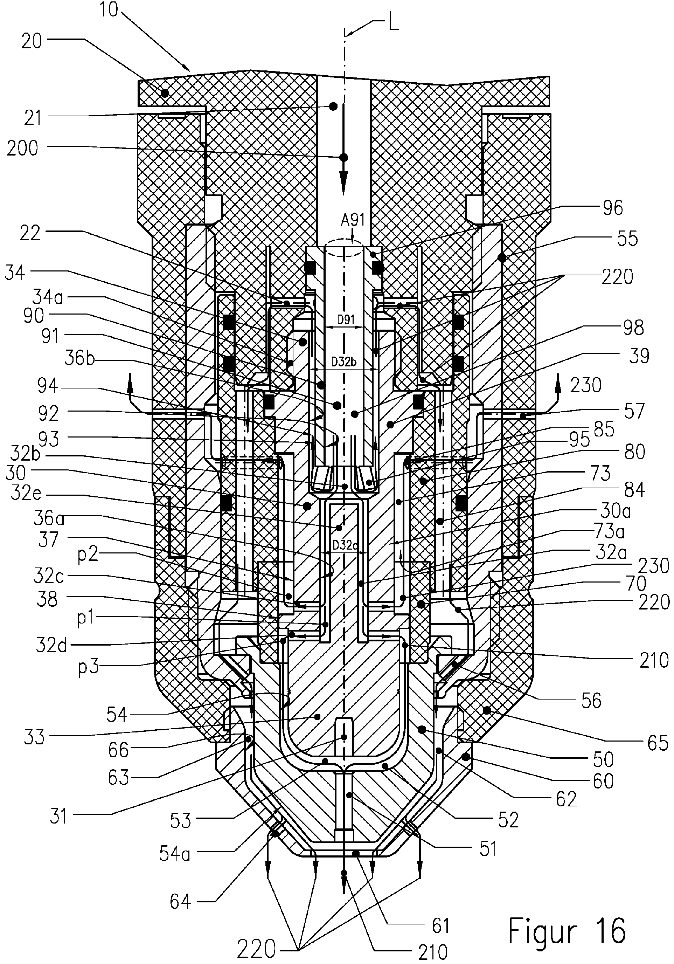

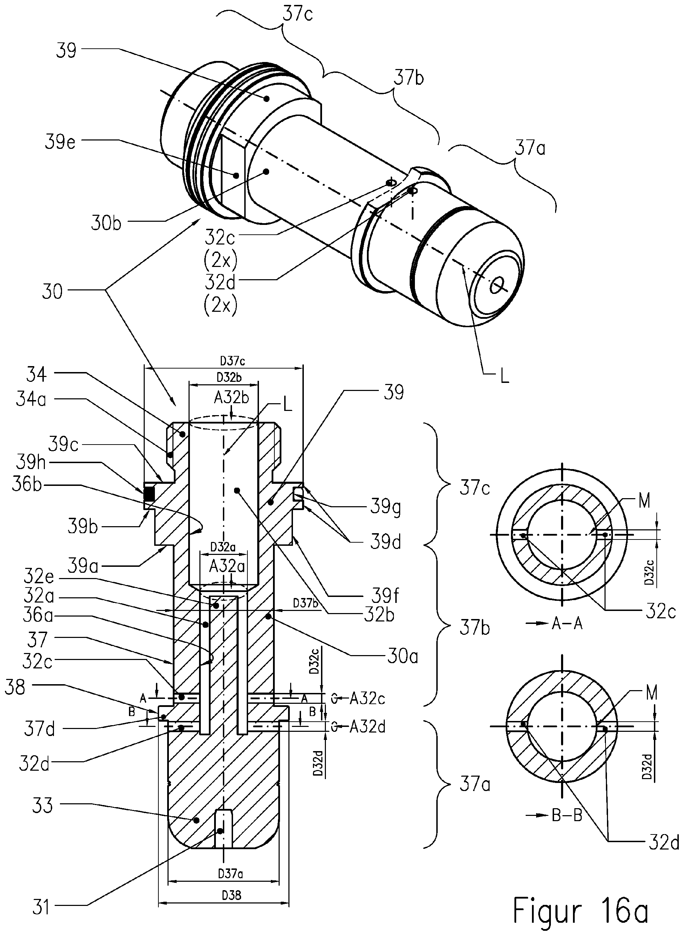

Figur 16 zeigt beispielhaft eine ähnliche Anordnung, die nicht unter den Wortlaut der Ansprüche fällt, wird aber als das Verständnis der Erfindung erleichternd angesehen, wie Figur 14. Der Hohlraum 32 besteht hier auch aus zwei Hohlräumen, den vorderen Hohlraum 32a und dem hinteren Hohlraum 32b, die sich darin unterscheiden, dass sich in den vorderen Hohlraum 32a vom vorderen Ende 33 der Elektrode 30 her ein bspw. zylindrischer massiver Körper 32e erstreckt und mit dem vorderen Ende 33 verbunden ist. Dies kann, wie in Figur 16 gezeigt, einstückig sein, d.h. beide sind aus ein und demselben Teil gefertigt, oder jedes besteht aus einem separaten Teil und sie werden durch Form-oder Kraft- oder Stoffschluss miteinander verbunden, damit sie sich durch Berührung miteinander in Kontakt stehen. Beispielsweise kann das Kühlrohr 90 den Körper 32e gegen die Innenfläche des vorderen Endes 33 drücken (Kraftschluss). Der Körper 32e kann bspw. auch mit dem vorderen Ende 33 verschweißt sein (Stoffschluss). Vom hinteren offenen Ende 34 her gesehen sieht der Hohlraum 32a kreisringförmig aus. Die Durchmesser D32a und D32b sind hier unterschiedlich groß. Der hintere Hohlraum 32b hat einen größeren Durchmesser D32b als der Durchmesser D32a des vorderen Hohlraums 32a. Es sind auch weitere Hohlräume mit unterschiedlichen Durchmessern möglich. Das Kühlrohr 90 ragt mit seinem vorderen Ende 95 bis zum Übergang vom hinteren Hohlraum 32b zum den vorderen Hohlraum 32a und kann sich dort abstützen, damit es nicht weiter nach vorn rutschen kann. Es ist auch möglich, dass beide Durchmesser D32a und D32b die gleiche Größe haben.

Durch diese Anordnung kann durch den Körper 32e zusätzlich zur Wand 30a der Elektrode 30 die Wärme vom vorderen geschlossenen Ende 33 der Elektrode 30 besser in Richtung des hinteren offenen Endes 34 abgeführt werden. Außerdem strömt die Summe der ersten und dritten Teilgasströme 210 und 230 sowohl an der Innenfläche 36a des vorderen Hohlraums 32a der Elektrode 30 und der Außenfläche des Körpers 32e und führt so die Wärme besser ab. Zusätzlich strömt noch der zweite Teilgasstrom 220 an der Innenfläche 36b des hinteren Hohlraums 32b und kühlt so die Elektrode. Weiterhin strömt der dritte Teilgasstrom 230 an Außenfläche des zweiten mittleren Bereiches 37b der Elektrode 30 entlang und kühlt nochmals.

Figur 16a zeigt die im Plasmabrenner 10 der Figur 16 eingesetzte Elektrode ähnlich Figur 14a. Der Hohlraum 32 besteht hier auch aus zwei Hohlräumen, den vorderen Hohlraum 32a und dem hinteren Hohlraum 32b, die sich darin unterscheiden, dass sich in den vorderen Hohlraum 32a vom vorderen Ende 33 der Elektrode 30 her ein bspw. zylindrischer massiver Körper 32e erstreckt und mit dem vorderen geschlossenen Ende 33 verbunden ist. Es sind ebenfalls jeweils zwei Öffnungen 32c und 32d gezeigt, allerdings weisen diese hier keinen Versatz zur Radialen der Längsachse L auf.

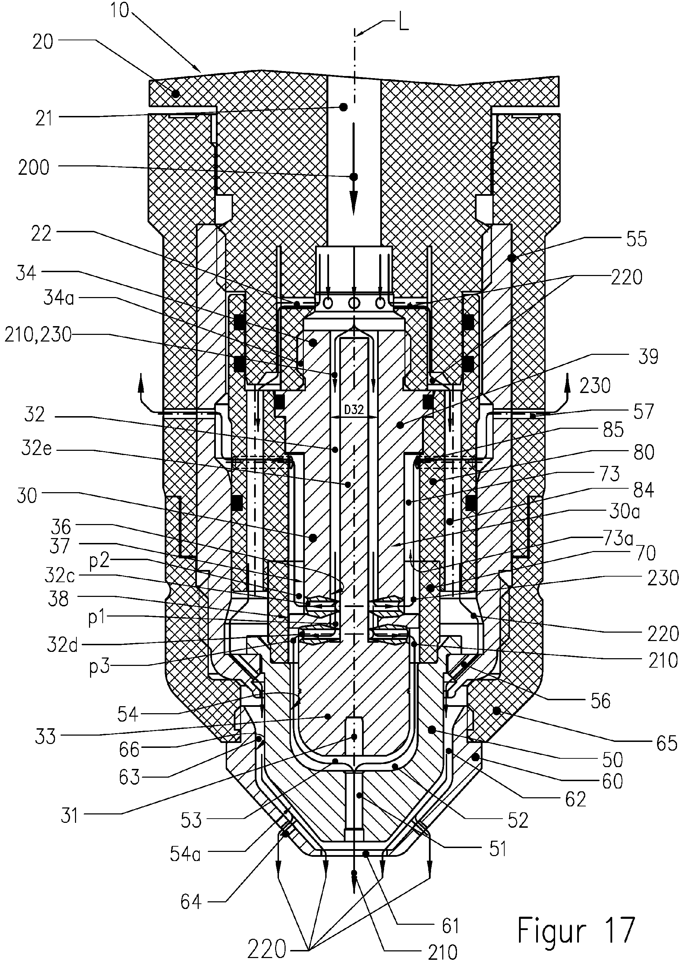

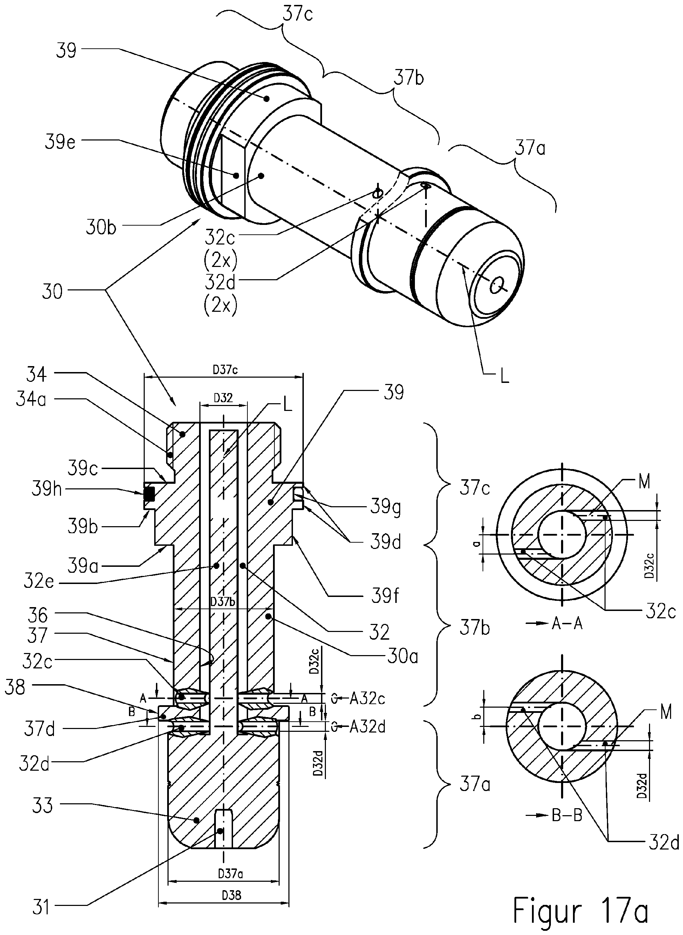

Figur 17 zeigt eine ähnliche Anordnung, die nicht unter den Wortlaut der Ansprüche fällt, wird aber als das Verständnis der Erfindung erleichternd angesehen, wie Figur 16, jedoch ohne Kühlrohr. Im Hohlraum 32 erstreckt sich vom vorderen geschlossenen Ende 33 der Elektrode 30 her ein bspw. zylindrischer massiver Körper 32e, der mit dem hinteren offenen Ende 34 verbunden ist. Der Körper 32e erstreckt sich weiter in Richtung des hinteren offenen Endes 34 als der in Figur 16, er kann sich bis zum hinteren offenen Ende 34 hin oder sogar darüber hinaus erstrecken. Dadurch wird die Außenfläche des Körpers 32e nochmals vergrößert und die Wärme noch besser durch die Summe der ersten und dritten Teilgasströme 210 und 230 abgeführt werden.

Figur 17a zeigt die im Plasmabrenner 10 der Figur 17 eingesetzte Elektrode, ähnlich Figur 16a. Im Hohlraum 32e erstreckt sich vom vorderen geschlossenen Ende 33 der Elektrode 30 her ein bspw. zylindrischer massiver Körper 32e, der mit dem hinteren offenen Ende 34 verbunden ist. Der Körper 32 erstreckt sich weiter in Richtung des hinteren offenen Endes 34 als der in Figur 16a. Er kann sich bis zum hinteren offenen Ende 34 hin oder sogar darüber hinaus erstrecken. Es sind ebenfalls jeweils zwei Öffnungen 32c und 32d gezeigt, allerdings weisen diese hier einen Versatz a bzw. b zur Radialen der Längsachse L auf. Die Wirkung des Versatzes wurde schon im Rahmen der Figur 14a beschrieben.

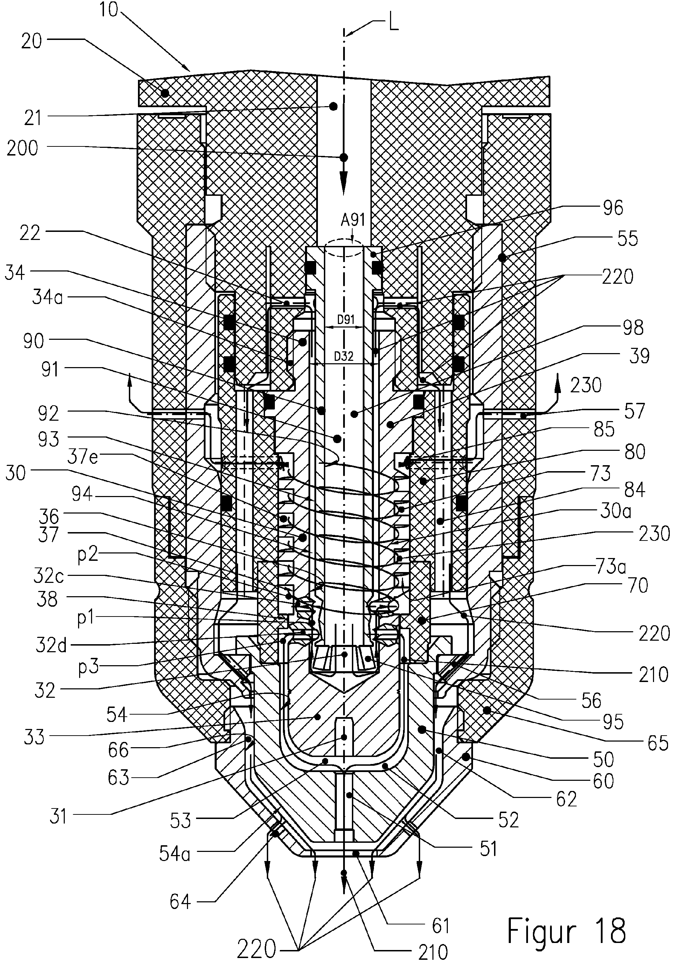

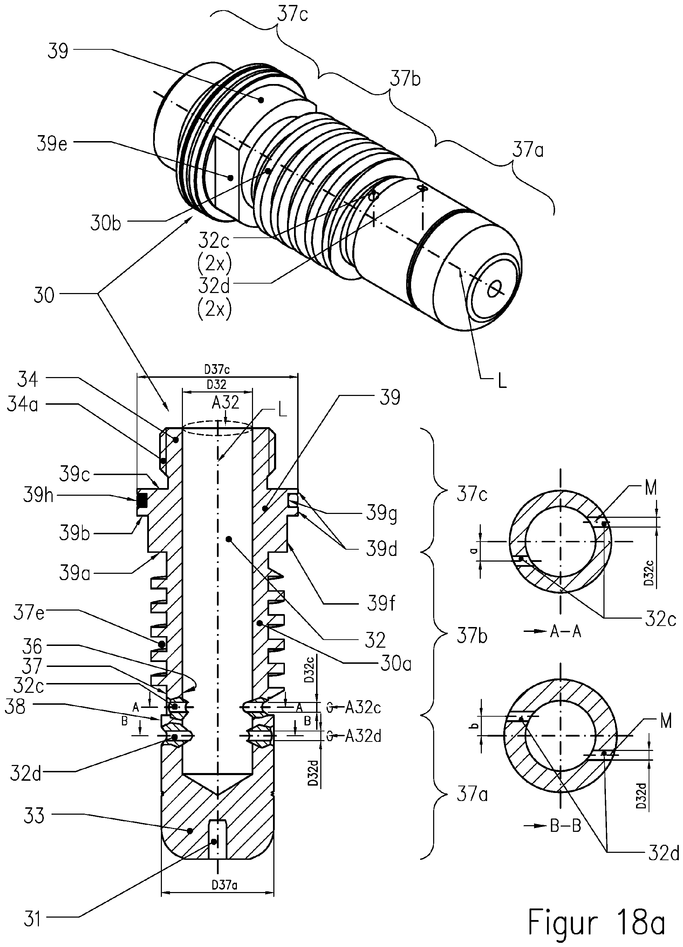

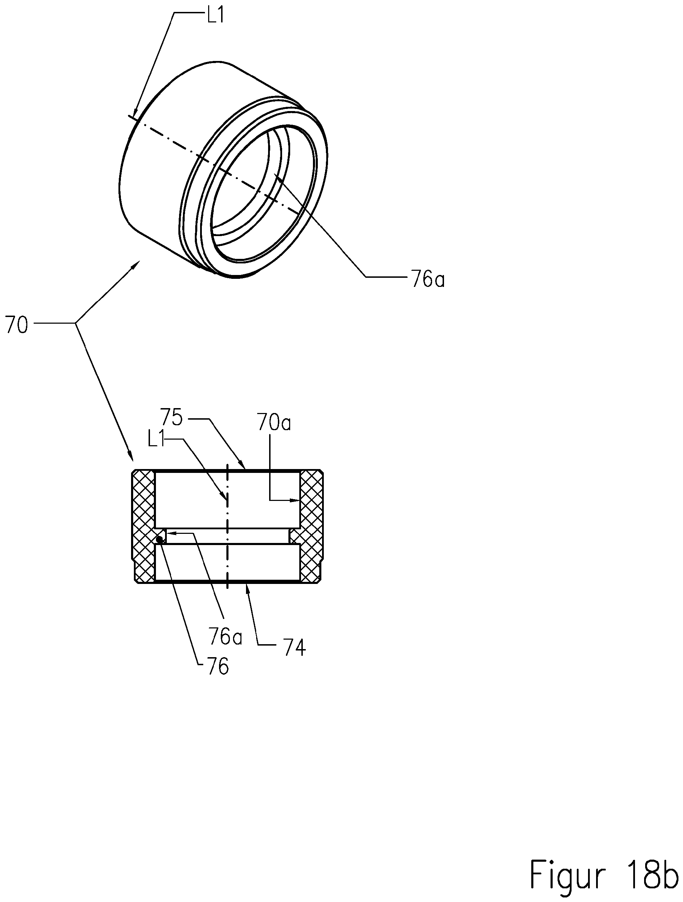

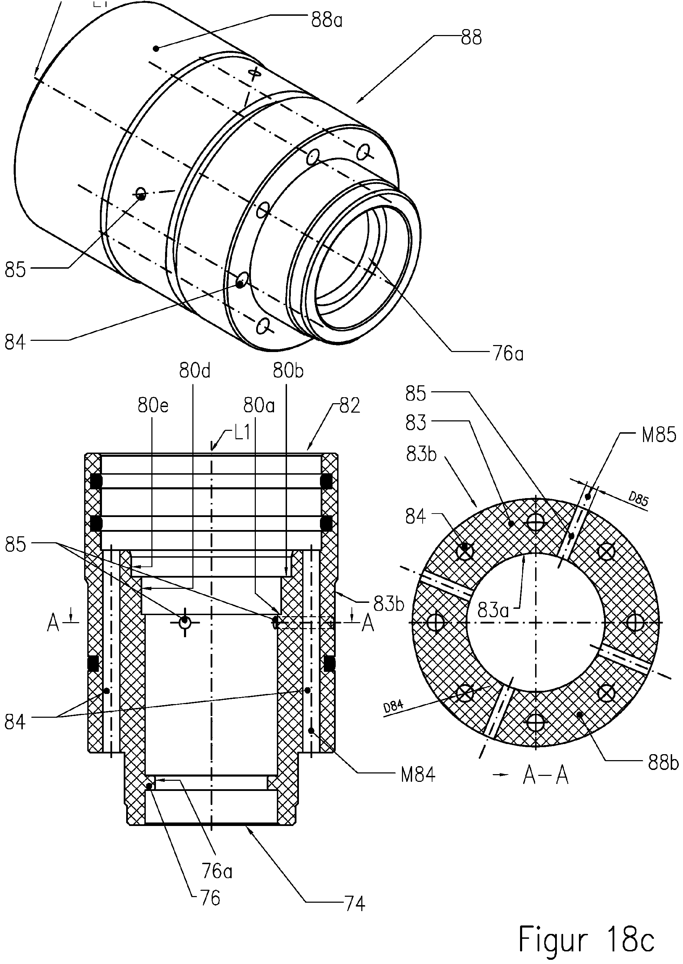

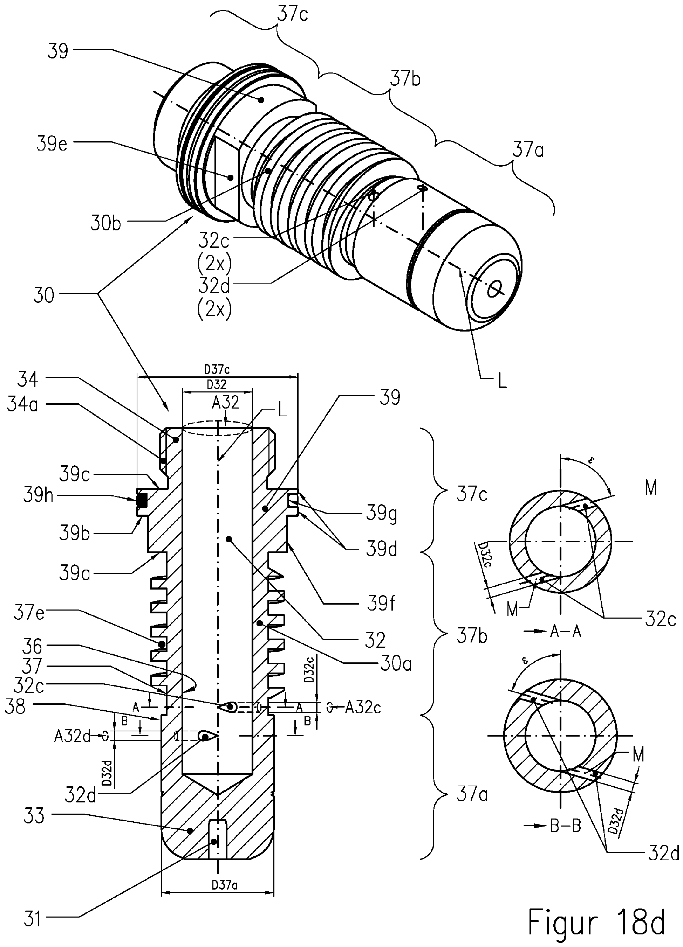

Figur 18 zeigt eine weitere Anordnung ähnlich wie Figur 13, die aber unter den Wortlaut der Ansprüche fällt. Zur Verbesserung der Kühlwirkung wurde der mittlere zweite Abschnitt 37b der Außenfläche 37 so gestaltet, dass der dritte Teilgasstrom 230 durch eine spiralförmige Nut 37e geführt und so länger mit der Oberfläche des mittleren zweiten Abschnitts 37b in Kontakt bleibt und dadurch die Kühlung weiter verbessert wird. Es ist auch die Anordnung von zwei oder mehreren parallel verlaufenden spiralförmigen Nuten möglich.

Weiterhin weist im Gegensatz zu Figur 13 die Elektrode 30 keinen Vorsprung 37d auf der Außenfläche 37 zwischen dem vorderen ersten Abschnitt 37a und dem mittleren zweiten Abschnitt 37b der Außenfläche 37 der Elektrode 30 auf. Die Zentrierfläche 38 ist hier Bestandteil des vorderen ersten Abschnitts 37a.

Die Figur 18a zeigt die in dem Plasmabrenner 10 der Figur 18 eingesetzte Elektrode 30 ähnlich der Elektrode in Figur 13a. Die obere Abbildung zeigt eine perspektivische, die untere linke Abbildung eine geschnittene Darstellung (Längsschnitt) und die unteren rechten Abbildungen die Schnitte durch die Ebenen A-A und B-B.

Weiterhin sind die Öffnungen 32d im vorderen ersten Abschnitt 37a, wie im Schnitt B-B dargestellt, zur Radialen der Längsachse L um das Maß b versetzt angeordnet. Durch diese kann Gas vom Hohlraum 32 der Elektrode 30 nach außen strömen. Damit wird der durch die Öffnungen strömende erste Teilgasstrom 210 im eingebauten Zustand in den Raum 53 zwischen der Elektrode 30, der vorderen Gasführung 70 und der Düse 50 in Rotation versetzt.

Weiterhin sind die Öffnungen 32c im mittleren zweiten Abschnitt 37b, wie im Schnitt A-A dargestellt, zur Radialen der Längsachse L um das Maß a versetzt angeordnet. Durch diese kann Gas vom Hohlraum 32 der Elektrode 30 nach außen strömen. Damit wird der durch die Öffnungen strömende dritte Teilgasstrom 230 im eingebauten Zustand in den Raum 73 zwischen der Elektrode 30, der vorderen Gasführung 70 und der hinteren Gasführung 80 in Rotation versetzt.

Der Versatz a zur Radialen zur Längsachse L der Bohrungen 32c für den dritten Teilgasstrom 230 und der Versatz b zur Radialen der Längsachse L der Bohrungen 32d für den ersten Teilgasstrom 210 ist zueinander entgegengesetzt, so dass die ersten und dritten Teilgasströme zueinander entgegengesetzt rotieren. Dadurch wird der Einfluss der ersten und dritten Teilgasströme 210 und 230 aufeinander verringert, was sich positiv auf die Schnittqualität und die Kühlung auswirkt.

Für die Durchmesser D91, D32c und D32d, die sich daraus ergebenden Flächen A91, A32c und A32d sowie die Drücke p1, p2 und p3 gelten die zu Figur 13a gemachten Aussagen.

Figur 18b zeigt die vordere Gasführung 70, wobei die obere Abbildung eine perspektivische und die untere Abbildung den Längsschnitt zeigt. Sie unterscheidet sich von der in Figur 13b gezeigten Gasführung in dem auf der Innenfläche 70a vorhandenen Vorsprung 76 mit der Innenfläche 76a. Diese Innenfläche 76a liegt im eingebauten Zustand der Außenfläche 38, die Bestandteil des ersten vorderen Abschnitts 37a der Elektrode 30 ist, gegenüber. Durch diese beiden Zentrierflächen werden die Gasführung 80 und die Elektrode 30 radial zur Längsachse zueinander ausgerichtet und zentriert.

Es ist auch möglich, die in den Figuren 2b und 18b gezeigten Gasführungen 70 und 80 aus einem Teil herzustellen. Figur 18c zeigt eine solche einteilige Gasführung 88.

Die Figur 18d zeigt eine Elektrode 30 ähnlich der Elektrode in Figur 18a. Die obere Abbildung zeigt eine perspektivische, die untere linke Abbildung eine geschnittene Darstellung (Längsschnitt) und die unteren rechten Abbildungen die Schnitte durch die Ebenen A-A und B-B.

Die Öffnungen 32d im vorderen ersten Abschnitt 37a sind, wie im Schnitt B-B dargestellt, im Gegensatz zur Figur 18a nicht um a versetzt, sondern um den Winkel ε zur Radialen der Längsachse L geneigt angeordnet. Durch diese kann Gas vom Hohlraum 32 der Elektrode 30 nach außen strömen. Damit wird der durch die Öffnungen strömende erste Teilgasstrom 210 im eingebauten Zustand in den Raum 53 zwischen der Elektrode 30, der vorderen Gasführung 70 und der Düse 50 in Rotation versetzt.

Die Öffnungen 32c im mittleren zweiten Abschnitt 37b sind, wie im Schnitt A-A dargestellt, im Gegensatz zur Figur 18a nicht um a versetzt, sondern um den Winkel ε zur Radialen der Längsachse L geneigt angeordnet. Durch diese kann Gas vom Hohlraum 32 der Elektrode 30 nach außen strömen. Damit wird der durch die Öffnungen strömende dritte Teilgasstrom 230 im eingebauten Zustand in den Raum 73 zwischen der Elektrode 30, der vorderen Gasführung 70 und der hinteren Gasführung 80 in Rotation versetzt.

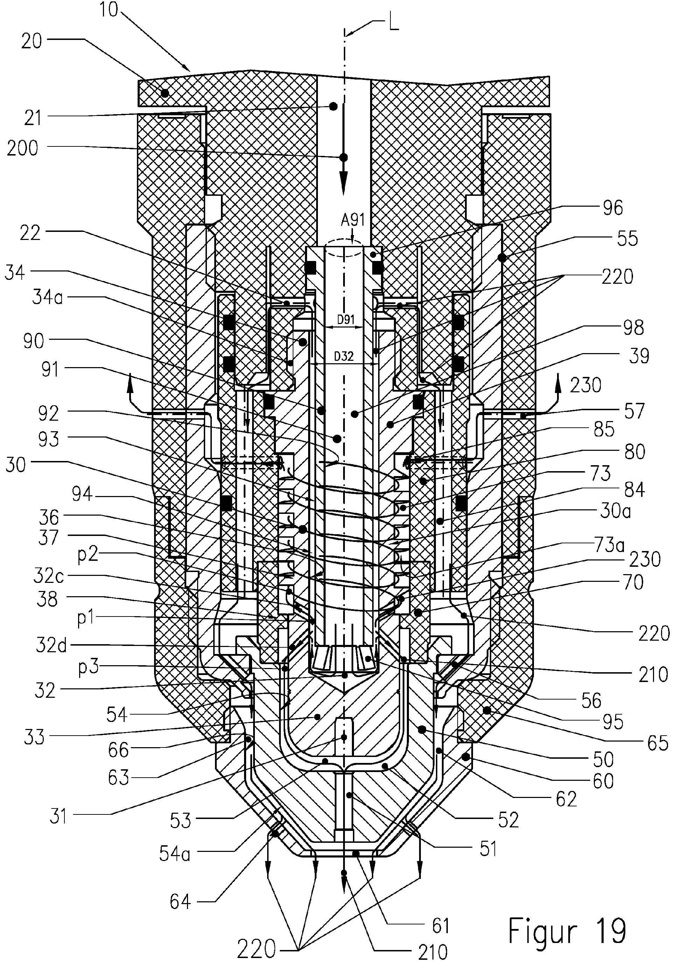

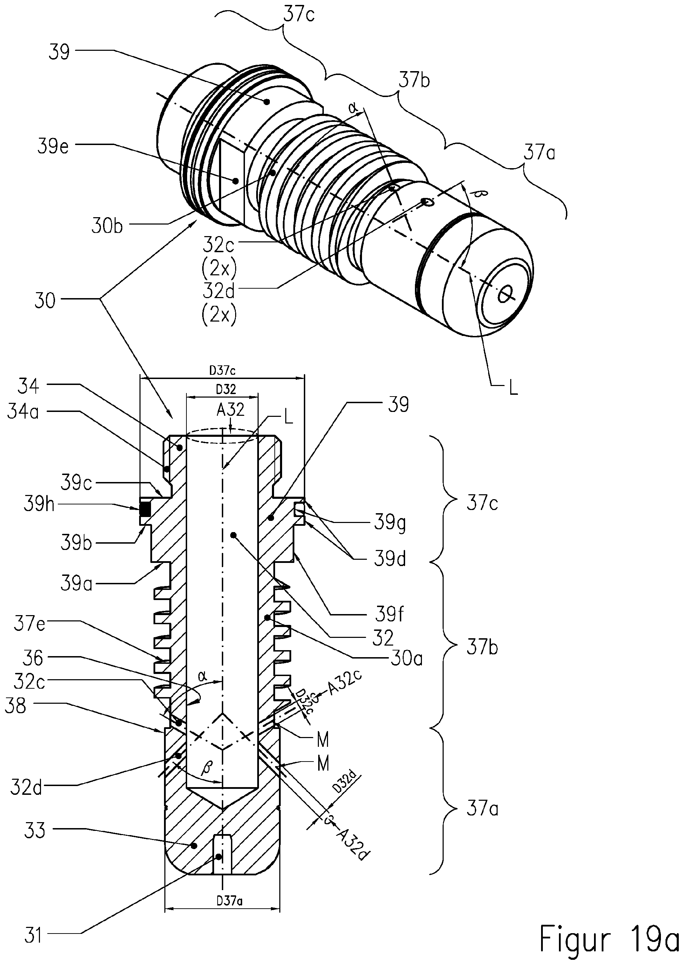

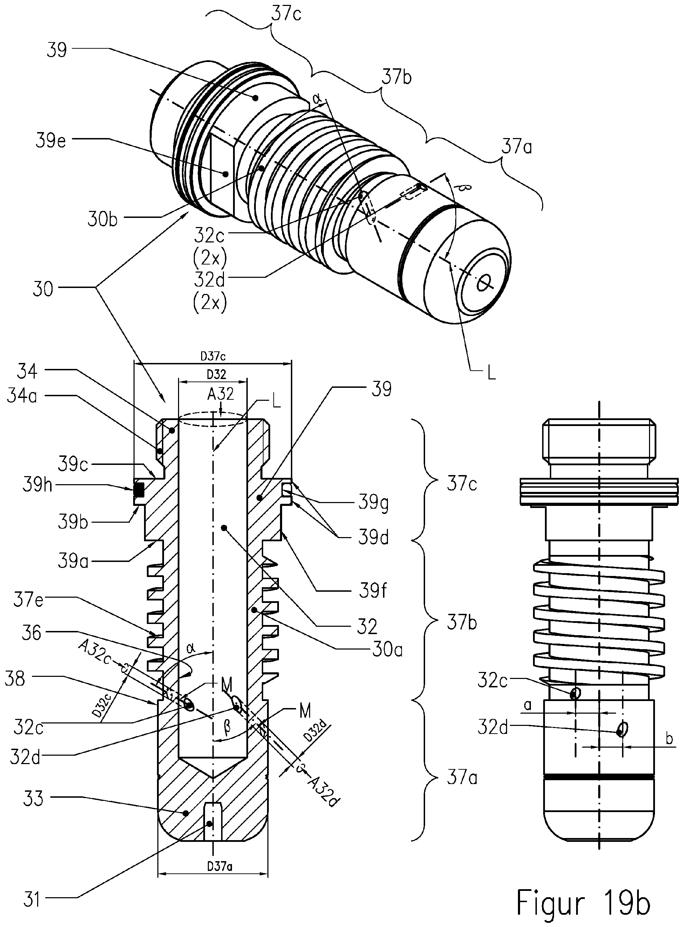

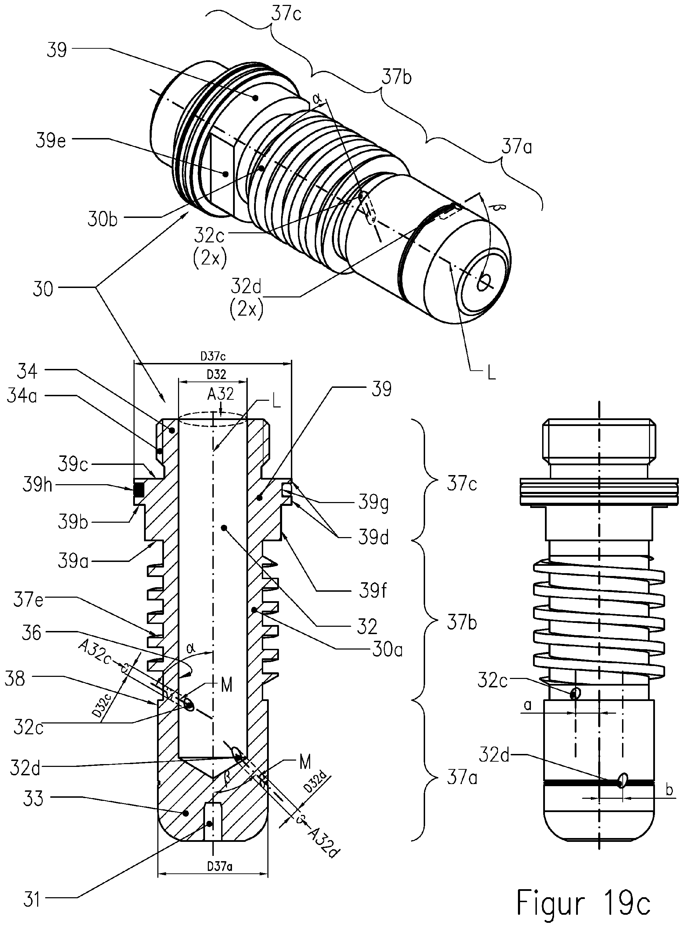

Die Figur 19 zeigt einen weiteren erfindunsgemäßen Plasmabrenner 10, in dem die Elektrode 30 aus Figur 19a eingesetzt ist. Die Figuren 19a, 19b und 19c zeigen weitere Beispiele der Ausführungen der Öffnungen 32c und 32d in der Elektrode 30.

Figur 19a zeigt oben eine perspektivische Darstellung und unten den Längsschnitt einer Elektrode 30. Die Öffnungen 32c weisen zwischen der Längsachse L und der Mittelachse M der Öffnungen 32c einen in Richtung des hinteren Endes 34 geöffneten Winkel α auf. Dieser beträgt hier beispielhaft 60°, das sinnvolle Minimum beträgt 45°. Er kann aber auch einen größeren Winkel bis 90° aufweisen. Im in den Plasmabrenner eingebauten Zustand wird der dritte Teilgasstrom 230 gleich in die Richtung des hinteren Endes der Elektrode gerichtet. So wird der Einfluss auf den Teilgasstrom 210 reduziert.

Die Öffnungen 32d weisen zwischen der Längsachse L und der Mittelachse M der Öffnungen 32d einen in Richtung des vorderen Endes 33 geöffneten Winkel β auf. Dieser beträgt hier beispielhaft 45°, was gleichzeitig seinem Minimum entspricht. Er kann aber auch einen größeren Winkel bis 90° aufweisen. Im in den Plasmabrenner eingebauten Zustand wird die Teilgasströmung 210 gleich in die Richtung des vorderen Endes der Elektrode gerichtet. So wird der Einfluss auf die Teilgasströmung 230 reduziert.

Figur 19b zeigt oben eine perspektivische Darstellung, unten links den Längsschnitt und unten rechts die ungeschnittene Seitenansicht einer Elektrode 30. Die Öffnungen 32c und 32d weisen zusätzlich zu den Winkeln α und β einen Versatz a und b zur Radialen der Längsachse L der Elektrode auf. So werden der erste Teilgasstrom 210 und der dritte Teilgasstrom 230 noch in Rotation versetzt.

Die Figur 19c zeigt oben eine perspektivische Darstellung, unten links einen Längsschnitt und unten rechts eine Seitenansicht einer Elektrode 30. Die Öffnungen 32d bilden mit der Längsachse L einen in Richtung des vorderen Endes 33 geöffneten Winkel β, wobei die Öffnungen 32d durch den massiven Abschnittdes vorderen geschlossenen Endes 33 verlaufen.

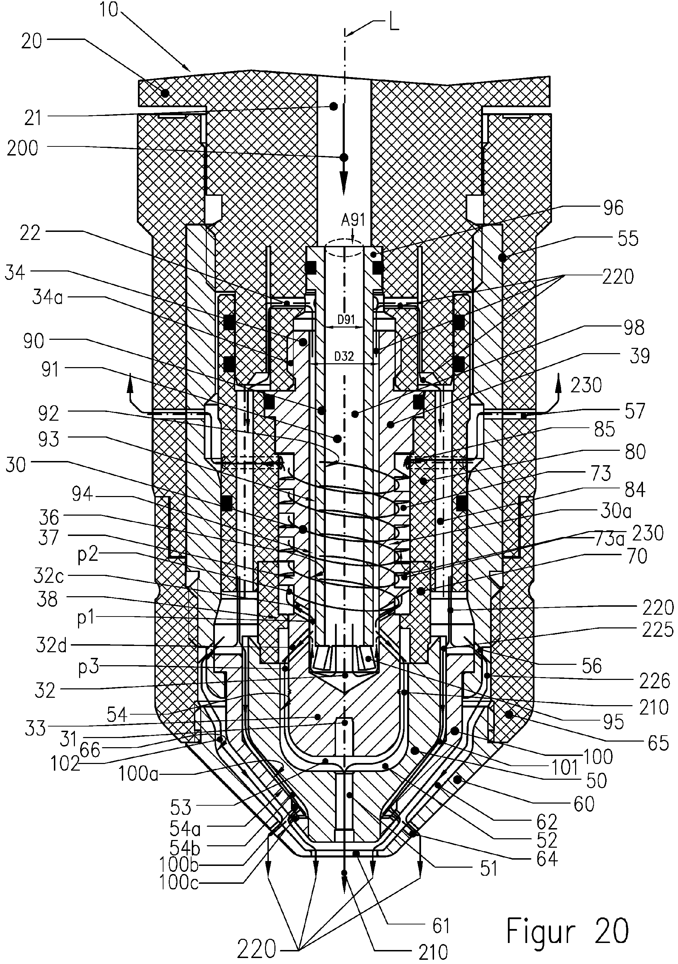

Die in der Figur 20 gezeigte erfindungsgemässe Ausführungsform weist sehr viel Ähnlichkeit mit der beispielsweise in der Figur 19 gezeigten Ausführungsform auf. Der zweite Teilgasstrom 220 wird nach Verlassen der Öffnungen 84 der hinteren Gasführung 80 in die Teilgasströme 225 und 226 geteilt. Auch ist zwischen der Düse 50 und der Düsenschutzkappe 60 eine Düsenkappe 100 vorgesehen, die die Kühlung der Düse von außen verbessern kann. Im durch die Düse 50 und Düsenkappe 100 gebildeten Raum 101 strömt der Teilgasstrom 225. Durch rundherum angeordnete Nuten (Längsnuten) bzw. Hohlräume 54b, z.B. ähnlich wie bei einer Autogendüse, strömt das Kühlgas nach vorne und wird in einer umlaufenden Nut 100b gesammelt und über Öffnungen 100c und nachfolgend über die Öffnungen 64 und/oder die Öffnung 61 der Düsenschutzkappe 60 nach außen abgegeben. Im durch die Düsenkappe 100 und die Düsenschutzkappe 60 gebildeten Raum 102 strömt der Teilgasstrom 226. Dieser kühlt die Düsenkappe 100 und die Düsenschutzkappe 60 und wird nach außen über die Öffnungen 64 oder die Öffnung 61 nach außen geführt.

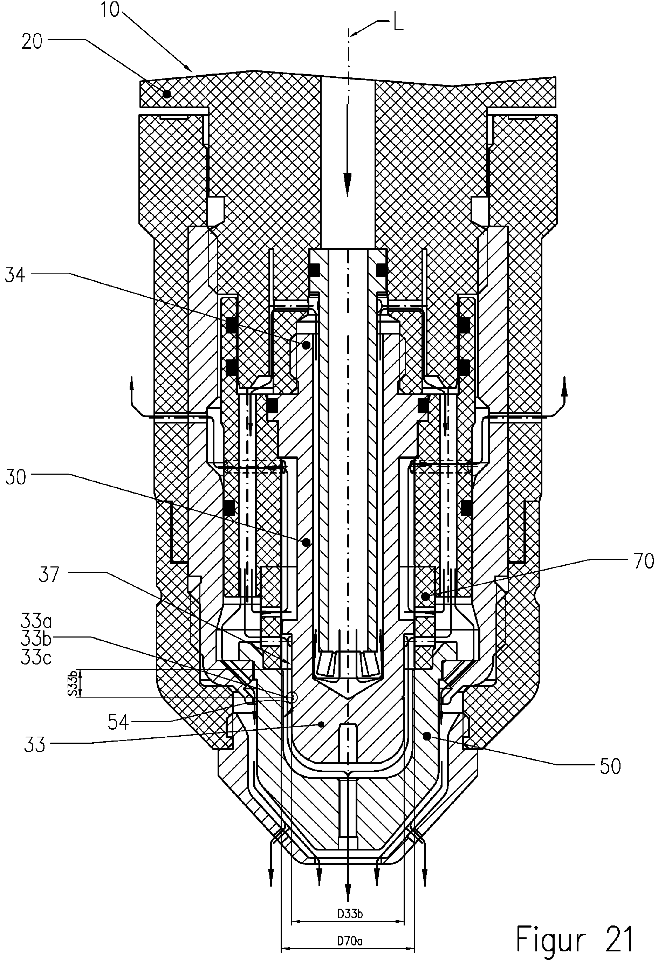

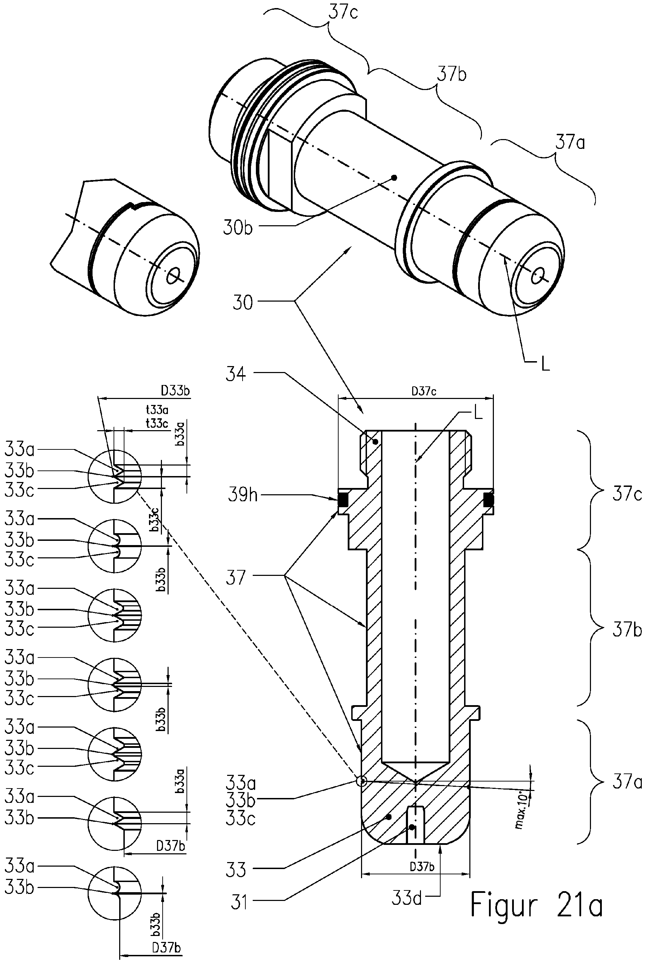

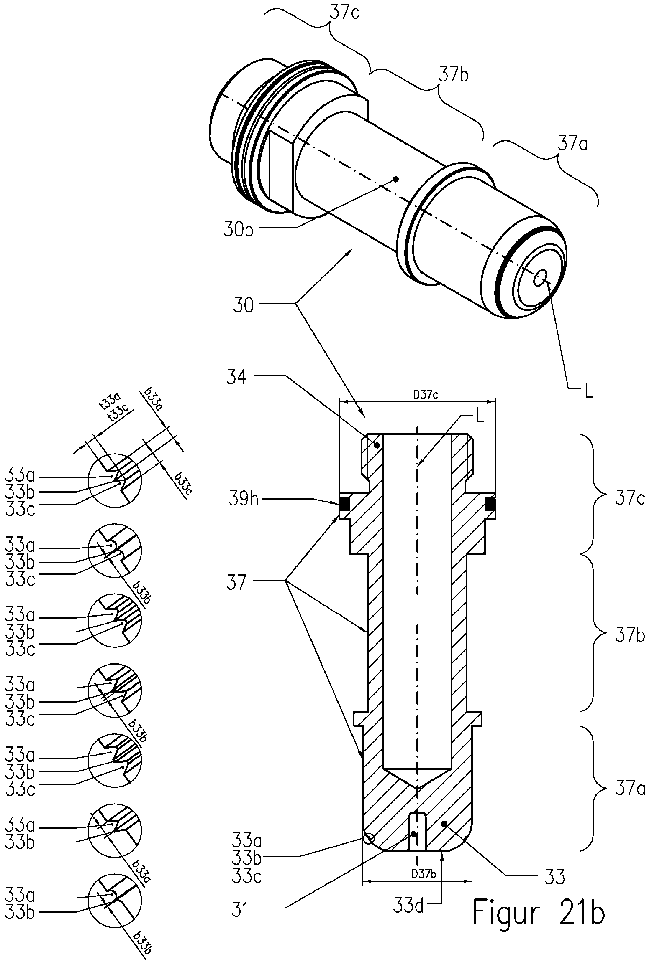

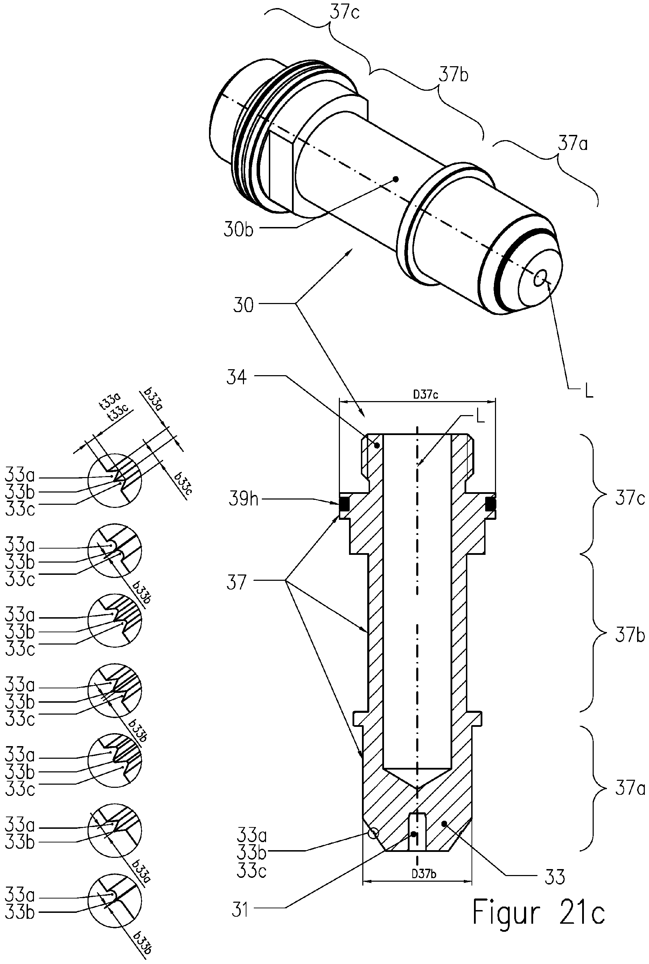

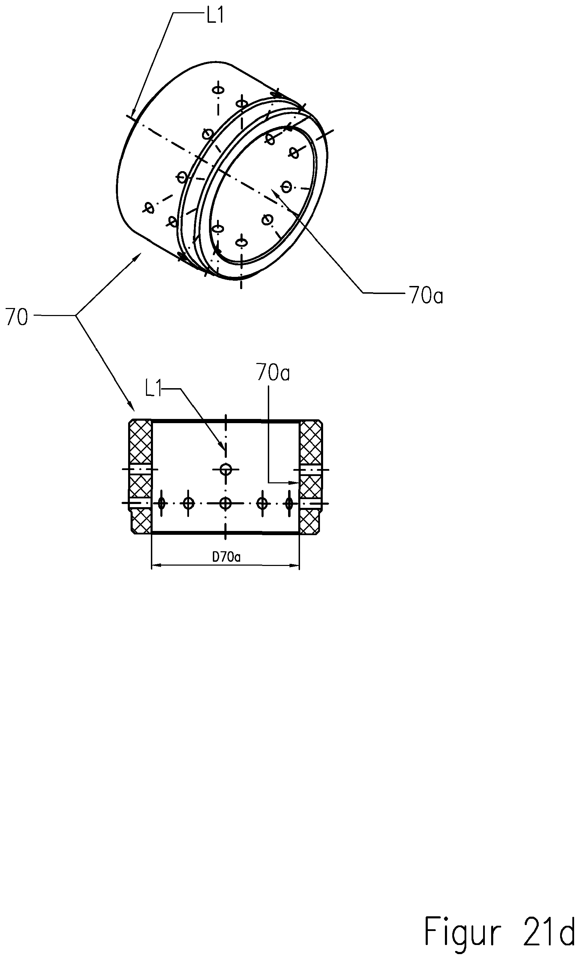

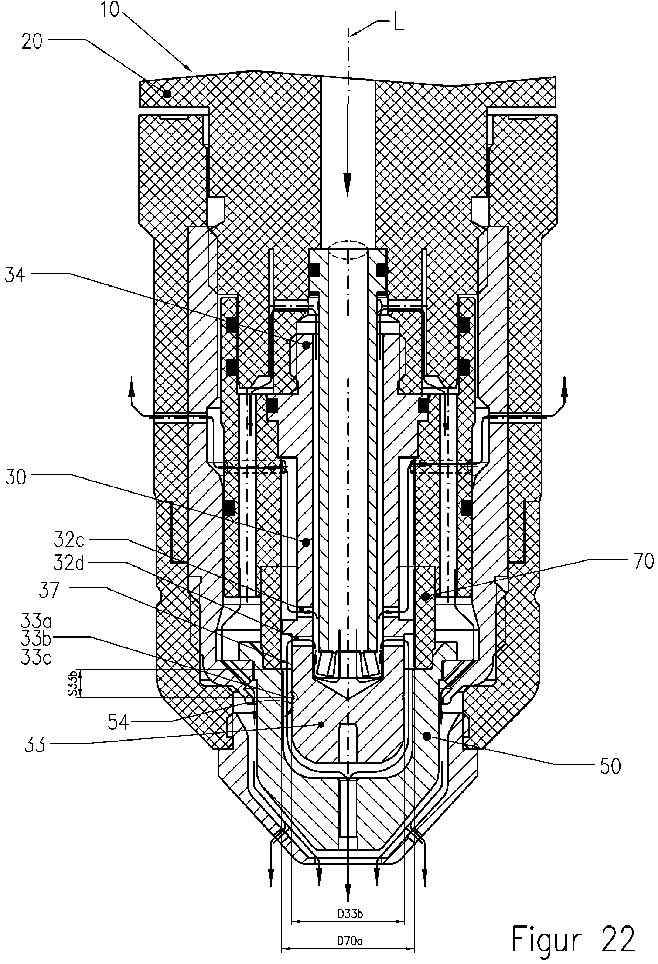

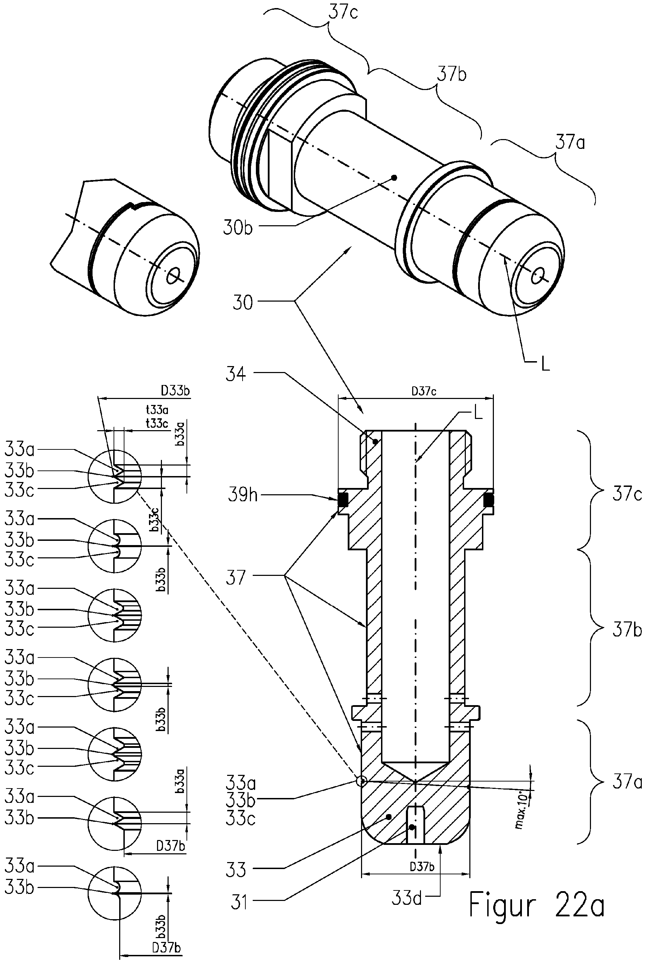

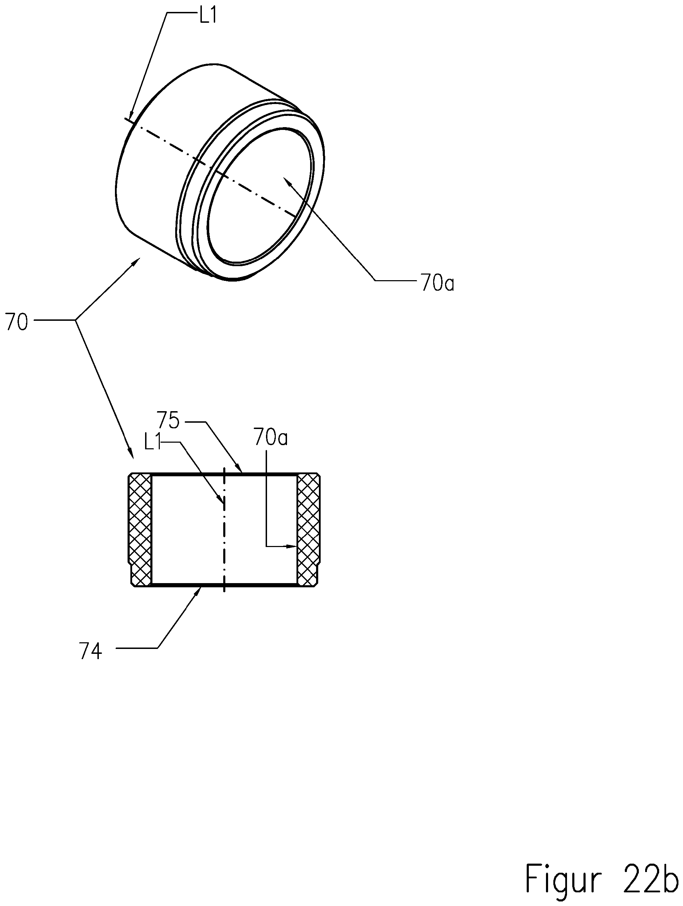

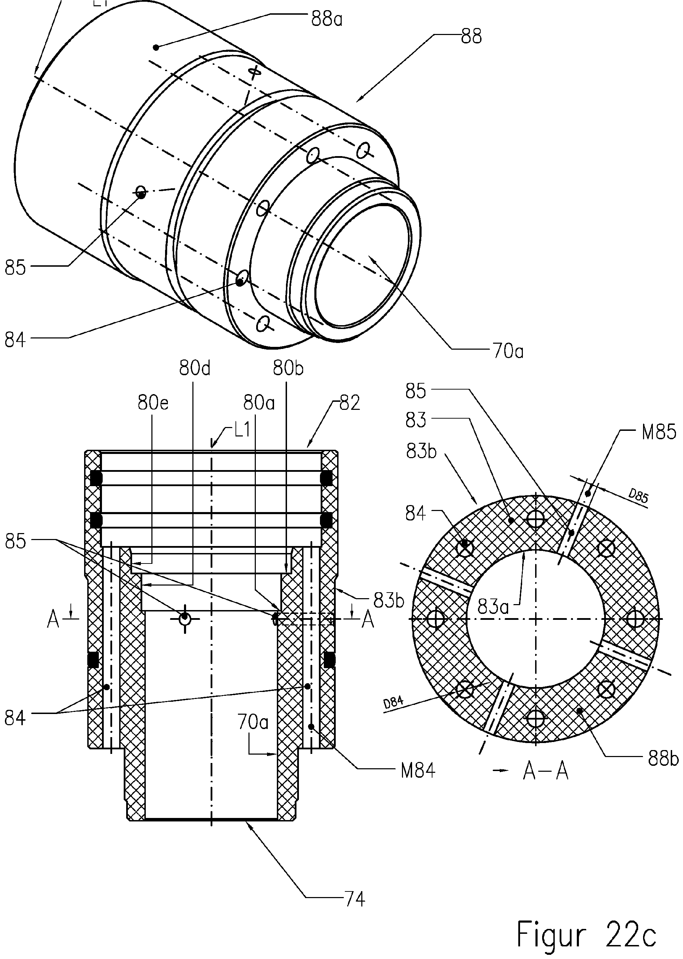

In den vorangegangenen Figuren ist ein weiteres bzw. alternatives Merkmal, das sowohl zusätzlich als auch alternativ bzw. separat offenbart wird, in den Figuren lediglich schematisch angedeutet worden, aber in der Beschreibung nicht erörtert worden. Hierauf soll nunmehr unter Bezugnahme auf die Figuren 21, 21a, 21b sowie 22, 22b und 22c detaillierter eingegangen werden. Wie in den Figuren erkennbar ist, sind im vorderen Bereich 33, insbesondere im vorderen Drittel der Längserstreckung der Elektrode 30, auf der Außenfläche 2 umlaufende "Rillen" vorgesehen. Durch diese soll das Zünden des Pilotlichtbogens verbessert und/oder gesichert werden, dass der durch Hochspannungszündung erregte Pilotlichtbogen beginnt, sich dort auszubilden. Insbesondere soll verhindert werden, dass er in der Nähe der Gasführung zündet und dadurch die Gasführung beschädigt wird. Außerdem soll dadurch weniger Zündenergie benötigt werden. Die "Rillen" können daher auch als eine "Zündkante" bezeichnet werden und sind nicht nur für gasgekühlte Plasmabrenner und Elektroden, sondern auch für wasser- bzw. allgemein flüssigkeitsgekühlte Plasmabrenner und Elektroden sinnvoll.

Figur 21 zeigt das Schnittbild eines entsprechenden Plasmabrenners 10 (entspricht im Wesentlichen der Figur 2), der nicht unter den Wortlaut der Ansprüche fällt, wird aber als das Verständnis der Erfindung erleichternd angesehen, die Figuren 21a eine mögliche Gestaltung der Elektrode 30 (entspricht im Wesentlichen der Figur 2a) und die Figuren 21b eine mögliche Gestaltungen der vorderen Gasführung 70 (entspricht im Wesentlichen der Figur 2c).

In der Figur 21a sind links untereinander Beispiele für denkbare Gestaltungen der "Rillen" dargestellt. Die "Zündkante" kann eine Abfolge von Vertiefungen 33a, 33c und/oder Erhöhungen 33b umfassen. Die "Zündkante" befindet sich hier auf der Höhe des tiefsten Punktes des Hohlraumes 32 bzw. 32b in der Elektrode 30. Sie kann sich beispielsweise auch zwischen dem tiefsten Punkt des Hohlraumes 32, 32a und dem Emissionseinsatz 31 befinden. Zudem liegt sie zum oder im durch die Düse 50 und die Elektrode 30 Raum 53.

In der Figur 21b ist eine Elektrode ähnlich Figur 21a gezeigt, jedoch befindet sich die "Zündkante" weiter in Richtung des geschlossenen Endes 33 bzw. der vorderen Stirnfläche 33d im sich zum geschlossenen Ende 33 verjüngenden Bereich.

In der Figur 21c ist eine Elektrode ähnlich Figur 21b gezeigt, die "Zündkante" ebenfalls im sich zum geschlossenen Ende 33 verjüngenden Bereich, der sich jedoch konisch verjüngt.

Die Figur 21d zeigt die Gasführung, die in den Plasmabrenner 30 der Figur 21 eingebaut ist.

Figur 22 und 22a zeigen zusätzlich zu den Figur 21 und 21a Öffnungen 32c und 32d in der Elektrode 30 für die Teilgasströme 210 und 230 (entspricht im Wesentlichen der Figur 13 und 13a). Es ist ebenso möglich, dass sich nur die Öffnungen 32c oder 32d in der Elektrode 30 befinden. Wichtig ist, dass sich die Abfolge Vertiefung 33a, Erhöhung 33b und Vertiefung 33c auf der Außenfläche 37 der Elektrode 30 zwischen der Öffnung/den Öffnungen 32c und/oder 32d und der vorderen Stirnfläche 33d des vorderen Endes 33 und/oder dem Emissionseinsatz 31 befinden. Dies ist im Übrigen auch in den Figuren 5, 5a, 6, 6a, 7, 7a, 8, 8a, 9, 9a, 10,10a, 11, 11a, 12, 12a, 13, 13a, 14, 14a, 15, 15a, 16, 16a, 17, 17a, 18, 18a, 19,19a, 20 und 20a gezeigt. Die Figur 22b zeigt eine Gasführung (entspricht im Wesentlichen der Figur 13b). Die Figur 22c zeigt eine Gasführung (entspricht im Wesentlichen Figur 13c).

Der Schutzbereich der vorliegenden Erfindung wird durch die folgenden Patentansprüche bestimmt.

### Bezugszeichenliste:

- 10: Plasmabrenner
- 15: Plasmastrahl
- 20: Plasmabrennerkörper
- 21: Öffnung für Gaszuführung
- 22: Öffnung, Nut, Kanal
- 23: Gaszuführung
- 30: Elektrode
- 30a: Elektrodenwand
- 30b: Elektrodenkörper
- 31: Emissionseinsatz
- 32: Hohlraum
- 32a: vorderer Hohlraum
- 32b: hinterer Hohlraum
- 32c: Öffnung(en) zwischen Hohlraum/ Innenfläche und Außenfläche der Elektrode für Teilgasstrom 230
- 32d: Öffnung(en) zwischen Hohlraum/Innenfläche und Außenfläche der Elektrode für Teilgasstrom 210
- 32e: Körper
- 33: vorderes Ende, geschlossenes Ende
- 33a: Vertiefung
- 33b: Erhöhung
- 33c: Vertiefung
- 33d: Stirnfläche der Elektrode
- b 33a: Breite der Vertiefung 33a
- b 33b: Breite der Erhöhung 33b
- b 33c: Breite der Vertiefung 33c
- D 33b: Durchmesser der Erhöhung 33b
- S 33b: Abstand
- t 33a: Tiefe der Vertiefung 33a
- t 33c: Tiefe der Vertiefung 33c
- 34: hinteres Ende
- 34a: Gewinde
- 36: Innenfläche
- 36a: Innenfläche a
- 36b: Innenfläche b
- 37: Außenfläche der Elektrode
- 37a: erster Abschnitt der Außenfläche der Elektrode
- 37b: zweiter Abschnitt der Außenfläche der Elektrode
- 37e: dritter Abschnitt der Außenfläche der Elektrode
- 37d: Vorsprung auf Außenfläche
- 37e: spiralförmige Nut
- 38: äußere Zentrierfläche
- 39: Bereich der Elektrode
- 39a: Anschlagfläche
- 39b: Anschlagfläche
- 39c: Anschlagfläche
- 39d: äußere Zentrierfläche
- 39e: Fläche
- 39f: Außenfläche
- 39g: Nut
- 39h: Rundring
- 50: Düse
- 51: Düsenbohrung
- 52: Hohlraum der Düse
- 53: Raum zwischen Elektrode und Düse
- 54: Innenfläche der Düse
- 54a: Außenfläche der Düse 50
- 54b: Hohlraum (Nut)
- 55: Düsenhalter
- 56: Öffnungen oder Nuten im Düsenhalter
- 57: Öffnungen oder Nuten im Düsenhalter
- 60: Düsenschutzkappe
- 61: Düsenschutzkappenöffnung
- 62: Hohlraum der Düsenschutzkappe
- 63: Raum zwischen Düse und Düsenschutzkappe
- 64: Öffnungen in Düsenschutzkappe
- 65: Düsenschutzkappenhalterung
- 66: Innenfläche der Düsenschutzkappe
- 70: vordere Gasführung
- 70a: Innenfläche der Gasführung 70
- 70b: Gasführungskörper
- 70c: Wand
- 71: Öffnungen für ersten Teilgasstrom 210 / Plasmagas
- 72: Öffnungen für dritten Teilgasstrom 230 / Kühlgas Elektrode
- 73: Raum zwischen Elektrode und Gasführungen
- 73a: Ringspalt
- 74: vorderes Ende der vorderen Gasführung 70
- 75: hinteres Ende der vorderen Gasführung 70
- 76: Vorsprung
- 76a: Innenfläche des Vorsprungs 76
- 80: hintere Gasführung
- 80a: Anschlagfläche
- 80b: Anschlagfläche
- 80d: innere Zentrierfläche
- 80e: innere Dichtfläche
- 80f: Gasführungskörper
- 80g: Wand
- 81: vorderes Ende der Gasführung 80
- 82: hinteres Ende der Gasführung 80
- 83: Wand der Gasführung 80
- 83a: Innenfläche der Wand der Gasführung 80
- 83b: Außenfläche der Wand der Gasführung 80
- 84: (axiale) Öffnungen und/oder Kanäle in Gasführung 80
- 85: (radiale) Öffnungen und/oder Kanäle in Gasführung 80
- 88: Gasführung
- 88a: Gasführungskörper
- 88b: Wand der Gasführung
- 90: Kühlrohr
- 91: Innenraum des Kühlrohrs
- 92: Innenfläche des Kühlrohrs
- 93: Außenfläche des Kühlrohrs
- 94: Hohlraum zwischen Elektrode und Kühlrohr
- 94: Kühlrohrkörper
- 95: vorderes Ende des Kühlrohrs
- 96: hinteres Ende des Kühlrohrs
- 98: Kühlmittelkanal
- 100: Düsenkappe
- 100a: Innenfläche
- 100b: Sammelnut (Hohlraum)
- 100c: Öffnungen
- 101: Raum zwischen Düse und Düsenkappe
- 102: Raum zwischen Düsenkappe und Düsenschutzkappe
- 200: Gesamtgasstrom
- 205: Teilgasstrom
- 210: erster Teilgasstrom Plasmagas
- 220: zweiter Teilgasstrom Kühlgas Düse-Düsenschutzkappe
- 225: Teilgasstrom Kühlgas Düse-Düsenkappe
- 226: Teilgasstrom Kühlgas Düsenkappe-Düsenschutzkappe
- 230: dritter Teilgasstrom Kühlgas Elektrode
- 300: Plasmaschneidanlage
- 310: Stromquelle
- 320: Hochspannungszündgerät
- 330: Steuereinheit
- 335: Gasversorgung
- 340: Pilotwiderstand
- 350: Düsenschütz
- 360: Leitungen und Schläuche
- 361: Gasschlauch
- 362: Stromleitung
- 363: Stromleitung
- 370: Stromleitung
- 400: Werkstück
- A32: Fläche der Hohlraums 32
- A32a: Fläche des vorderen Hohlraum 32a
- A32b: Fläche des hinteren Hohlraums 32b
- A32c: Fläche der Öffnung 32c
- A32d: Fläche der Öffnung 32d
- D32: Durchmesser
- D32a: Durchmesser
- D32b: Durchmesser
- L: Längsachse
- L1: Längsachsen
- M: Mittelachse
- α: Winkel
- β: Winkel
- δ: Winkel
- γ: Winkel
- ε: Winkel
- a, b: Versatz zur Radialen

## Patentansprüche

1. Elektrode (30) für einen Plasmabrenner (10), wobei die Elektrode aufweist:
- einen länglichen Elektrodenkörper (30b) mit einem offenen Ende (34) und
einem geschlossenen Ende (33), die eine Längsachse (L) definieren, und
- einen Emissionseinsatz (31) im geschlossenen Ende (33), wobei sich vom offenen Ende (34) des Elektrodenkörpers ein Hohlraum (32; 32a, 32b) im Elektrodenkörper (30b) in Richtung zum geschlossenen Ende (33) erstreckt und der Hohlraum über mindestens eine Öffnung (32c, 32d) in seiner Wand (30a) oder in dem vorderen massiven Abschnitt des geschlossenen Endes 33 mit der bezüglich der Längsachse radialen Außenseite 37 des Elektrodenkörpers in Fluidverbindung steht
wobei die zur Längsachse (L) radiale Außenfläche (37) des Elektrodenkörpers (30b) - ausgehend vom geschlossenen Ende (33) - einen im Wesentlichen zylindrischen ersten Abschnitt (37a) und einen sich daran anschließenden zweiten Abschnitt (37b) aufweist, wobei der zweite Abschnitt (37) pro Längeneinheit entlang der Längsachse (L) eine größere Oberfläche als der erste Abschnitt (37a) aufweist, und
der zweite Abschnitt (37b) ein Gewinde oder mindestens eine spiralförmige Nut (37e) aufweist, wobei die zur Längsachse (L) radiale Außenfläche (37) des Elektrodenkörpers (30b) einen sich an den zweiten Abschnitt (37b) in Richtung zum offenen Ende (34) anschließenden dritten Abschnitt (37c) mit einem größten Durchmesser (D37c) aufweist, der größer als der größte Durchmesser der ersten und zweiten Abschnitte (37a, 37b) der Außenfläche (37) des Elektrodenkörpers (30b) ist.

2. Elektrode (30) nach Anspruch 1, wobei sich der Hohlraum (32; 32a, 32b) vom offenen Ende (34) über mehr als die Hälfte, bevorzugter über mehr als zwei Drittel, noch bevorzugter über mehr als fünf Sechstel, der Länge des Elektrodenkörpers (30b) zum geschlossenen Ende (33) hin erstreckt.

3. Elektrode (30) nach Anspruch 2, wobei sich die Öffnung oder mindestens eine der Öffnungen (32c, 32d) - vom geschlossenen Ende (33) gesehen - in einer Entfernung von maximal einer Hälfte, bevorzugter einem Drittel, noch bevorzugter einem Sechstel, der Länge des Elektrodenkörpers (30b) befindet/befinden.

4. Elektrode (30) nach einem der Ansprüche 1 bis 3, wobei sich die Öffnung oder mindestens eine der Öffnungen (32c, 32d) vollständig oder teilweise radial zur Längsachse (L) und/oder in einem Versatz (a; b) zur Radialen zur Längsachse (L) und/oder unter einem Winkel (α) in einem Bereich von 45° bis 90° zur Längsachse (L) in Richtung des offenen Endes (34) und/oder unter einem Winkel (β) in einem Bereich von 45° bis 90° zur Längsachse (L) in Richtung des geschlossenen Endes (33) und/oder unter einem Winkel (ε) ≠ 0 zur Radialen zur Längsachse (L) erstreckt.

5. Elektrode (30) nach einem der vorangehenden Ansprüche, wobei der Hohlraum (32; 32a; 32b) zylindrisch ist oder mindestens einen zylindrischen Abschnitt (32a; 32b) aufweist.

6. Elektrode (30) nach einem der Ansprüche 1 bis 4, wobei der Hohlraum einen ersten zylindrischen Abschnitt (32a) mit einem ersten Durchmesser (D32a) und einen zweiten zylindrischen Abschnitt (32b) mit einem zweiten Durchmesser (D32b) aufweist, wobei der erste zylindrische Abschnitt (32a) näher zum geschlossenen Ende (33) als der zweite zylindrische Abschnitt (32b) liegt und der erste Durchmesser (D32a) kleiner als der zweite Durchmesser (D32b) ist.

7. Elektrode nach einem der vorangehenden Ansprüche, wobei eine Querschnittsfläche (A32) des Hohlraumes (32) radial zur Längsachse (L) oder die größte Querschnittsfläche (A32b) des Hohlraumes (32a, 32b) radial zur Längsachse (L), bevorzugt um einen Faktor 2, noch bevorzugter um einen Faktor 4, größer als die Querschnittsfläche (A32c; A32d) der Öffnung (32c; 32d) oder größer als die Summe der Querschnittsflächen (A 32c, A 32d) der Öffnungen (32c, 32d) ist.

8. Elektrode (30) nach einem der vorangehenden Ansprüche, wobei die kleinste Querschnittsfläche (A32a) des Hohlraumes (32a) radial zur Längsachse (L), bevorzugt um einen Faktor 2, noch bevorzugter um einen Faktor 4, größer als die Querschnittsfläche (A32c; A32d) der Öffnung (32c; 32d) oder als die Summe der Querschnittsflächen (A32c, A32d) der Öffnungen (32c, 32d) ist.

9. Elektrode (30) nach einem der vorangehenden Ansprüche, wobei der Elektrodenkörper (30b) auf seiner Außenfläche (37) am offenen Ende (34) ein Außengewinde (34a) aufweist.

10. Elektrode (30) nach einem der vorangehenden Ansprüche, wobei der dritte Abschnitt (37c) Teil des offenen Endes (34) ist.

11. Elektrode (30) nach Anspruch 9 wobei der dritte Abschnitt (37c) das Außengewinde (34a) aufweist.

12. Elektrode (30) nach einem der vorhereigen Ansprüche, wobei der Elektrodenkörper (30b) in seiner Außenfläche (37) im Bereich des größten Durchmessers (D37c) eine umlaufende Nut (39g) und einen Rundring (39h) in der Nut (39g) aufweist.

13. Elektrode (30) nach einem der vorangehenden Ansprüche, wobei sich auf dem Boden des Hohlraumes (32), vorzugsweise mittig, ein, vorzugsweise säulenartiger, Vorsprung (32e) in Richtung zum offenen Ende (34) erstreckt.

14. Anordnung aus einer Elektrode (30) für einen Plasmabrenner (10), nach einem der vorangehenden Ansprüche, und einem Kühlrohr (90), wobei das Kühlrohr einen länglichen Kühlrohrkörper (94) mit einem in dem offenen Ende (34) der Elektrode (30) angeordneten vorderen Ende (95) und einem hinteren Ende (96) sowie mit einem sich durch selbigen erstreckenden Kühlmittelkanal (98) aufweist, wobei das vordere Ende (95) des Kühlrohres (90) über die Öffnung (32c, 32d) bzw. die Öffnungen (32c, 32d) in der Wand (30a) des Hohlraumes (30) im Elektrodenkörper (30b) hinaus in die Elektrode (30) hineinragt.

15. Anordnung aus einer Elektrode (30) für einen Plasmabrenner (10) nach Anspruch 6 oder einem der Ansprüche 7 bis 13, der zurückbezogen auf Anspruch 6 ist, und einem Kühlrohr (90), wobei das Kühlrohr einen länglichen Kühlrohrkörper (94) mit einem in dem offenen Ende (34) der Elektrode (30) angeordneten vorderen Ende (95) und einem hinteren Ende (96) sowie mit einem sich durch selbigen erstreckenden Kühlmittelkanal (98) aufweist, wobei das vordere Ende (95) des Kühlrohres (90) bis zum Übergang zwischen dem ersten zylindrischen Abschnitt (32a) und dem zweiten zylindrischen Abschnitt (32b) des Hohlraumes (32) in die Elektrode (30) hineinragt.

16. Anordnung nach Anspruch 14 oder 15, wobei die größte Querschnittsfläche (A91) des Kühlmittelkanals (98), bevorzugt um einen Faktor 2, noch bevorzugter um einen Faktor 4, größer ist als die Querschnittsfläche (A32c, A32d) oder größer als die Summe der Querschnittsflächen (A32c, A32d) der Öffnungen (32c, 32d) ist.

17. Plasmabrenner (10), mit einer Elektrode nach einem der Ansprüche 1 bis 13.

18. Plasmabrenner (10), mit einer Anordnung nach einem der Ansprüche 14 bis 16.

## Claims

1. Electrode (30) for a plasma torch (10), wherein the electrode has:
- an elongate electrode body (30b) with an open end (34) and with a closed end (33), which ends define a longitudinal axis (L), and
- an emission insert (31) in the closed end (33), wherein a cavity (32; 32a, 32b) in the electrode body (30b) extends from the open end (34) of the electrode body in the direction of the closed end (33), and the cavity is fluidically connected via at least one opening (32c, 32d) in the wall (30a) thereof or in the front solid portion of the closed end (33) to the radial outer side (37), in relation to the longitudinal axis, of the electrode body,
wherein the radial outer surface (37), in relation to the longitudinal axis (L), of the electrode body (30b) has - proceeding from the closed end (33) - a substantially cylindrical first portion (37a) and a second portion (37b) which adjoins said first portion, wherein the second portion (37) has, per unit of length along the longitudinal axis (L), a larger surface area than the first portion (37a), and the second portion (37b) has a thread or at least one spiral-shaped groove (37e), wherein the radial outer surface (37), in relation to the longitudinal axis (L), of the electrode body (30b) has a third portion (37c) which adjoins the second portion (37b) in the direction of the open end (34) and which has a largest diameter (D37c) which is larger than the largest diameter of the first and second portions (37a, 37b) of the outer surface (37) of the electrode body (30b).

2. Electrode (30) according to Claim 1, wherein the cavity (32; 32a, 32b) extends from the open end (34) over more than half, more preferably over more than two thirds, even more preferably over more than five sixths, of the length of the electrode body (30b) towards the closed end (33).

3. Electrode (30) according to Claim 2, wherein the opening or at least one of the openings (32c, 32d) - as viewed from the closed end (33) - is situated at a distance of at most one half, more preferably one third, even more preferably one sixth, of the length of the electrode body (30b).

4. Electrode (30) according to one of Claims 1 to 3, wherein the opening or at least one of the openings (32c, 32d) extends entirely or partially radially in relation to the longitudinal axis (L) and/or with an offset (a; b) to the radial to the longitudinal axis (L) and/or at an angle (α) in a range from 45° to 90° to the longitudinal axis (L) in the direction of the open end (34) and/or at an angle (β) in a range from 45° to 90° to the longitudinal axis (L) in the direction of the closed end (33) and/or at an angle (ε) ≠ 0 to the radial to the longitudinal axis (L).

5. Electrode (30) according to one of the preceding claims, wherein the cavity (32; 32a; 32b) is cylindrical or has at least one cylindrical portion (32a; 32b).

6. Electrode (30) according to one of Claims 1 to 4, wherein the cavity has a first cylindrical portion (32a) with a first diameter (D32a) and has a second cylindrical portion (32b) with a second diameter (D32b), wherein the first cylindrical portion (32a) is situated closer to the closed end (33) than the second cylindrical portion (32b), and the first diameter (D32a) is smaller than the second diameter (D32b).

7. Electrode according to one of the preceding claims, wherein a cross-sectional area (A32) of the cavity (32) radially in relation to the longitudinal axis (L) or the largest cross-sectional area (A32b) of the cavity (32a, 32b) radially in relation to the longitudinal axis (L) is, preferably by a factor of 2, even more preferably by a factor of 4, larger than the cross-sectional area (A32c; A32d) of the opening (32c; 32d) or larger than the sum of the cross-sectional areas (A32c, A32d) of the openings (32c, 32d).

8. Electrode (30) according to one of the preceding claims, wherein the smallest cross-sectional area (A32a) of the cavity (32a) radially in relation to the longitudinal axis (L) is, preferably by a factor of 2, even more preferably by a factor of 4, larger than the cross-sectional area (A32c; A32d) of the opening (32c; 32d) or than the sum of the cross-sectional areas (A32c, A32d) of the openings (32c, 32d) .

9. Electrode (30) according to one of the preceding claims, wherein the electrode body (30b) has an external thread (34a) on its outer surface (37) at the open end (34).

10. Electrode (30) according to one of the preceding claims, wherein the third portion (37c) is part of the open end (34).

11. Electrode (30) according to Claim 9, wherein the third portion (37c) has the external thread (34a).

12. Electrode (30) according to one of the preceding claims, wherein, in its outer surface (37) in the region of the largest diameter (D37c), the electrode body (30b) has an encircling groove (39g) and a toroidal ring (39h) in the groove (39g).

13. Electrode (30) according to one of the preceding claims, wherein, on the base of the cavity (32), preferably centrally, a preferably pillar-like projection (32e) extends in the direction of the open end (34).

14. Arrangement comprising an electrode (30) for a plasma torch (10) according to one of the preceding claims and a cooling tube (90), wherein the cooling tube has an elongate cooling-tube body (94) with a front end (95), which is arranged in the open end (34) of the electrode (30), and with a rear end (96) and also with a coolant channel (98) extending through said cooling-tube body, wherein the front end (95) of the cooling tube (90) projects into the electrode (30) beyond the opening (32c, 32d) or the openings (32c, 32d) in the wall (30a) of the cavity (30) in the electrode body (30b).

15. Arrangement comprising an electrode (30) for a plasma torch (10) according to Claim 6, or according to one of Claims 7 to 13 where referring back to Claim 6, and a cooling tube (90), wherein the cooling tube has an elongate cooling-tube body (94) with a front end (95), which is arranged in the open end (34) of the electrode (30), and with a rear end (96) and also with a coolant channel (98) extending through said cooling-tube body, wherein the front end (95) of the cooling tube (90) projects into the electrode (30) as far as the transition between the first cylindrical portion (32a) and the second cylindrical portion (32b) of the cavity (32).

16. Arrangement according to Claim 14 or 15, wherein the largest cross-sectional area (A91) of the coolant channel (98) is, preferably by a factor of 2, even more preferably by a factor of 4, larger than the cross-sectional area (A32c, A32d) or larger than the sum of the cross-sectional areas (A32c, A32d) of the openings (32c, 32d).

17. Plasma torch (10) having an electrode according to one of Claims 1 to 13.

18. Plasma torch (10) having an arrangement according to one of Claims 14 to 16.

## Revendications

1. Électrode (30) pour une torche à plasma (10), l'électrode présentant :
- un corps d'électrode allongé (30b) ayant une extrémité ouverte (34) et une extrémité fermée (33), qui définissent un axe longitudinal (L), et
- un insert d'émission (31) dans l'extrémité fermée (33), une cavité (32 ; 32a, 32b) s'étendant dans le corps d'électrode (30b) à partir de l'extrémité ouverte (34) en direction de l'extrémité fermée (33) et la cavité étant en communication fluidique par l'intermédiaire d'au moins une ouverture (32c, 32d) dans sa paroi (30a) ou dans la section massive avant de l'extrémité fermée 33 avec le côté extérieur 37 du corps d'électrode, radial par rapport à l'axe longitudinal, ,
la surface extérieure (37) du corps d'électrode (30b), radiale par rapport à l'axe longitudinal (L), présentant - en partant de l'extrémité fermée (33) - une première section (37a) essentiellement cylindrique et une deuxième section (37b) qui s'y raccorde, la deuxième section (37) présentant, par unité de longueur le long de l'axe longitudinal (L), une surface plus grande que la première section (37a), et la deuxième section (37b) présentant un filetage ou au moins une rainure en forme de spirale (37e), la surface extérieure (37) du corps d'électrode (30b), radiale par rapport à l'axe longitudinal (L), présentant une troisième section (37c) se raccordant à la deuxième section (37b) en direction de l'extrémité ouverte (34), ayant un diamètre maximal (D37c) qui est supérieur au diamètre maximal des première et deuxième sections (37a, 37b) de la surface extérieure (37) du corps d'électrode (30b).

2. Électrode (30) selon la revendication 1, dans laquelle la cavité (32 ; 32a, 32b) s'étend depuis l'extrémité ouverte (34) jusqu'à l'extrémité fermée (33) sur plus de la moitié, de préférence sur plus des deux tiers, de manière encore davantage préférée sur plus des cinq sixièmes, de la longueur du corps d'électrode (30b).

3. Électrode (30) selon la revendication 2, dans laquelle l'ouverture ou au moins l'une des ouvertures (32c, 32d) - vue depuis l'extrémité fermée (33) - se trouve à une distance maximale d'une moitié, de préférence d'un tiers, de manière encore davantage préférée d'un sixième, de la longueur du corps d'électrode (30b).

4. Électrode (30) selon l'une quelconque des revendications 1 à 3, dans laquelle l'ouverture ou au moins l'une des ouvertures (32c, 32d) s'étend totalement ou partiellement radialement par rapport à l'axe longitudinal (L) et/ou avec un décalage (a ; b) par rapport à la radiale de l'axe longitudinal (L) et/ou selon un angle (α) dans une plage de 45° à 90° par rapport à l'axe longitudinal (L) en direction de l'extrémité ouverte (34) et/ou selon un angle (β) dans une plage de 45° à 90° par rapport à l'axe longitudinal (L) en direction de l'extrémité fermée (33) et/ou selon un angle (ε) ≠ 0 par rapport à la radiale de l'axe longitudinal (L) .

5. Électrode (30) selon l'une quelconque des revendications précédentes, dans laquelle la cavité (32 ; 32a ; 32b) est cylindrique ou présente au moins une section cylindrique (32a ; 32b).

6. Électrode (30) selon l'une quelconque des revendications 1 à 4, dans laquelle la cavité présente une première section cylindrique (32a) ayant un premier diamètre (D32a) et une deuxième section cylindrique (32b) ayant un deuxième diamètre (D32b), la première section cylindrique (32a) étant plus proche de l'extrémité fermée (33) que la deuxième section cylindrique (32b) et le premier diamètre (D32a) étant inférieur au deuxième diamètre (D32b).

7. Électrode selon l'une quelconque des revendications précédentes, dans laquelle une surface de section transversale (A32) de la cavité (32) radialement par rapport à l'axe longitudinal (L) ou la plus grande surface de section transversale (A32b) de la cavité (32a, 32b) radialement par rapport à l'axe longitudinal (L) est supérieure, de préférence d'un facteur de 2, de manière encore davantage préférée d'un facteur de 4, à la surface de section transversale (A32c ; A32d) de l'ouverture (32c ; 32d) ou supérieure à la somme des surfaces de section transversale (A32c, A32d) des ouvertures (32c, 32d) .

8. Électrode (30) selon l'une quelconque des revendications précédentes, dans laquelle la plus petite surface de section transversale (A32a) de la cavité (32a) radialement par rapport à l'axe longitudinal (L) est supérieure de préférence d'un facteur de 2, de manière encore davantage préférée d'un facteur de 4, à la surface de section transversale (A32c ; A32d) de l'ouverture (32c ; 32d) ou à la somme des surfaces de section transversale (A32c, A32d) des ouvertures (32c, 32d).

9. Électrode (30) selon l'une quelconque des revendications précédentes, dans laquelle le corps d'électrode (30b) présente un filetage extérieur (34a) sur sa surface extérieure (37) à l'extrémité ouverte (34) .

10. Électrode (30) selon l'une quelconque des revendications précédentes, dans laquelle la troisième section (37c) fait partie de l'extrémité ouverte (34).

11. Électrode (30) selon la revendication 9, dans laquelle la troisième section (37c) présente le filetage extérieur (34a).

12. Électrode (30) selon l'une quelconque des revendications précédentes, dans laquelle le corps d'électrode (30b) présente une rainure circonférentielle (39g) dans sa surface extérieure (37) dans la zone du plus grand diamètre (D37c) et un anneau circulaire (39h) dans la rainure (39g).

13. Électrode (30) selon l'une quelconque des revendications précédentes, dans laquelle une saillie (32e), de préférence en forme de colonne, s'étend sur le fond de la cavité (32), de préférence au centre, en direction de l'extrémité ouverte (34).

14. Agencement d'une électrode (30) pour une torche à plasma (10) selon l'une quelconque des revendications précédentes, et d'un tube de refroidissement (90), le tube de refroidissement présentant un corps de tube de refroidissement allongé (94) avec une extrémité avant (95) agencée dans l'extrémité ouverte (34) de l'électrode (30) et une extrémité arrière (96) ainsi qu'un canal de réfrigérant (98) s'étendant à travers celui-ci, l'extrémité avant (95) du tube de refroidissement (90) pénétrant dans l'électrode (30) par l'intermédiaire de l'ouverture (32c, 32d) ou des ouvertures (32c, 32d) dans la paroi (30a) de la cavité (30) dans le corps d'électrode (30b) .

15. Agencement d'une électrode (30) pour une torche à plasma (10) selon la revendication 6 ou l'une quelconque des revendications 7 à 13, qui se rapporte à la revendication 6, et d'un tube de refroidissement (90), le tube de refroidissement présentant un corps de tube de refroidissement allongé (94) ayant une extrémité avant (95) agencée dans l'extrémité ouverte (34) de l'électrode (30) et une extrémité arrière (96), et ayant un canal de réfrigérant (98) s'étendant à travers celui-ci, l'extrémité avant (95) du tube de refroidissement (90) pénétrant dans l'électrode (30) jusqu'à la transition entre la première section cylindrique (32a) et la deuxième section cylindrique (32b) de la cavité (32).

16. Agencement selon la revendication 14 ou 15, dans lequel la plus grande surface de section transversale (A91) du canal de réfrigérant (98) est supérieure, de préférence d'un facteur de 2, de manière encore davantage préférée d'un facteur de 4, à la surface de section transversale (A32c, A32d) ou est supérieure à la somme des surfaces de section transversale (A32c, A32d) des ouvertures (32c, 32d).

17. Torche à plasma (10) avec une électrode selon l'une quelconque des revendications 1 à 13.

18. Torche à plasma (10) avec un agencement selon l'une quelconque des revendications 14 à 16.
